(19) Europäisches Patentamt
European Patent Office
Office européen des brevets

(11) EP 2 798 457 B1

(12) **EUROPEAN PATENT SPECIFICATION**

(45) Date of publication and mention of the grant of the patent:
**06.03.2019 Bulletin 2019/10**

(21) Application number: **11878520.3**

(22) Date of filing: **29.12.2011**

(51) Int Cl.:
***G06F 9/06*** *(2006.01)* ***G06F 9/30*** *(2018.01)*
***G06F 13/14*** *(2006.01)* ***G06F 7/48*** *(2006.01)*

(86) International application number:
**PCT/US2011/067711**

(87) International publication number:
**WO 2013/101018 (04.07.2013 Gazette 2013/27)**

(54) **DOT PRODUCT PROCESSORS, METHODS, SYSTEMS, AND INSTRUCTIONS**

SKALARPRODUKTPROZESSOREN SOWIE VERFAHREN, SYSTEME UND ANWEISUNGEN DAFÜR

PROCESSEURS, PROCÉDÉS, SYSTÈMES ET INSTRUCTIONS DE PRODUIT SCALAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.11.2014 Bulletin 2014/45**

(73) Proprietor: **Intel Corporation**
**Santa Clara, CA 95054 (US)**

(72) Inventors:
- **KRISHNAN, Karthikeyan**
**Federal Way**
**Washington 98001 (US)**
- **OULD-AHMED-VALL, Elmoustapha**
**Chandler AZ 85226 (US)**
- **CHEREPANOV, Victor**
**Nizhny Novgorod 603163 (RU)**

(74) Representative: **HGF Limited**
**Fountain Precinct**
**Balm Green**
**Sheffield S1 2JA (GB)**

(56) References cited:
**KR-A- 19980 013 688**
**US-A1- 2008 071 851**
**US-A1- 2008 071 851**
**US-A1- 2009 077 345**
**US-A1- 2009 077 345**
**US-B1- 6 675 286**
**US-B1- 6 675 286**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 798 457 B1

## Description

### BACKGROUND

#### Field

Embodiments relate to processors. In particular, embodiments relate to processors operable to perform dot product operations responsive to dot product instructions.

#### Background Information

Many processors have Single Instruction, Multiple Data (SIMD) architectures. In SIMD architectures, a packed data instruction, vector instruction, or SIMD instruction may operate on multiple data elements or multiple pairs of data elements simultaneously or in parallel. The processor may have parallel execution hardware responsive to the packed data instruction to perform the multiple operations simultaneously or in parallel.
Multiple data elements may be packed within one register or memory location as packed data or vector data. In packed data, the bits of the register or other storage location may be logically divided into a sequence of data elements. For example, a 256-bit wide packed data register may have four 64-bit wide data elements, eight 32- bit data elements, sixteen 16-bit data elements, etc. Each of the data elements may represent a separate individual piece of data (e.g., a pixel, a color component of a pixel, a component of a complex number, etc.), which may be operated upon separately and/or independently of the others.
US 2009/0077345 describes SIMD dot product operations with overlapped operands.
US 6,675,286 relates to a multimedia instruction set for wide data paths.
The invention is defined by the scope of the claims. Any references to embodiments or example embodiments which do not fall under the scope of the claims are to regarded as background information to aid in understanding the invention as claimed.

### BRIEF DESCRIPTION OF THE SEVERAL VIEWS OF THE DRAWINGS

The invention may best be understood by referring to the following description and accompanying drawings that are used to illustrate embodiments. In the drawings:

Figure 1 is a block diagram of an embodiment of a processor having an instruction set architecture that includes one or more dot product instructions.
Figure 2 is a block diagram of an embodiment of an instruction processing apparatus having an execution unit that is operable to execute instructions including one or more embodiments of dot product instructions.
Figure 3 is a block flow diagram of an embodiment of a method of processing an embodiment of a dot product instruction.
Figure 4 is a block diagram illustrating a first embodiment of a dot product operation that may be performed in response to a first embodiment of a dot product instruction.
**Figure 5** is a block diagram illustrating a second embodiment of a dot product operation that may be performed in response to a second embodiment of a dot product instruction.
**Figure 6** is a block diagram illustrating a third embodiment of a dot product operation that may be performed in response to a third embodiment of a dot product instruction.
**Figure 7** is a block diagram illustrating a fourth embodiment of a dot product operation that may be performed in response to a fourth embodiment of a dot product instruction.
**Figure 8** is a block diagram of an embodiment of an instruction format for a dot product instruction.
**Figure 9** is a block flow diagram of an embodiment of a method of processing an embodiment of a dot product instruction having a size specifier.
**Figure 10** is a block diagram of an embodiment of an instruction format for a dot product instruction having an optional mask specifier and an optional type of masking operation specifier.
**Figure 11** is a block diagram of an embodiment of a suitable set of packed data operation mask registers.
**Figure 12** is a block diagram of an embodiment of a suitable set of packed data registers.
**Figure 13** is a block diagram of an article of manufacture including a machine-readable storage medium storing one or more embodiments of dot product instructions.
**Figure 14A-B** illustrate a detailed example of application of an embodiment of a dot product instruction to vertical edge deblocking filtering.
**Figure 15A** is a block diagram illustrating a generic vector friendly instruction format and class A instruction templates thereof according to embodiments of the invention

**Figure 15B** is a block diagram illustrating the generic vector friendly instruction format and class B instruction templates thereof according to embodiments of the invention.

**Figure 16** is a block diagram illustrating an exemplary specific vector friendly instruction format according to embodiments of the invention.

**Figure 16B** is a block diagram illustrating the fields of the specific vector friendly instruction format that make up the full opcode field according to one embodiment of the invention.

**Figure 16C** is a block diagram illustrating the fields of the specific vector friendly instruction format that make up the register index field according to one embodiment of the invention.

**Figure 16D** is a block diagram illustrating the fields of the specific vector friendly instruction format that make up the augmentation operation field according to one embodiment of the invention.

**Figure 17** is a block diagram of a register architecture according to one embodiment of the invention.

**Figure 18A** is a block diagram illustrating both an exemplary in-order pipeline and an exemplary register renaming, out-of-order issue/execution pipeline according to embodiments of the invention.

**Figure 18B** shows processor core including a front end unit coupled to an execution engine unit and both are coupled to a memory unit.

**Figure 19A** is a block diagram of a single processor core, along with its connection to the on-die interconnect network and with its local subset of the Level 2 (L2) cache, according to embodiments of the invention.

**Figure 19B** is an expanded view of part of the processor core in **Figure 19A** according to embodiments of the invention.

**Figure 20** is a block diagram of a processor that may have more than one core, may have an integrated memory controller, and may have integrated graphics according to embodiments of the invention.

**Figure 21** shown is a block diagram of a system in accordance with one embodiment of the present invention.

**Figure 22** shown is a block diagram of a first more specific exemplary system in accordance with an embodiment of the present invention.

**Figure 23** shown is a block diagram of a second more specific exemplary system 2300 in accordance with an embodiment of the present invention.

**Figure 24** shown is a block diagram of a SoC in accordance with an embodiment of the present invention.

**Figure 25** is a block diagram contrasting the use of a software instruction converter to convert binary instructions in a source instruction set to binary instructions in a target instruction set according to embodiments of the invention.

DETAILED DESCRIPTION

Disclosed herein are dot product instructions, processors to execute the dot product instructions, methods performed by the processors when processing or executing the dot product instructions, and systems incorporating one or more processors to process or execute the dot product instructions. Any of the various processors and systems disclosed herein are suitable. In the following description, numerous specific details are set forth (e.g., specific processor configurations, sequences of operations, instruction formats, data formats, microarchitectural details, particular examples of dot product instructions, etc.). However, embodiments may be practiced without these specific details. In other instances, well-known circuits, structures and techniques have not been shown in detail to avoid obscuring the understanding of the description.

Dot products are widely used in various different applications. For example, dot products are commonly used in signal processing, filtering, matrix operations, pixel processing, audio processing, computing correlation sequences, filtering pixels (e.g., in deblocking filtering), when interpolating pixel values to remove visual artifacts, when computing the products of matrixes, and the like. Due to the widespread use of dot products, efficient ways of calculating dot products offer advantages.

A dot product operation represents an algebraic operation on two vectors or sequences of numbers in which corresponding entries are multiplied together and all of the products are added together to produce a single number. The dot product of two vectors a = [*a1, a2,* ..., *an*] and b = [*b1, b2,* ... , *bn*] is expressed by the equation:

$$\mathbf{a} \cdot \mathbf{b} = \sum_{i=1}^{n} a_i b_i = a_1 b_1 + a_2 b_2 + \cdots + a_n b_n \qquad \text{Equation 1}$$

In this equation, the symbol ∑ designates a summation operation over all pairs of vector elements from 1 to n.

**Figure 1** is a block diagram of an example embodiment of a processor 100 having an instruction set architecture 101 including one or more dot product instructions 103. The processor may be any of various complex instruction set computing (CISC) processors, various reduced instruction set computing (RISC) processors, various very long instruction word (VLIW) processors, various hybrids thereof, or other types of processors entirely. In some embodiments, the processor may be a general-purpose processor (e.g., a general-purpose microprocessor of the type used in desktop, laptop, and like computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs), and controllers (e.g., microcontrollers), to name just a few examples.

The processor has the instruction set architecture (ISA) 101. The ISA represents a part of the architecture of the processor related to programming. The ISA commonly includes the native instructions, architectural registers, data types, addressing modes, memory architecture, interrupt and exception handling, and external input and output (I/O) of the processor. The ISA is distinguished from the microarchitecture, which generally represents the particular processor design techniques selected to implement the ISA. Processors with different microarchitectures may share a common ISA.

The ISA includes architecturally-visible registers (e.g., an architectural register file) 104. The illustrated architectural registers include packed data registers 105. Each of the packed data registers is operable to store packed data, vector data, or SIMD data. In some embodiments, the architectural-visible registers may optionally include mask registers 106. The architecturally-visible registers may represent on-processor (e.g., on-die) storage locations. The architectural registers may also be referred to herein simply as registers. Unless otherwise specified or apparent, the phrases architectural register, register file, and register are used herein to refer to registers that are visible to the software and/or programmer (e.g., software-visible) and/or the registers that are specified by general-purpose macroinstructions to identify operands. These registers are contrasted to other non-architectural or non-architecturally visible registers in a given microarchitecture (e.g., temporary registers used by instructions, reorder buffers, retirement registers, etc.).

The illustrated ISA includes an instruction set 102 that is supported by the processor. The instructions of the instruction set represent macroinstructions (e.g., instructions provided to the processor for execution), as opposed to microinstructions or micro-ops (e.g., those which result from a decoder of the processor decoding macroinstructions). The illustrated instruction set includes one or more dot product instructions 103. The dot product instruction(s) may be any of the various different embodiments of dot product instructions disclosed elsewhere herein. Naturally, the instruction set typically includes other instructions (not shown).

The processor also includes execution logic 107. The execution logic is operable to execute or process the instructions of the instruction set (e.g., the one or more dot product instructions).

**Figure 2** is a block diagram of an example embodiment of an instruction processing apparatus 200 having an execution unit 207 that is operable to execute instructions including an example embodiment of a dot product instruction 203. In some embodiments, the instruction processing apparatus may be a processor and/or may be included in a processor. For example, in some embodiments, the instruction processing apparatus may be, or may be included in, the processor 100 of **Figure 1,** or one similar. Alternatively, the instruction processing apparatus may be included in a different processor, or electronic system.

The instruction processing apparatus 200 may receive the dot product instruction 203. For example, the instruction may be received from an instruction fetch unit, an instruction queue, or a memory. The dot product instruction may represent a machine instruction, macroinstruction, or control signal that is recognized by the instruction processing apparatus and controls the apparatus to perform a particular operation (e.g., a dot product operation). The dot product instruction may explicitly specify (e.g., through bits or one or more fields) or otherwise indicate (e.g., implicitly indicate) a first source packed data 210 including at least four data elements, may specify or otherwise indicate a second source packed data 211 including at least eight data elements, and may specify or otherwise indicate a destination (e.g., a destination storage location 213) where a result packed data is to be stored.

The illustrated instruction processing apparatus includes an instruction decode unit or decoder 207. The decoder may receive and decode higher-level machine instructions or macroinstructions, and output one or more lower-level micro-operations, micro-code entry points, microinstructions, or other lower-level instructions or control signals that reflect and/or are derived from the original higher-level instruction. The one or more lower-level instructions or control signals may implement the operation of the higher-level instruction through one or more lower-level (e.g., circuit-level or hardware-level) operations. The decoder may be implemented using various different mechanisms including, but not limited to, microcode read only memories (ROMs), look-up tables, hardware implementations, programmable logic arrays (PLAs), and other mechanisms used to implement decoders known in the art.

In other embodiments, instead of having the decoder 207, an instruction emulator, translator, morpher, interpreter, or other instruction conversion logic may be used. Various different types of instruction conversion logic are known in the arts and may be implemented in software, hardware, firmware, or a combination thereof. The instruction conversion logic may receive the instruction, emulate, translate, morph, interpret, or otherwise convert the received instruction into one or more corresponding derived instructions or control signals. In still other embodiments, both instruction conversion logic and a decoder may be used. For example, the apparatus may have instruction conversion logic to convert the received instruction into one or more intermediate instructions, and a decoder to decode the one or more intermediate instructions into one or more lower-level instructions or control signals executable by native hardware of the instruction processing apparatus. Some or all of the instruction conversion logic may be located off-die from the rest of the instruction processing apparatus, such as on a separate die or in an off-die memory.

The instruction processing apparatus also includes a set of packed data registers 205. As shown, the set of packed data registers may include a first packed data register 205-1, a second packed data register 205-2, and a third packed data register 205-3. The packed data registers may each represent an on-processor (e.g., on-die) processor storage location. The packed data registers may represent architectural registers. Each of the packed data registers may be operable to store packed data or vector data. The packed data registers may be implemented in different ways in different microarchitectures using well-known techniques, and are not limited to any particular type of circuit. Various different types of registers are suitable as long as they are capable of storing and providing data as described herein. Examples of suitable types of registers include, but are not limited to, dedicated physical registers, dynamically allocated physical registers using register renaming, and combinations thereof.

Referring again to **Figure 2,** the execution unit 207 is coupled with the packed data registers 205. The execution unit is also coupled with the decoder 208. The execution unit may receive from the decoder one or more micro-operations, micro-code entry points, microinstructions, other instructions, or other control signals, which reflect, or are derived from, the dot product instruction.

The execution unit 207 is operable, in response to and/or as a result of the dot product instruction 203 to store a result packed data in the destination storage location 213. As previously mentioned, the dot product instruction may specify or otherwise indicate the first source packed data 210 including the at least four data elements, specify or otherwise indicate the second source packed data 211 including the at least eight data elements, and specify or otherwise indicate the destination storage location 213. The result packed data may include at least two data elements. Each of the at least two data elements may include a dot product result. In some embodiments, each of the dot product results may include a sum of products of the at least four data elements of the first source packed data with corresponding data elements in a different subset of at least four data elements of the second source packed data. As shown, in some embodiments, the first source packed data 210 may be stored in the first packed data register 205-1, the second source packed data 211 may be stored in the first packed data register 205-2, and the third source packed data 212 may be stored in the first packed data register 205-3. Alternatively, memory locations or other storage locations suitable for packed data may be used.

By way of example, the execution unit may include an arithmetic logic unit, an arithmetic unit, a multiply and add unit, an execution unit including multiplication logic and addition logic, or the like. The execution unit and/or the apparatus may include specific or particular logic (e.g., circuitry or other hardware potentially combined with software and/or firmware) operable to execute and/or process the dot product instruction, and store the result including the multiple dot products in response to the instruction (e.g., in response to one or more microinstructions or other control signals derived from the instruction). For example, as shown, the execution unit may include dot product calculation logic 209 that is operable to calculate dot products. In some embodiments, the dot product calculation logic may include one or more multipliers (e.g., multiplier circuits) and one or more adders (e.g., adder circuits).

In some embodiments, the first source packed data may include at least four data elements $A_0$, $A_1$, $A_2$, and $A_3$ and the second source packed data may include at least eight data elements $B_0$, $B_1$, $B_2$, $B_3$, $C_0$, $C_1$, $C_2$, and $C_3$. Of these, at least four data elements B0, B1, B2, B3 may represent a first subset of at least four data elements of the second source packed data, and at least four data elements $C_0$, $C_1$, $C_2$, and $C_3$ may represent a second, different subset of at least four data elements of the second source packed data. The result packed data may include at least a first data element that includes $A_0*B_0 + A_1*B_1 + A_2*B_2 + A_3*B_3$ and a second data element that includes $A_0*C_0 + A_1*C_1 + A_2*C_2 + A_3*C_3$.

In some embodiments, the result packed data may include at least four data elements that each represents a dot product result. Each of the dot product results may be based on a different one of at least four subsets of the at least eight data elements of the second source packed data. In some embodiments, the second source packed data may further include at least eight additional data elements $D_0$, $D_1$, $D_2$, $D_3$, $E_0$, $E_1$, $E_2$, and $E_3$. Of these, at least four data elements $D_0$, $D_1$, $D_2$, and $D_3$ may represent a third, still different subset of at least four data elements of the second source packed data, and at least four data elements $E_0$, $E_1$, $E_2$, and $E_3$ may represent a fourth, still different subset of at least four data elements of the second source packed data. The result packed data may further include at least a third data element that includes $A_0*D_0 + A_1*D_1 + A_2*D_2 + A_3*D_3$ and a fourth data element that includes $A_0*E_0 + A_1*E_1 + A_2*E_2 + A_3*E_3$.

In some embodiments, the dot product instruction may specify a size of the data elements of the second source packed data. The dot product instruction and/or the execution unit may allow the size of the data elements of the second source packed data to be any one of a plurality of different sizes. In some embodiments, the dot product instruction may have an immediate to explicitly specify the size of the data elements of the second source packed data, although this is not required. Alternatively, the size of the data elements of the second source packed data may be specified in a register or other storage location indicated by the instruction. As yet another option, the instruction (e.g., an opcode of the instruction) may implicitly indicate a size of the data elements of the second source packed data. In some embodiments, there may optionally be multiple instructions with multiple different sizes. In some embodiments, the first source packed data may include data elements having a size of at least eight bits, and the second source packed data may include data elements having a size of only two bits or only four bits.

To avoid obscuring the description, a relatively simple instruction processing apparatus 200 has been shown and described. In other embodiments, the instruction processing apparatus may optionally include other well-known components, such as, for example, an instruction fetch unit, an instruction scheduling unit, a branch prediction unit, instruction and data caches, instruction and data translation lookaside buffers, prefetch buffers, microinstruction queues, microinstruction sequencers, bus interface units, second or higher level caches, a retirement unit, a register renaming unit, other components included in processors, and various combinations thereof. Embodiments may have multiple cores, logical processors, or execution engines. An execution unit operable to execute an embodiment of an instruction disclosed herein may be included in at least one, at least two, most, or all of the cores, logical processors, or execution engines. There are literally numerous different combinations and configurations of components in processors, and embodiments are not limited to any particular combination or configuration.

**Figure 3** is a block flow diagram of an example embodiment of a method 315 of processing an example embodiment of a dot product instruction. In various embodiments, the method may be performed by a general-purpose processor, a special-purpose processor (e.g., a graphics processor or a digital signal processor), or another type of digital logic device or instruction processing apparatus. In some embodiments, the method 315 may be performed by the processor 100 of **Figure 1,** or the instruction processing apparatus 200 of **Figure 2,** or one similar. Alternatively, the method 315 may be performed by different embodiments of processors or instruction processing apparatus. Moreover, the processor 100 of **Figure 1,** and the instruction processing apparatus 200 of **Figure 2,** may perform operations and methods the same as, similar to, or different than those of the method 315 of **Figure 3.**

The method includes receiving the dot product instruction, at block 316. In various aspects, the instruction may be received at a processor, an instruction processing apparatus, or a portion thereof (e.g., a decoder, instruction converter, etc.). In various aspects, the instruction may be received from an off-processor source (e.g., from a main memory, a disc, or a bus or interconnect), or from an on-processor source (e.g., from an instruction cache). The dot product instruction explicitly specifies (e.g., through bits or one or more fields) or otherwise indicates (e.g., implicitly indicates) a first source packed data including at least four data elements, explicitly specifies or otherwise indicates a second source packed data including at least eight data elements, and explicitly specifies or otherwise indicates a destination storage location.

Then, a result packed data is stored in the destination storage location in response to, as a result of, and/or as specified by the dot product instruction, at block 317. The result packed data includes at least two data elements that each include a dot product result. Each of the dot product results includes a sum of products of the at least four data elements of the first source packed data with corresponding data elements in a different subset of at least four data elements of the second source packed data. In some embodiments, the result packed data may have other attributes of the result packed data as described elsewhere herein. By way of example, an execution unit, instruction processing apparatus, or processor may perform the operation specified by the instruction and store the result.

The illustrated method includes operations that are visible from a software perspective and/or from outside a processor. In other embodiments, the method may optionally include one or more operations occurring internally within the processor and/or one or more microarchitectural operations. By way of example, the instructions may be fetched, and then decoded, translated, emulated, or otherwise converted, into one or more other instructions or control signals. The source packed data may be accessed and/or received. An execution unit may be enabled to perform the operation of the instruction, and may perform the operation (e.g., one or more microarchitectural operations to implement the operations of the instructions may be performed).

**Figure 4** is a block diagram illustrating a first example embodiment of a dot product operation 415 performed in response to a first example embodiment of a dot product instruction. The dot product instruction specifies or otherwise indicates a first source packed data 410 having at least four data elements $A_0$-$A_N$, where N is at least four. The dot product instruction specifies or otherwise indicates a second source packed data 411 having at least eight data elements $B_0$-$B_N$ and $C_0$-$C_N$. As shown, the data elements $B_0$-$B_N$ may be contiguous (e.g., within a lowest-order half of the second source packed data), and the data elements $C_0$-$C_N$ may be contiguous (e.g., within a highest-order half of the second source packed data). The at least four data elements $B_0$-$B_N$ represent a first set of at least four data elements in the second source packed data, and the data elements $C_0$-$C_N$ represent a second, different set of at least four data elements in the second source packed data. In some embodiments, the second source packed data may include additional different non-overlapping sets of at least four data elements (not shown). In some embodiments, each of the different non-overlapping sets of at least four data elements may include a same number of data elements as the number of data elements in the first source packed data.

The dot product instruction also specifies or otherwise indicates a destination (e.g., a destination storage location). A result packed data 412 is generated and stored in the destination in response to the dot product instruction. The result packed data includes at least two data elements $R_0$-$R_1$. Each of the at least two data elements includes a dot product result. Each of the dot product results may include a sum of products of the at least four data elements $A_0$-$A_N$ of the first source packed data with corresponding data elements in a different subset of at least four data elements of the second source packed data. As shown, in some embodiments, a first lowest-order data element $R_0$ may include a dot product result equal to $A_0*B_0 + A_1*B_1 + A_2*B_2 + ... + A_N*B_N$, or saturate. Moreover, a second data element R1 may include a dot product result equal to $A_0*C_0 + A_1*C_1 + A_2*C_2 + ... + A_N*C_N$, or saturate. The 'or saturate' indicates that, in some embodiments, a saturation value may be stored if the value of the dot product result exceeds a maximum value that may be stored in the available number of bits used to store the result data element. In the illustrated embodiment, the correspondence between the data elements forming the corresponding pairs that are multiplied refers to the relative order of the data elements within the sets (i.e., $A_0$ corresponds to $B_0$ in one set and $C_0$ in another set, $A_1$ corresponds to $B_1$ in one set and $C_1$ in another set, $A_2$ corresponds to $B_2$ in one set and $C_2$ in another set, $A_N$ corresponds to $B_N$ in one set and $C_N$ in another set). If $A_0$-$A_N$ includes more than four data elements, then $B_0$-$B_N$ and $C_0$-$C_N$ may each include more than four data elements, and each dot product result may sum products of the additional pairs of corresponding data elements.

**Figure 5** is a block diagram illustrating a second example embodiment of a dot product operation 515 performed in response to a second example embodiment of a dot product instruction. The dot product instruction specifies or otherwise indicates a first source packed data 510 having at least four data elements $A_0$-$A_N$, where N is at least four. The dot product instruction also specifies or otherwise indicates a second source packed data 511 having at least sixteen data elements $B_0$-$B_N$, $C_0$-$C_N$, $D_0$-$D_N$, and $E_0$-$E_N$. As shown, the data elements $B_0$-$B_N$ may be contiguous (e.g., within a lowest-order quarter of the second source packed data), the data elements $C_0$-$C_N$ may be contiguous (e.g., within a next-lowest-order quarter of the second source packed data), the data elements $D_0$-$D_N$ may be contiguous (e.g., within a next-highest-order quarter of the second source packed data), and the data elements $E_0$-$E_N$ may be contiguous (e.g., within a highest-order quarter of the second source packed data). Each of the sets of at least four data elements $B_0$-$B_N$, $C_0$-$C_N$, $D_0$-$D_N$, and $E_0$-$E_N$ represents a different non-overlapping set of at least four data elements in the second source packed data. In some embodiments, the second source packed data may include additional different non-overlapping sets of at least four data elements (not shown). In some embodiments, each of the different non-overlapping sets of at least four data elements may include a same number of data elements as the number of data elements in the first source packed data.

The dot product instruction also specifies or otherwise indicates a destination (e.g., a destination storage location). A result packed data 512 is generated and stored in the destination in response to the dot product instruction. In the illustration, the result packed data is broken into a first part 512A and a second part 512B. The result packed data includes at least four data elements $R_0$-$R_3$. Each of the at least four data elements includes a dot product result. Each of the dot product results may include a sum of products of the at least four data elements $A_0$-$A_N$ of the first source packed data with corresponding data elements in a different subset of at least four data elements of the second source packed data. As shown, in some embodiments, a first lowest-order data element $R_0$ may include a dot product result equal to $A_0*B_0 + A_1*B_1 + A_2*B_2 + ... + A_N*B_N$, or saturate. A second data element $R_1$ may include a dot product result equal to $A_0*C_0 + A_1*C_1 + A_2*C_2 + ... + A_N*C_N$, or saturate. A third data element $R_2$ may include a dot product result equal to $A_0*D_0 + A_1*D_1 + A_2*D_2 + ... + A_N*D_N$, or saturate. A fourth data element $R_3$ may include a dot product result equal to $A_0*E_0 + A_1*E_1 + A_2*E_2 + ... + A_N*E_N$, or saturate. The 'or saturate' indicates that, in some embodiments, a saturation value may be stored if the value of the dot product result exceeds a maximum value that may be stored in the available number of bits used to store the result data element. If $A_0$-$A_N$ includes more than four data elements, each of $B_0$-$B_N$, $C_0$-$C_N$, $D_0$-$D_N$, and $E_0$-$E_N$ may include more than four data elements, and each of the at least four dot product results may sum products of the additional pairs of corresponding data elements.

**Figure 6** is a block diagram illustrating a third example embodiment of a dot product operation 615 performed in response to a third example embodiment of a dot product instruction. The dot product instruction specifies or otherwise indicates a first 128-bit source packed data 610 having sixteen 8-bit byte data elements $A_0$-$A_{15}$. As shown, $A_0$ is in bits [7:0], $A_1$ is in bits [15:8], $A_2$ is in bits [23:16], $A_3$ is in bits [31:24], $A_4$ is in bits [39:32], $A_5$ is in bits [47:40], $A_6$ is in bits [55:48], $A_7$ is in bits [63:56], $A_8$ is in bits [71:64], $A_9$ is in bits [79:72], $A_{10}$ is in bits [87:80], $A_{11}$ is in bits [95:88], $A_{12}$ is in bits [103:96], $A_{13}$ is in bits [111:104], $A_{14}$ is in bits [119:112], and $A_{15}$ is in bits [127:120].

The dot product instruction also specifies or otherwise indicates a second 128-bit source packed data 611 having thirty-two 4-bit wide data elements $B_0$-$B_{15}$ and $C_0$-$C_{15}$. As shown, the sixteen data elements $B_0$-$B_{15}$ may be contiguous within a lowest-order half of the second source packed data (i.e., within bits [63:0]), and the sixteen data elements $C_0$-$C_{15}$ may be contiguous within a highest-order half of the second source packed data (i.e., within bits [127:64]). B0 is in bits [3:0]; B1 is in bits [7:4], etc. C0 is in bits [67:64], C1 is in bits [71:68], etc. The sixteen data elements $B_0$-$B_{15}$ represent a first set of sixteen data elements in the second source packed data, and the data elements $C_0$-$C_{15}$ represent a second, different set of sixteen data elements in the second source packed data. In some embodiments, the first and second source packed data have the same width (e.g., are stored in packed data registers of the same size).

The dot product instruction also specifies or otherwise indicates a destination (e.g., a destination storage location). A result packed data 612 is generated and stored in the destination in response to the dot product instruction.

The result packed data includes two 16-bit data elements $R_0$-$R_1$. Each of the result data elements includes twice as many bits as each of the data elements of the first source packed data, and four times as many bits as the data elements of the second source packed data. Each of the two data elements includes a dot product result that is based on a sum of at least sixteen products. Each of the dot product results may include a sum of products of the sixteen data elements $A_0$-$A_{15}$ of the first source packed data with corresponding data elements in a different subset of sixteen data elements of the second source packed data. As shown, in some embodiments, a first lowest-order data element $R_0$ in bits [15:0] may include a dot product result equal to $A_0*B_0 + A_1*B_1 + A_2*B_2 + A_3*B_3 + A_4*B_4 + A_5*B_5 + A_6*B_6 + A_7*B_7 + A_8*B_8 + A_9*B_9 + A_{10}*B_{10} + A_{11}*B_{11} + A_{12}*B_{12} + A_{13}*B_{13} + A_{14}*B_{14} + A_{15}*B_{15}$, or saturate. Moreover, a second higher-order data element R1 may include a dot product result equal to $A_0*C_0 + A_1*C_1 + A_2*C_2 + A_3*C_3 + A_4*C_4 + A_5*C_5 + A_6*C_6 + A_7*C_7 + A_8*C_8 + A_9*C_9 + A_{10}*C_{10} + A_{11}*C_{11} + A_{12}*C_{12} + A_{13}*C_{13} + A_{14}*C_{14} + A_{15}*C_{15}$, or saturate. The upper bits [127:32] of the result packed data may optionally be zeroed, or may represent don't-care values, etc.

**Figure 7** is a block diagram illustrating a fourth example embodiment of a dot product operation 715 performed in response to a fourth example embodiment of a dot product instruction. The dot product instruction specifies or otherwise indicates a first 128-bit source packed data 710 having sixteen 8-bit byte data elements $A_0$-$A_{15}$. The dot product instruction also specifies or otherwise indicates a second 128-bit source packed data 711 having sixty-four 2-bit wide data elements $B_0$-$B_{15}$, $C_0$-$C_{15}$, $D_0$-$D_{15}$, and $E_0$-$E_{15}$. The 2-bit data elements are one quarter the size of the 8-bit byte data elements of the first source packed data. As shown, the sixteen data elements $B_0$-$B_{15}$ may be contiguous within a lowest-order quarter of the second source packed data (i.e., within bits [31:0]), the sixteen data elements $C_0$-$C_N$ may be contiguous within a next-lowest-order quarter of the second source packed data (i.e., within bits [63:32]), the sixteen data elements $D_0$-$D_N$ may be contiguous within a next-highest-order quarter of the second source packed data (i.e., within bits [95:64]), and the sixteen data elements $E_0$-$E_N$ may be contiguous within a highest-order quarter of the second source packed data (i.e., within bits [127:96]). Each of the sets of data elements $B_0$-$B_{15}$, $C_0$-$C_{15}$, $D_0$-$D_{15}$, and $E_0$-$E_{15}$ represents a different non-overlapping set of sixteen data elements in the second source packed data.

The dot product instruction also specifies or otherwise indicates a destination (e.g., a destination storage location). A result packed data 712 is generated and stored in the destination in response to the dot product instruction. The result packed data includes four 16-bit result data elements $R_0$-$R_3$. Each of the result data elements includes twice as many bits as each of the data elements of the first source packed data, and eight times as many bits as the data elements of the second source packed data. Each of the four result data elements includes a dot product result that is based on a sum of at least sixteen products. Each of the dot product results may include a sum of products of the sixteen data elements $A_0$-$A_{15}$ of the first source packed data with corresponding data elements in a different subset of sixteen data elements of the second source packed data.

As shown, in some embodiments, a first lowest-order 16-bit result data element $R_0$ in bits [15:0] may include a dot product result equal to $A_0*B_0 + A_1*B_1 + A_2*B_2 + A_3*B_3 + A_4*B_4 + A_5*B_5 + A_6*B_6 + A_7*B_7 + A_8*B_8 + A_9*B_9 + A_{10}*B_{10} + A_{11}*B_{11} + A_{12}*B_{12} + A_{13}*B_{13} + A_{14}*B_{14} + A_{15}*B_{15}$, or saturate. A second data element $R_1$ may include a dot product result equal to $A_0*C_0 + A_1*C_1 + A_2*C_2 + A_3*C_3 + A_4*C_4 + A_5*C_5 + A_6*C_6 + A_7*C_7 + A_8*C_8 + A_9*C_9 + A_{10}*C_{10} + A_{11}*C_{11} + A_{12}*C_{12} + A_{13}*C_{13} + A_{14}*C_{14} + A_{15}*C_{15}$, or saturate. A third data element $R_2$ may include a dot product result equal to $A_0*D_0 + A_1*D_1 + A_2*D_2 + A_3*D_3 + A_4*D_4 + A_5*D_5 + A_6*D_6 + A_7*D_7 + A_8*D_8 + A_9*D_9 + A_{10}*D_{10} + A_{11}*D_{11} + A_{12}*D_{12} + A_{13}*D_{13} + A_{14}*D_{14} + A_{15}*D_{15}$, or saturate. A fourth data element $R_3$ may include a dot product result equal to $A_0*E_0 + A_1*E_1 + A_2*E_2 + A_3*E_3 + A_4*E_4 + A_5*E_5 + A_6*E_6 + A_7*E_7 + A_8*E_8 + A_9*E_9 + A_{10}*E_{10} + A_{11}*E_{11} + A_{12}*E_{12} + A_{13}*E_{13} + A_{14}*E_{14} + A_{15}*E_{15}$, or saturate. The upper bits [127:64] of the result packed data may optionally be zeroed, or may represent don't-care values, etc.

These are just a few detailed example embodiments. Other embodiments are also contemplated. For example, other embodiments are contemplated in which the source and result packed data are either larger or smaller. For example, an alternate embodiment is contemplated in which the source and result packed data are each 64-bits and have half as many data elements in each set (e.g., $A_0$-$A_7$, $B_0$-$B_7$, $C_0$-$C_7$, etc.) As another example, an alternate embodiment is contemplated in which the source and result packed data are each 256-bits and have twice as many data elements in each set (e.g., $A_0$-$A_{31}$, $B_0$-$B_{31}$, $C_0$-$C_{31}$, etc.) 512-bit source and result packed data is also contemplated. In further embodiments, the first source packed data may include 16-bit data elements, 32-bit data elements, or 64-bit data elements. Instead of the result data elements being twice as large as the data elements of the first source data and saturating the results when they exceed the maximum size, the result data elements may be larger than twice as many bits (e.g., three or four times as many bits as the data elements of the first source packed data. These are just a few illustrative variations. Still further alternate embodiments are contemplated.

**Figure 8** is a block diagram of an embodiment of an instruction format for dot product instruction 803. The instruction format includes an operation code or opcode 820. The opcode may represent a plurality of bits or one or more fields of the instruction format that are operable to identify the instruction and/or the operation to be performed by the processor (e.g., a dot product operation).

The instruction format includes a first source packed data specifier 821 to explicitly specify a first source packed data, a second source packed data specifier 822 to explicitly specify a second source packed data, and a result packed data specifier 823 to explicitly specify a result packed data. Each of these specifiers may specify a particular packed data register, memory location, or other storage location storing the associated packed data (e.g., specify an address). Alternatively, as previously mentioned, one or more of the first source packed data, the second source packed data, or the result packed data may be implicitly indicated by the instruction (i.e., as opposed to being explicitly specified). For example, upon identifying the opcode 820, the processor may implicitly know a storage location for one of these operands. As another option, one of the sources may also optionally be reused as the result (e.g., the contents of the source that are initially used by the instruction may be overwritten by the result).

In some embodiments, the instruction format may optionally include at least one size specifier 824 to specify a size (e.g., a bit width) of data elements of at least one of the first and second source packed data, although this is not required. In some embodiments, the first source packed data may have data elements of a fixed size (e.g., 8-bits or 16-bits), and the second source packed data may have data elements of a variable size that is a fraction (e.g., one half, one third, one quarter, one eighth, etc.) of the fixed size of the data elements of the first source packed data. The variable size may be specified by the size specifier. In such embodiments, when the first and second source packed data are stored in storage locations of the same bit width (e.g., different packed data registers of the same set), the second source packed data may include a number of data elements that is an integer multiple of the number of data elements of the first source packed data (e.g., two, three, four, or eight times as many). In some embodiments, the first source packed data may have 8-bit byte data elements of a fixed size, and the size specifier may be operable to specify that the data elements of the second source packed data are only 2-bits wide, only 4-bits wide, or in some cases 8-bits wide. As another example, in some embodiments, the first source packed data may have 16-bit byte data elements of a fixed size, and the size specifier may be operable to specify that the data elements of the second source packed data are only 2-bits wide, only 4-bits wide, only 8-bits wide, or in some cases 16-bits wide. These are just a few illustrative example embodiments. Other embodiments are also contemplated.

Different embodiments of the size specifier are contemplated. In some embodiments, the size specifier may be included in an immediate (e.g., an 8-bit immediate) of the dot product instruction. Alternatively, in other embodiments, the size specifier may be specified in a register or other storage location that is implicit to the instruction (e.g., implicit to an opcode of the instruction). In still other embodiments, the size specifier may initially be included in the destination register, and then may be overwritten when the result packed data is stored in the destination register. In still further embodiments, the instruction format may be capable of specifying another operand having the size specifier (e.g., one of the other operands may be implicit, or one of the other operands may be reused, or the instruction format may allow specification of four operands total).

Alternatively, in other embodiments the size specifier may not exist. For example, in some embodiments, the sizes of the data elements of both the first and second source packed data may be fixed and implicit to the instruction (e.g., implicit to the opcode of the instruction). In some cases, there may be only one instruction and one pair of fixed sizes. In other cases, there may be multiple different instructions (e.g., having different opcodes) and multiple, different pairs of fixed sizes. By way of example, a first dot product instruction with a first opcode may indicate that the data elements of the first source packed data are 8-bits and that the data elements of the second source packed data are only 4-bits, whereas a second dot product instruction with a second different opcode may indicate that the data elements of the first source packed data are 8-bits and that the data elements of the second source packed data are only 2-bits.

The illustrated instruction format shows examples of the types of fields that may be included in an embodiment of a floating point scaling instruction. Alternate embodiments may include a subset of the illustrated fields or may add additional fields. The illustrated order/arrangement of the fields is not required, but rather the fields may be rearranged. Fields need not include contiguous sequences of bits but rather may be composed of non-contiguous or separated bits. In some embodiments, the instruction format may comply with the VEX or EVEX instruction formats, although this is not required.

**Figure 9** is a block flow diagram of an example embodiment of a method 915 of processing an example embodiment of a dot product instruction having a size specifier. The dot product instruction is received, at block 916. The dot product instruction specifies or otherwise indicates a first source packed data having N, M-bit data elements, where N and M are integers. In various embodiments, N may be 4, 8, 16, or 32. In various embodiments, M may be 8, 16, 32, or 64. Commonly, N is 8 or 16 and M is 8 or 16. The instruction also specifies or otherwise indicates a second source packed data, specifies or otherwise indicates a variable size of data elements of the second source packed data (e.g., has a size specifier field), and specifies or otherwise indicates a destination storage location.

The dot product is decoded, at block 925. The first source packed data and the second source packed data are accessed (e.g., from registers or memory locations), at block 926. The variable size of the data elements of the second source packed data is determined, at block 927. The illustrated embodiment allows the variable size to be any of three different possible sizes (i.e., either M/4, M/2, or M).

If the size is M/4, then the method advances to block 917A, where a result packed data having result data elements $R_0$-$R_3$ is stored. $R_0$ may include a dot product result equal to $A_0*B_0 + A_1*B_1 + A_2*B_2 + ... + A_N*B_N$, or saturate. $R_1$ may include a dot product result equal to $A_0*C_0 + A_1*C_1 + A_2*C_2 + ... + A_N*C_N$, or saturate. $R_2$ may include a dot product result equal to $A_0*D_0 + A_1*D_1 + A_2*D_2 + ... + A_N*D_N$, or saturate. $R_3$ may include a dot product result equal to $A_0*E_0 + A_1*E_1 + A_2*E_2 + ... + A_N*E_N$, or saturate.

Conversely, if the size is M/2, then the method advances to block 917B, where a result packed data having result data elements $R_0$-$R_3$ is stored. $R_0$ may include a dot product result equal to $A_0*B_0 + A_1*B_1 + A_2*B_2 + ... + A_N*B_N$, or saturate. $R_1$ may include a dot product result equal to $A_0*C_0 + A_1*C_1 + A_2*C_2 + ... + A_N*C_N$, or saturate.

Alternatively, if the size is M, then the method advances to block 917AC, where a scalar result R (albeit possibly in a packed data register or memory location) is stored. R may include a dot product result equal to $A_0*B_0 + A_1*B_1 + A_2*B_2 + ... + A_N*B_N$, or saturate.

In some embodiments, a dot product instruction may optionally be a masked dot product instruction. The masked dot product instruction may specify or otherwise indicate a packed data operation mask. In some embodiments, the processor may include a set of mask registers (e.g., mask registers 106 in **Figure 1** and/or mask registers 1106 in **Figure 11)** that are to store packed data operation masks. The packed data operation masks may also be referred to herein simply as masks.

Each mask may represent a predicate operand or conditional control operand that may mask, predicate, or conditionally control whether or not dot product operations associated with the instruction are to be performed and/or whether or not results of the dot product operations are to be stored. In some embodiments, each mask may be operable to mask the dot product operations at per-data element granularity. Each mask may allow the dot product operations for different result data elements to be predicated or conditionally controlled separately and/or independently of the other result data elements.

The masks may each include multiple mask elements, predicate elements, conditional control elements, or flags. The elements or flags may be included in a one-to-one correspondence with result data elements (e.g., if there are two result data elements there may be two elements or flags or if there are four result data elements there may be four elements or flags). Each element or flag may be operable to mask a separate packed data operation and/or storage of a dot product in the corresponding result data element. Commonly each element or flag may be a single bit. The single bit may allow specifying either of two different possibilities (e.g., perform the operation versus do not perform the operation, store a result of the operation versus do not store a result of the operation, etc.). Alternatively, if selecting between more than two different options is desired, then two or more bits may be used for each flag or element.

A binary value of each bit of the mask may predicate or control whether or not a dot product operation associated with the masked dot product instruction is to be performed and/or a result of the dot product operation is to be stored. Each of the bits may either be set (i.e., have a binary value of 1) or cleared (i.e., have a binary value of 0). According to one possible convention, each bit may be set (i.e., 1) or cleared (i.e., 0), respectively, to allow or not allow a result of a dot product operation, performed on data elements of the first and second source packed data indicated by the masked dot product instruction, to be stored in a corresponding result data element. An opposite convention is also possible where bits are cleared (i.e., 0) to allow the results to be stored, or set (i.e., 1) to not allow the results to be stored.

When the result of a dot product operation is not to be stored for a given result data element (e.g., the corresponding mask bit is cleared or zero), another value may be stored in the given result data element. In some embodiments, merging-masking may be performed. In merging-masking, when a dot product operation is masked out, a value of a corresponding data element from a source packed data may be stored in the corresponding result data element. For example, if a source is to be reused as the destination, then if the mask bit is zero the corresponding destination data element may retain its initial value that it had while acting as the source (i.e., it is not updated with a calculation result). In other embodiments, zeroing-masking may be performed. In zeroing-masking, when a dot product operation is masked out, the corresponding result data element may be zeroed out or a value of zero may be stored in the corresponding result data element. Alternatively, in other embodiments other predetermined values may be stored in the masked out result data elements.

In some embodiments, the dot product operation may optionally be performed on all corresponding pairs of data elements of the first and second source packed data regardless of the corresponding bits of the mask, but the results of the may or may not be stored in the result packed data depending upon the corresponding bits of the mask. Alternatively, in another embodiment, the dot product operations may optionally be omitted (i.e., not performed) if the corresponding bits of the mask specify that the results of the operations are not to be stored in the packed data result. In some embodiments, exceptions and/or violations may optionally be suppressed for, or not raised by, a packed data operation on a masked-off element. In some embodiments, for masked dot product instructions with a memory operand, memory faults may optionally be suppressed for masked-off data elements.

**Figure 10** is a block diagram of an embodiment of an instruction format for dot product instruction 1003 having an optional mask specifier 1030 and an optional type of masking operation specifier 1031. The instruction format of **Figure 10** has certain similarities to the instruction format of **Figure 8.** To avoid obscuring the description, the discussion below will emphasize the different or additional features of the embodiment of **Figure 10** without repeating all of the similarities. It is to be understood that except where expressed otherwise, or otherwise readily apparent, that attributes and variations described for **Figure 8** may also apply to **Figure 10.**

The instruction format includes an operation code or opcode 1020, a first source packed data specifier 1021, a second source packed data specifier 1022, a result packed data specifier 1023, and an optional size specifier 1024. The instruction format also includes an optional mask specifier 1030 and an optional type of masking operation specifier 1031. The mask specifier 1030 may specify a mask (e.g., specify an address of a mask register). In one particular example embodiment, the mask specifier may have 3-bits to identify any one of eight different mask registers, although this is not required. The type of masking operation specifier 1031 may specify a type of the masking that is to be performed. In some embodiments, the type of masking operation specifier may specify whether merging-masking or zeroing-masking is to be performed. For example, the type of masking operation specifier may be a single bit that may have a first binary value to specify that merging-masking is to be performed, or a second binary value to specify that zeroing masking is to be performed.

**Figure 11** is a block diagram of an example embodiment of a suitable set of packed data operation mask registers 1106. Each of the packed data operation mask registers may be used to store a packed data operation mask. In the illustrated embodiment, the set includes eight mask registers labeled k0 through k7. Alternate embodiments may include either fewer than eight (e.g., two, four, six, etc.) or more than eight (e.g., sixteen, twenty, thirty-two, etc.) mask registers. By way of example, the masked dot product instructions may use three bits (e.g., a 3-bit field) to encode or specify any one of the eight mask registers k0 through k7. In alternate embodiments, either fewer or more bits may be used when there are fewer or more mask registers, respectively. In the illustrated embodiment, each of the mask registers is 64-bits. In alternate embodiments, the widths of the mask registers may be either wider than 64-bits (e.g., 80-bits, 128-bits, etc.) or narrower than 64-bits (e.g., 8-bits, 16-bits, 32-bits, etc).

**Figure 12** is a block diagram of an example embodiment of a suitable set of packed data registers 1205. The illustrated packed data registers include thirty-two 512-bit packed data or vector registers. These thirty-two 512-bit registers are labeled ZMM0 through ZMM31. In the illustrated embodiment, the lower order 256-bits of the lower sixteen of these registers, namely ZMM0-ZMM15, are aliased or overlaid on respective 256-bit packed data or vector registers labeled YMM0-YMM15, although this is not required. Likewise, in the illustrated embodiment, the lower order 128-bits of YMM0-YMM15 are aliased or overlaid on respective 128-bit packed data or vector registers labeled XMM0-XMM1, although this also is not required. The 512-bit registers ZMM0 through ZMM31 are operable to hold 512-bit packed data, 256-bit packed data, or 128-bit packed data. The 256-bit registers YMM0-YMM15 are operable to hold 256-bit packed data, or 128-bit packed data. The 128-bit registers XMM0-XMM1 are operable to hold 128-bit packed data. Each of the registers may be used to store either packed floating-point data or packed integer data. Different data element sizes are supported including at least 8-bit byte data, 16-bit word data, 32-bit doubleword or single precision floating point data, and 64-bit quadword or double precision floating point data. Alternate embodiments of packed data registers may include different numbers of registers, different sizes of registers, and may or may not alias larger registers on smaller registers.

**Figure 13** is a block diagram of an article of manufacture (e.g., a computer program product) 1335 including a machine-readable storage medium 1336 storing one or more dot product instructions 1303. In some embodiments, the machine-readable storage medium may be a tangible and/or non-transitory machine-readable storage medium. In various example embodiments, the machine-readable storage medium may include a floppy diskette, an optical disk, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a semiconductor memory, other types of memory, or a combinations thereof. In some embodiments, the medium may include one or more solid data storage materials, such as, for example, a semiconductor data storage material, a phase-change data storage material, a magnetic data storage material, an optically transparent solid data storage material, etc.

Each of the dot product instructions, specifies or otherwise indicates a first source packed data including at least four data elements $A_0$, $A_1$, $A_2$, $A_3$, a second source packed data including at least eight data elements $B_0$, $B_1$, $B_2$, $B_3$, $C_0$, $C_1$, $C_2$, $C_3$, and a destination storage location. Each of the dot product instructions, if executed by a machine, is operable to cause the machine to store a packed data result in a destination storage location indicated by the instruction. The result packed data includes at least a first data element that includes $A_0{*}B_0 + A_1{*}B_1 + A_2{*}B_2 + A_3{*}B_3$ and a second data element that includes $A_0{*}C_0 + A_1{*}C_1 + A_2{*}C_2 + A_3{*}C_3$. Any of the dot product instructions and associated packed data results disclosed herein are suitable.

Examples of different types of machines include, but are not limited to, processors (e.g., general-purpose processors and special-purpose processors), instruction processing apparatus, and various electronic devices having one or more processors or instruction processing apparatus. A few representative examples of such electronic devices include, but are not limited to, computer systems, desktops, laptops, notebooks, servers, network routers, network switches, set-top boxes, cellular phones, video game controllers, etc.

Certain embodiments of the dot product instructions disclosed herein are particularly useful for accelerating deblocking filtering calculations, for example for H.264/MPEG-4 Part 10 or AVC (Advanced Video Coding). AVC is a standard for video compression and is presently a commonly used format for recording, compressing, and distributing video (e.g., high definition video). AVC uses deblocking filtering to help increase coding efficiency and improve the decoded video quality. Deblocking filtering is performed on groups of pixels (e.g., groups of 4 or 8 pixels). These groups of pixels have what are known as edges (e.g., horizontal and vertical edges). When performing deblocking filtering for a group or block of pixels both the vertical edges are filtered and the horizontal edges are filtered. The implementation of the deblocking filter is computationally intensive and generally consumes a significant amount of processing resources. In particular, typically vertically filtering the edges tends to be computationally intensive.

**Figure 14A** is a block diagram illustrating two adjacent sixteen-by-sixteen pixel macroblocks 1440 separated by a vertical edge 1441. Each of the macroblocks includes sixteen pixels arranged in four rows and four columns. Commonly, in order to implement vertical edge filtering in deblocking filtering, the rows and columns are first transposed, then the deblocking calculations are performed on the transposed data, and then results of the deblocking calculations are transposed back. Such transposition/rearrangement operations tend to be computationally intensive.

**Figure 14B** is a block diagram illustrating an example embodiment of a dot product operation 1415 useful for vertical edge deblocking filtering that may be performed in response to an example embodiment of a dot product instruction. The dot product instruction specifies or otherwise indicates a first source packed data 1410 having at least four pixels $p_1$, $p_0$, $q_0$, $q_1$. By way of example, the four pixels may be within a given row of the adjacent 16x16 pixel macroblocks of **Figure 14A** and may span the vertical edge. The dot product instruction also specifies or otherwise indicates a second source packed data 1411 having at least sixteen deblocking filtering coefficients $a_0$-$a_3$, $b_0$-$b_3$, $c_0$-$c_3$, and $d_0$-$d_3$.

A result packed data 1412 is generated and stored in response to the dot product instruction. In the illustration, the result packed data is broken into a first part 1412A and a second part 1412B, although it is understood that the result packed data may reside in contiguous bits of a single register. The result packed data includes at least four data elements that each include a dot product result. As shown, in some embodiments, a first lowest-order data element $q_1$ may include a dot product result equal to $q_1*d_3 + q_0*d_2 + p_0*d_1 + p_1*d_0$, or saturate. A second data element $q_0$ may include a dot product result equal to $q_1*c_3 + q_0*c_2 + p_0*C_1 + p_1*c_0$, or saturate. A third data element $p_0$ may include a dot product result equal to $q_1*b_3 + q_0*b_2 + p_0*b_1 + p_1*b_0$, or saturate. A fourth data element $p_1$ may include a dot product result equal to $q_1*a_3 + q_0*a_2 + p_0*a_1 + p_1*a_0$, or saturate.

Advantageously, the dot product operation/instruction allows multiple deblocking filtered pixel values (e.g., the four values $p_1$, $p_0$, $q_0$, and $q_1$) to be calculated in a dot product single instruction/operation. Moreover, there is no need to transpose the data before or after the deblocking filtering calculations. This may help to significantly reduce the computational burden of vertical deblocking filtering calculations. It is to be appreciated that this is just one illustrative embodiment, and that in some embodiments dot product instructions may process more than four pixels at a time (e.g., at least eight, at least sixteen, etc.).

An instruction set includes one or more instruction formats. A given instruction format defines various fields (number of bits, location of bits) to specify, among other things, the operation to be performed (opcode) and the operand(s) on which that operation is to be performed. Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to the Advanced Vector Extensions (AVX) (AVX1 and AVX2) and using the Vector Extensions (VEX) coding scheme, has been, has been released and/or published (e.g., see Intel® 64 and IA-32 Architectures Software Developers Manual, October 2011; and see Intel® Advanced Vector Extensions Programming Reference, June 2011).

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

**Generic Vector Friendly Instruction Format**

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

**Figures 15A-15B** are block diagrams illustrating a generic vector friendly instruction format and instruction templates thereof according to embodiments of the invention. **Figure 15A** is a block diagram illustrating a generic vector friendly instruction format and class A instruction templates thereof according to embodiments of the invention; while **Figure 15B** is a block diagram illustrating the generic vector friendly instruction format and class B instruction templates thereof according to embodiments of the invention. Specifically, a generic vector friendly instruction format 1500 for which are defined class A and class B instruction templates, both of which include no memory access 1505 instruction templates and memory access 1520 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 15A** include: 1) within the no memory access 1505 instruction templates there is shown a no memory access, full round control type operation 1510 instruction template and a no memory access, data transform type operation 1515 instruction template; and 2) within the memory access 1520 instruction templates there is shown a memory access, temporal 1525 instruction template and a memory access, non-temporal 1530 instruction template. The class B instruction templates in **Figure 15B** include: 1) within the no memory access 1505 instruction templates there is shown a no memory access, write mask control, partial round control type operation 1512 instruction template and a no memory access, write mask control, vsize type operation 1517 instruction template; and 2) within the memory access 1520 instruction templates there is shown a memory access, write mask control 1527 instruction template.

The generic vector friendly instruction format 1500 includes the following fields listed below in the order illustrated in **Figures 15A-15B.**

Format field 1540 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1542 - its content distinguishes different base operations.

Register index field 1544 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1546 - its content distinguishes occurrences of instructions in the generic vector instruction format that specify memory access from those that do not; that is, between no memory access 1505 instruction templates and memory access 1520 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1550 - its content distinguishes which one of a variety of different operations to be performed in addition to the base operation. This field is context specific. In one embodiment of the invention, this field is divided into a class field 1568, an alpha field 1552, and a beta field 1554. The augmentation operation field 1550 allows common groups of operations to be performed in a single instruction rather than 2, 3, or 4 instructions.

Scale field 1560 - its content allows for the scaling of the index field's content for memory address generation (e.g., for address generation that uses $2^{scale}$ * index + base).

Displacement Field 1562A- its content is used as part of memory address generation (e.g., for address generation that uses $2^{scale}$ * index + base + displacement).

Displacement Factor Field 1562B (note that the juxtaposition of displacement field 1562A directly over displacement factor field 1562B indicates one or the other is used) - its content is used as part of address generation; it specifies a displacement factor that is to be scaled by the size of a memory access (N) - where N is the number of bytes in the memory access (e.g., for address generation that uses $2^{scale}$ * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1574 (described later herein) and the data manipulation field 1554C. The displacement field 1562A and the displacement factor field 1562B are optional in the sense that they are not used for the no memory access 1505 instruction templates and/or different embodiments may implement only one or none of the two.

Data element width field 1564 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1570 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1570 allows for partial vector operations, including loads, stores, arithmetic, logical, etc. While embodiments of the invention are described in which the write mask field's 1570 content selects one of a number of write mask registers that contains the write mask to be used (and thus the write mask field's 1570 content indirectly identifies that masking to be performed), alternative embodiments instead or additional allow the mask write field's 1570 content to directly specify the masking to be performed.

Immediate field 1572 - its content allows for the specification of an immediate. This field is optional in the sense that is it not present in an implementation of the generic vector friendly format that does not support immediate and it is not present in instructions that do not use an immediate.

Class field 1568 - its content distinguishes between different classes of instructions. With reference to **Figures 15A-B,** the contents of this field select between class A and class B instructions. In **Figures 15A-B,** rounded corner squares are used to indicate a specific value is present in a field (e.g., class A 1568A and class B 1568B for the class field 1568 respectively in **Figures 15A-B).**

**Instruction Templates of Class A**

In the case of the non-memory access 1505 instruction templates of class A, the alpha field 1552 is interpreted as an RS field 1552A, whose content distinguishes which one of the different augmentation operation types are to be performed (e.g., round 1552A.1 and data transform 1552A.2 are respectively specified for the no memory access, round type operation 1510 and the no memory access, data transform type operation 1515 instruction templates), while the beta field 1554 distinguishes which of the operations of the specified type is to be performed. In the no memory access 1505 instruction templates, the scale field 1560, the displacement field 1562A, and the displacement scale filed 1562B are not present.

No-Memory Access Instruction Templates - Full Round Control Type Operation

In the no memory access full round control type operation 1510 instruction template, the beta field 1554 is interpreted as a round control field 1554A, whose content(s) provide static rounding. While in the described embodiments of the invention the round control field 1554A includes a suppress all floating point exceptions (SAE) field 1556 and a round operation control field 1558, alternative embodiments may support may encode both these concepts into the same field or only have one or the other of these concepts/fields (e.g., may have only the round operation control field 1558).

SAE field 1556 - its content distinguishes whether or not to disable the exception event reporting; when the SAE field's 1556 content indicates suppression is enabled, a given instruction does not report any kind of floating-point exception flag and does not raise any floating point exception handler.

Round operation control field 1558 - its content distinguishes which one of a group of rounding operations to perform (e.g., Round-up, Round-down, Round-towards-zero and Round-to-nearest). Thus, the round operation control field 1558 allows for the changing of the rounding mode on a per instruction basis. In one embodiment of the invention where a processor includes a control register for specifying rounding modes, the round operation control field's 1550 content overrides that register value.

No Memory Access Instruction Templates - Data Transform Type Operation

In the no memory access data transform type operation 1515 instruction template, the beta field 1554 is interpreted as a data transform field 1554B, whose content distinguishes which one of a number of data transforms is to be performed (e.g., no data transform, swizzle, broadcast).

In the case of a memory access 1520 instruction template of class A, the alpha field 1552 is interpreted as an eviction hint field 1552B, whose content distinguishes which one of the eviction hints is to be used (in **Figure 15A,** temporal 1552B.1 and non-temporal 1552B.2 are respectively specified for the memory access, temporal 1525 instruction template and the memory access, non-temporal 1530 instruction template), while the beta field 1554 is interpreted as a data manipulation field 1554C, whose content distinguishes which one of a number of data manipulation operations (also known as primitives) is to be performed (e.g., no manipulation; broadcast; up conversion of a source; and down conversion of a destination). The memory access 1520 instruction templates include the scale field 1560, and optionally the displacement field 1562A or the displacement scale field 1562B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

Memory Access Instruction Templates - Temporal

Temporal data is data likely to be reused soon enough to benefit from caching. This is, however, a hint, and different processors may implement it in different ways, including ignoring the hint entirely.

Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

**Instruction Templates of Class B**

In the case of the instruction templates of class B, the alpha field 1552 is interpreted as a write mask control (Z) field 1552C, whose content distinguishes whether the write masking controlled by the write mask field 1570 should be a merging or a zeroing.

In the case of the non-memory access 1505 instruction templates of class B, part of the beta field 1554 is interpreted as an RL field 1557A, whose content distinguishes which one of the different augmentation operation types are to be performed (e.g., round 1557A.1 and vector length (VSIZE) 1557A.2 are respectively specified for the no memory access, write mask control, partial round control type operation 1512 instruction template and the no memory access, write mask control, VSIZE type operation 1517 instruction template), while the rest of the beta field 1554 distinguishes which of the operations of the specified type is to be performed. In the no memory access 1505 instruction templates, the scale field 1560, the displacement field 1562A, and the displacement scale filed 1562B are not present.

In the no memory access, write mask control, partial round control type operation 1510 instruction template, the rest of the beta field 1554 is interpreted as a round operation field 1559A and exception event reporting is disabled (a given instruction does not report any kind of floating-point exception flag and does not raise any floating point exception handler).

Round operation control field 1559A - just as round operation control field 1558, its content distinguishes which one of a group of rounding operations to perform (e.g., Round-up, Round-down, Round-towards-zero and Round-to-nearest). Thus, the round operation control field 1559A allows for the changing of the rounding mode on a per instruction basis. In one embodiment of the invention where a processor includes a control register for specifying rounding modes, the round operation control field's 1550 content overrides that register value.

In the no memory access, write mask control, VSIZE type operation 1517 instruction template, the rest of the beta field 1554 is interpreted as a vector length field 1559B, whose content distinguishes which one of a number of data vector lengths is to be performed on (e.g., 128, 256, or 512 byte).

In the case of a memory access 1520 instruction template of class B, part of the beta field 1554 is interpreted as a broadcast field 1557B, whose content distinguishes whether or not the broadcast type data manipulation operation is to be performed, while the rest of the beta field 1554 is interpreted the vector length field 1559B. The memory access 1520 instruction templates include the scale field 1560, and optionally the displacement field 1562A or the displacement scale field 1562B.

With regard to the generic vector friendly instruction format 1500, a full opcode field 1574 is shown including the format field 1540, the base operation field 1542, and the data element width field 1564. While one embodiment is shown where the full opcode field 1574 includes all of these fields, the full opcode field 1574 includes less than all of these fields in embodiments that do not support all of them. The full opcode field 1574 provides the operation code (opcode).

The augmentation operation field 1550, the data element width field 1564, and the write mask field 1570 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

**Figure 16** is a block diagram illustrating an exemplary specific vector friendly instruction format according to embodiments of the invention. **Figure 16** shows a specific vector friendly instruction format 1600 that is specific in the sense that it specifies the location, size, interpretation, and order of the fields, as well as values for some of those fields. The specific vector friendly instruction format 1600 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 15** into which the fields from **Figure 16** map are illustrated.

It should be understood that, although embodiments of the invention are described with reference to the specific vector friendly instruction format 1600 in the context of the generic vector friendly instruction format 1500 for illustrative purposes, the invention is not limited to the specific vector friendly instruction format 1600 except where claimed. For example, the generic vector friendly instruction format 1500 contemplates a variety of possible sizes for the various fields, while the specific vector friendly instruction format 1600 is shown as having fields of specific sizes. By way of specific example, while the data element width field 1564 is illustrated as a one bit field in the specific vector friendly instruction format 1600, the invention is not so limited (that is, the generic vector friendly instruction format 1500 contemplates other sizes of the data element width field 1564).

The generic vector friendly instruction format 1500 includes the following fields listed below in the order illustrated in **Figure 16A.**

EVEX Prefix (Bytes 0-3) 1602 - is encoded in a four-byte form.

Format Field 1540 (EVEX Byte 0, bits [7:0]) - the first byte (EVEX Byte 0) is the format field 1540 and it contains 0x62 (the unique value used for distinguishing the vector friendly instruction format in one embodiment of the invention).

The second-fourth bytes (EVEX Bytes 1-3) include a number of bit fields providing specific capability.

REX field 1605 (EVEX Byte 1, bits [7-5]) - consists of a EVEX.R bit field (EVEX Byte 1, bit [7] - R), EVEX.X bit field (EVEX byte 1, bit [6] - X), and 1557BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX’ field 1510 - this is the first part of the REX’ field 1510 and is the EVEX.R’ bit field (EVEX Byte 1, bit [4] - R’) that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R’Rrrr is formed by combining EVEX.R’, EVEX.R, and the other RRR from other fields.

Opcode map field 1615 (EVEX byte 1, bits [3:0] - mmmm) - its content encodes an implied leading opcode byte (0F, 0F 38, or 0F 3).

Data element width field 1564 (EVEX byte 2, bit [7] - W) - is represented by the notation EVEX.W. EVEX.W is used to define the granularity (size) of the datatype (either 32-bit data elements or 64-bit data elements).

EVEX.vvvv 1620 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 1620 encodes the 4 low-order bits of the first source register specifier stored in inverted (Is complement) form. Depending on the instruction, an extra different EVEX bit field is used to extend the specifier size to 32 registers.

EVEX.U 1568 Class field (EVEX byte 2, bit [2]-U) - If EVEX.U = 0, it indicates class A or EVEX.U0; if EVEX.U = 1, it indicates class B or EVEX.U1.

Prefix encoding field 1625 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder’s PLA (so the PLA can execute both the legacy and EVEX format of these legacy instructions without modification). Although newer instructions could use the EVEX prefix encoding field’s content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1552 (EVEX byte 3, bit [7] - EH; also known as EVEX.EH, EVEX.rs, EVEX.RL, EVEX.write mask control, and EVEX.N; also illustrated with $\alpha$) - as previously described, this field is context specific.

Beta field 1554 (EVEX byte 3, bits [6:4]-SSS, also known as EVEX.$s_{2-0}$, EVEX.$r_{2-0}$, EVEX.rr1, EVEX.LL0, EVEX.LLB; also illustrated with $\beta\beta\beta$) - as previously described, this field is context specific.

REX’ field 1510 - this is the remainder of the REX’ field and is the EVEX. V’ bit field (EVEX Byte 3, bit [3] - V’) that may be used to encode either the upper 16 or lower 16 of the extended 32 register set. This bit is stored in bit inverted format. A value of 1 is used to encode the lower 16 registers. In other words, V’VVVV is formed by combining EVEX.V’, EVEX.vvvv.

Write mask field 1570 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1630 (Byte 4) is also known as the opcode byte. Part of the opcode is specified in this field.

MOD R/M Field 1640 (Byte 5) includes MOD field 1642, Reg field 1644, and R/M field 1646. As previously described, the MOD field’s 1642 content distinguishes between memory access and non-memory access operations. The role of Reg field 1644 can be summarized to two situations: encoding either the destination register operand or a source register operand, or be treated as an opcode extension and not used to encode any instruction operand. The role of R/M field 1646 may include the following: encoding the instruction operand that references a memory address, or encoding either the destination register operand or a source register operand.

Scale, Index, Base (SIB) Byte (Byte 6) - As previously described, the scale field’s 1550 content is used for memory address generation. SIB.xxx 1654 and SIB.bbb 1656 - the contents of these fields have been previously referred to with regard to the register indexes Xxxx and Bbbb.

Displacement field 1562A (Bytes 7-10) - when MOD field 1642 contains 10, bytes 7-10 are the displacement field 1562A, and it works the same as the legacy 32-bit displacement (disp32) and works at byte granularity.

Displacement factor field 1562B (Byte 7) - when MOD field 1642 contains 01, byte 7 is the displacement factor field 1562B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1562B is a reinterpretation of disp8; when using displacement factor field 1562B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1562B substitutes the legacy x86 instruction set 8-bit displacement. Thus, the displacement factor field 1562B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 1572 operates as previously described.

## Full Opcode Field

**Figure 16B** is a block diagram illustrating the fields of the specific vector friendly instruction format 1600 that make up the full opcode field 1574 according to one embodiment of the invention. Specifically, the full opcode field 1574 includes the format field 1540, the base operation field 1542, and the data element width (W) field 1564. The base operation field 1542 includes the prefix encoding field 1625, the opcode map field 1615, and the real opcode field 1630.

## Register Index Field

**Figure 16C** is a block diagram illustrating the fields of the specific vector friendly instruction format 1600 that make up the register index field 1544 according to one embodiment of the invention. Specifically, the register index field 1544 includes the REX field 1605, the REX' field 1610, the MODR/M.reg field 1644, the MODR/M.r/m field 1646, the VVVV field 1620, xxx field 1654, and the bbb field 1656.

## Augmentation Operation Field

**Figure 16D** is a block diagram illustrating the fields of the specific vector friendly instruction format 1600 that make up the augmentation operation field 1550 according to one embodiment of the invention. When the class (U) field 1568 contains 0, it signifies EVEX.U0 (class A 1568A); when it contains 1, it signifies EVEX.U1 (class B 1568B). When U=0 and the MOD field 1642 contains 11 (signifying a no memory access operation), the alpha field 1552 (EVEX byte 3, bit [7] - EH) is interpreted as the rs field 1552A. When the rs field 1552A contains a 1 (round 1552A.1), the beta field 1554 (EVEX byte 3, bits [6:4]- SSS) is interpreted as the round control field 1554A. The round control field 1554A includes a one bit SAE field 1556 and a two bit round operation field 1558. When the rs field 1552A contains a 0 (data transform 1552A.2), the beta field 1554 (EVEX byte 3, bits [6:4]-SSS) is interpreted as a three bit data transform field 1554B. When U=0 and the MOD field 1642 contains 00, 01, or 10 (signifying a memory access operation), the alpha field 1552 (EVEX byte 3, bit [7] - EH) is interpreted as the eviction hint (EH) field 1552B and the beta field 1554 (EVEX byte 3, bits [6:4]- SSS) is interpreted as a three bit data manipulation field 1554C.

When U=1, the alpha field 1552 (EVEX byte 3, bit [7] - EH) is interpreted as the write mask control (Z) field 1552C. When U=1 and the MOD field 1642 contains 11 (signifying a no memory access operation), part of the beta field 1554 (EVEX byte 3, bit [4]- $S_0$) is interpreted as the RL field 1557A; when it contains a 1 (round 1557A.1) the rest of the beta field 1554 (EVEX byte 3, bit [6-5]- $S_{2-1}$) is interpreted as the round operation field 1559A, while when the RL field 1557A contains a 0 (VSIZE 1557.A2) the rest of the beta field 1554 (EVEX byte 3, bit [6-5]- $S_{2-1}$) is interpreted as the vector length field 1559B (EVEX byte 3, bit [6-5]- $L_{1-0}$). When U=1 and the MOD field 1642 contains 00, 01, or 10 (signifying a memory access operation), the beta field 1554 (EVEX byte 3, bits [6:4]- SSS) is interpreted as the vector length field 1559B (EVEX byte 3, bit [6-5]- $L_{1-0}$) and the broadcast field 1557B (EVEX byte 3, bit [4]- B).

## Exemplary Register Architecture

**Figure 17** is a block diagram of a register architecture 1700 according to one embodiment of the invention. In the embodiment illustrated, there are 32 vector registers 1710 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1600 operates on these overlaid register file as illustrated in the below tables.

| Adjustable Vector Length | Class | Operations | Registers |
|---|---|---|---|
| Instruction Templates that do not include the vector length field 1559B | A (Figure 15A; U=0) | 1510, 1515, 1525, 1530 | zmm registers (the vector length is 64 byte) |
| | B (Figure 15B; U=1) | 1512 | zmm registers (the vector length is 64 byte) |
| Instruction templates that do include the vector length field 1559B | B (Figure 15B; U=1) | 1517, 1527 | zmm, ymm, or xmm registers (the vector length is 64 byte, 32 byte, or 16 byte) depending on the vector length field 1559B |

In other words, the vector length field 1559B selects between a maximum length and one or more other shorter lengths, where each such shorter length is half the length of the preceding length; and instructions templates without the vector length field 1559B operate on the maximum vector length. Further, in one embodiment, the class B instruction templates of the specific vector friendly instruction format 1600 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1715 - in the embodiment illustrated, there are 8 write mask registers (k0 through k7), each 64 bits in size. In an alternate embodiment, the write mask registers 1715 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1725 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1745, on which is aliased the MMX packed integer flat register file 1750 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

**Exemplary Core Architectures, Processors, and Computer Architectures**

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

**Exemplary Core Architectures**

**In-order and out-of-order core block diagram**

**Figure 18A** is a block diagram illustrating both an exemplary in-order pipeline and an exemplary register renaming, out-of-order issue/execution pipeline according to embodiments of the invention. Figure 18B is a block diagram illustrating both an exemplary embodiment of an in-order architecture core and an exemplary register renaming, out-of-order issue/execution architecture core to be included in a processor according to embodiments of the invention. The solid lined boxes in **Figures 18A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 18A,** a processor pipeline 1800 includes a fetch stage 1802, a length decode stage 1804, a decode stage 1806, an allocation stage 1808, a renaming stage 1810, a scheduling (also known as a dispatch or issue) stage 1812, a register read/memory read stage 1814, an execute stage 1816, a write back/memory write stage 1818, an exception handling stage 1822, and a commit stage 1824.

**Figure 18B** shows processor core 1890 including a front end unit 1830 coupled to an execution engine unit 1850, and both are coupled to a memory unit 1870. The core 1890 may be a reduced instruction set computing (RISC) core, a complex instruction set computing (CISC) core, a very long instruction word (VLIW) core, or a hybrid or alternative core type. As yet another option, the core 1890 may be a special-purpose core, such as, for example, a network or communication core, compression engine, coprocessor core, general purpose computing graphics processing unit (GPGPU) core, graphics core, or the like.

The front end unit 1830 includes a branch prediction unit 1832 coupled to an instruction cache unit 1834, which is coupled to an instruction translation lookaside buffer (TLB) 1836, which is coupled to an instruction fetch unit 1838, which is coupled to a decode unit 1840. The decode unit 1840 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1840 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1890 includes a microcode ROM or other medium that stores microcode for certain macroinstructions (e.g., in decode unit 1840 or otherwise within the front end unit 1830). The decode unit 1840 is coupled to a rename/allocator unit 1852 in the execution engine unit 1850.

The execution engine unit 1850 includes the rename/allocator unit 1852 coupled to a retirement unit 1854 and a set of one or more scheduler unit(s) 1856. The scheduler unit(s) 1856 represents any number of different schedulers, including reservations stations, central instruction window, etc. The scheduler unit(s) 1856 is coupled to the physical register file(s) unit(s) 1858. Each of the physical register file(s) units 1858 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 1858 comprises a vector registers unit, a write mask registers unit, and a scalar registers unit. These register units may provide architectural vector registers, vector mask registers, and general purpose registers. The physical register file(s) unit(s) 1858 is overlapped by the retirement unit 1854 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1854 and the physical register file(s) unit(s) 1858 are coupled to the execution cluster(s) 1860. The execution cluster(s) 1860 includes a set of one or more execution units 1862 and a set of one or more memory access units 1864. The execution units 1862 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1856, physical register file(s) unit(s) 1858, and execution cluster(s) 1860 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1864). It should also be understood that where separate pipelines are used, one or more of these pipelines may be out-of-order issue/execution and the rest in-order.

The set of memory access units 1864 is coupled to the memory unit 1870, which includes a data TLB unit 1872 coupled to a data cache unit 1874 coupled to a level 2 (L2) cache unit 1876. In one exemplary embodiment, the memory access units 1864 may include a load unit, a store address unit, and a store data unit, each of which is coupled to the data TLB unit 1872 in the memory unit 1870. The instruction cache unit 1834 is further coupled to a level 2 (L2) cache unit 1876 in the memory unit 1870. The L2 cache unit 1876 is coupled to one or more other levels of cache and eventually to a main memory.

By way of example, the exemplary register renaming, out-of-order issue/execution core architecture may implement the pipeline 1800 as follows: 1) the instruction fetch 1838 performs the fetch and length decoding stages 1802 and 1804; 2) the decode unit 1840 performs the decode stage 1806; 3) the rename/allocator unit 1852 performs the allocation stage 1808 and renaming stage 1810; 4) the scheduler unit(s) 1856 performs the schedule stage 1812; 5) the physical register file(s) unit(s) 1858 and the memory unit 1870 perform the register read/memory read stage 1814; the execution cluster 1860 perform the execute stage 1816; 6) the memory unit 1870 and the physical register file(s) unit(s) 1858 perform the write back/memory write stage 1818; 7) various units may be involved in the exception handling stage 1822; and 8) the retirement unit 1854 and the physical register file(s) unit(s) 1858 perform the commit stage 1824.

The core 1890 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1890 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 1834/1874 and a shared L2 cache unit 1876, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

**Specific Exemplary In-Order Core Architecture**

**Figures 19A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 19A** is a block diagram of a single processor core, along with its connection to the on-die interconnect network 1902 and with its local subset of the Level 2 (L2) cache 1904, according to embodiments of the invention. In one embodiment, an instruction decoder 1900 supports the x86 instruction set with a packed data instruction set extension. An L1 cache 1906 allows low-latency accesses to cache memory into the scalar and vector units. While in one embodiment (to simplify the design), a scalar unit 1908 and a vector unit 1910 use separate register sets (respectively, scalar registers 1912 and vector registers 1914) and data transferred between them is written to memory and then read back in from a level 1 (L1) cache 1906, alternative embodiments of the invention may use a different approach (e.g., use a single register set or include a communication path that allow data to be transferred between the two register files without being written and read back).

The local subset of the L2 cache 1904 is part of a global L2 cache that is divided into separate local subsets, one per processor core. Each processor core has a direct access path to its own local subset of the L2 cache 1904. Data read by a processor core is stored in its L2 cache subset 1904 and can be accessed quickly, in parallel with other processor cores accessing their own local L2 cache subsets. Data written by a processor core is stored in its own L2 cache subset 1904 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 19B** is an expanded view of part of the processor core in **Figure 19A** according to embodiments of the invention. **Figure 19B** includes an L1 data cache 1906A part of the L1 cache 1904, as well as more detail regarding the vector unit 1910 and the vector registers 1914. Specifically, the vector unit 1910 is a 16-wide vector processing unit (VPU) (see the 16-wide ALU 1928), which executes one or more of integer, single-precision float, and double-precision float instructions. The VPU supports swizzling the register inputs with swizzle unit 1920, numeric conversion with numeric convert units 1922A-B, and replication with replication unit 1924 on the memory input. Write mask registers 1926 allow predicating resulting vector writes.

**Processor with integrated memory controller and graphics**

**Figure 20** is a block diagram of a processor 2000 that may have more than one core, may have an integrated memory controller, and may have integrated graphics according to embodiments of the invention. The solid lined boxes in **Figure 20** illustrate a processor 2000 with a single core 2002A, a system agent 2010, a set of one or more bus controller units 2016, while the optional addition of the dashed lined boxes illustrates an alternative processor 2000 with multiple cores 2002A-N, a set of one or more integrated memory controller unit(s) 2014 in the system agent unit 2010, and special purpose logic 2008.

Thus, different implementations of the processor 2000 may include: 1) a CPU with the special purpose logic 2008 being integrated graphics and/or scientific (throughput) logic (which may include one or more cores), and the cores 2002A-N being one or more general purpose cores (e.g., general purpose in-order cores, general purpose out-of-order cores, a combination of the two); 2) a coprocessor with the cores 2002A-N being a large number of special purpose cores intended primarily for graphics and/or scientific (throughput); and 3) a coprocessor with the cores 2002A-N being a large number of general purpose in-order cores. Thus, the processor 2000 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 2000 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 2006, and external memory (not shown) coupled to the set of integrated memory controller units 2014. The set of shared cache units 2006 may include one or more mid-level caches, such as level 2 (L2), level 3 (L3), level 4 (L4), or other levels of cache, a last level cache (LLC), and/or combinations thereof. While in one embodiment a ring based interconnect unit 2012 interconnects the integrated graphics logic 2008, the set of shared cache units 2006, and the system agent unit 2010/integrated memory controller unit(s) 2014, alternative embodiments may use any number of well-known techniques for interconnecting such units. In one embodiment, coherency is maintained between one or more cache units 2006 and cores 2002-A-N.

In some embodiments, one or more of the cores 2002A-N are capable of multi-threading. The system agent 2010 includes those components coordinating and operating cores 2002A-N. The system agent unit 2010 may include for example a power control unit (PCU) and a display unit.

The PCU may be or include logic and components needed for regulating the power state of the cores 2002A-N and the integrated graphics logic 2008. The display unit is for driving one or more externally connected displays.

The cores 2002A-N may be homogenous or heterogeneous in terms of architecture instruction set; that is, two or more of the cores 2002A-N may be capable of execution the same instruction set, while others may be capable of executing only a subset of that instruction set or a different instruction set.

**Exemplary Computer Architectures**

**Figures 21-24** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 21,** shown is a block diagram of a system 2100 in accordance with one embodiment of the present invention. The system 2100 may include one or more processors 2110, 2115, which are coupled to a controller hub 2120. In one embodiment the controller hub 2120 includes a graphics memory controller hub (GMCH) 2190 and an Input/Output Hub (IOH) 2150 (which may be on separate chips); the GMCH 2190 includes memory and graphics controllers to which are coupled memory 2140 and a coprocessor 2145; the IOH 2150 is couples input/output (I/O) devices 2160 to the GMCH 2190. Alternatively, one or both of the memory and graphics controllers are integrated within the processor (as described herein), the memory 2140 and the coprocessor 2145 are coupled directly to the processor 2110, and the controller hub 2120 in a single chip with the IOH 2150.

The optional nature of additional processors 2115 is denoted in **Figure 21** with broken lines. Each processor 2110, 2115 may include one or more of the processing cores described herein and may be some version of the processor 2000.

The memory 2140 may be, for example, dynamic random access memory (DRAM), phase change memory (PCM), or a combination of the two. For at least one embodiment, the controller hub 2120 communicates with the processor(s) 2110, 2115 via a multi-drop bus, such as a frontside bus (FSB), point-to-point interface such as QuickPath Interconnect (QPI), or similar connection 2195.

In one embodiment, the coprocessor 2145 is a special-purpose processor, such as, for example, a high-throughput MIC processor, a network or communication processor, compression engine, graphics processor, GPGPU, embedded processor, or the like. In one embodiment, controller hub 2120 may include an integrated graphics accelerator.

There can be a variety of differences between the physical resources 2110, 2115 in terms of a spectrum of metrics of merit including architectural, microarchitectural, thermal, power consumption characteristics, and the like.

In one embodiment, the processor 2110 executes instructions that control data processing operations of a general type. Embedded within the instructions may be coprocessor instructions. The processor 2110 recognizes these coprocessor instructions as being of a type that should be executed by the attached coprocessor 2145. Accordingly, the processor 2110 issues these coprocessor instructions (or control signals representing coprocessor instructions) on a coprocessor bus or other interconnect, to coprocessor 2145. Coprocessor(s) 2145 accept and execute the received coprocessor instructions.

Referring now to **Figure 22,** shown is a block diagram of a first more specific exemplary system 2200 in accordance with an embodiment of the present invention. As shown in **Figure 22,** multiprocessor system 2200 is a point-to-point interconnect system, and includes a first processor 2270 and a second processor 2280 coupled via a point-to-point interconnect 2250. Each of processors 2270 and 2280 may be some version of the processor 2000. In one embodiment of the invention, processors 2270 and 2280 are respectively processors 2110 and 2115, while coprocessor 2238 is coprocessor 2145. In another embodiment, processors 2270 and 2280 are respectively processor 2110 coprocessor 2145.

Processors 2270 and 2280 are shown including integrated memory controller (IMC) units 2272 and 2282, respectively. Processor 2270 also includes as part of its bus controller units point-to-point (P-P) interfaces 2276 and 2278; similarly, second processor 2280 includes P-P interfaces 2286 and 2288. Processors 2270, 2280 may exchange information via a point-to-point (P-P) interface 2250 using P-P interface circuits 2278, 2288. As shown in **Figure 22,** IMCs 2272 and 2282 couple the processors to respective memories, namely a memory 2232 and a memory 2234, which may be portions of main memory locally attached to the respective processors.

Processors 2270, 2280 may each exchange information with a chipset 2290 via individual P-P interfaces 2252, 2254 using point to point interface circuits 2276, 2294, 2286, 2298. Chipset 2290 may optionally exchange information with the coprocessor 2238 via a high-performance interface 2239. In one embodiment, the coprocessor 2238 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 2290 may be coupled to a first bus 2216 via an interface 2296. In one embodiment, first bus 2216 may be a Peripheral Component Interconnect (PCI) bus, or a bus such as a PCI Express bus or another third generation I/O interconnect bus, although the scope of the present invention is not so limited.

As shown in **Figure 22,** various I/O devices 2214 may be coupled to first bus 2216, along with a bus bridge 2218 which couples first bus 2216 to a second bus 2220. In one embodiment, one or more additional processor(s) 2215, such as coprocessors, high-throughput MIC processors, GPGPU's, accelerators (such as, e.g., graphics accelerators or digital signal processing (DSP) units), field programmable gate arrays, or any other processor, are coupled to first bus 2216. In one embodiment, second bus 2220 may be a low pin count (LPC) bus. Various devices may be coupled to a second bus 2220 including, for example, a keyboard and/or mouse 2222, communication devices 2227 and a storage unit 2228 such as a disk drive or other mass storage device which may include instructions/code and data 2230, in one embodiment. Further, an audio I/O 2224 may be coupled to the second bus 2220. Note that other architectures are possible. For example, instead of the point-to-point architecture of **Figure 22,** a system may implement a multi-drop bus or other such architecture.

Referring now to **Figure 23,** shown is a block diagram of a second more specific exemplary system 2300 in accordance with an embodiment of the present invention. Like elements in **Figures 22 and 23** bear like reference numerals, and certain aspects of **Figure 22** have been omitted from **Figure 23** in order to avoid obscuring other aspects of **Figure 23.**

**Figure 23** illustrates that the processors 2270, 2280 may include integrated memory and I/O control logic ("CL") 2272 and 2282, respectively. Thus, the CL 2272, 2282 include integrated memory controller units and include I/O control logic. **Figure 23** illustrates that not only are the memories 2232, 2234 coupled to the CL 2272, 2282, but also that I/O devices 2314 are also coupled to the control logic 2272, 2282. Legacy I/O devices 2315 are coupled to the chipset 2290.

Referring now to **Figure 24,** shown is a block diagram of a SoC 2400 in accordance with an embodiment of the present invention. Similar elements in **Figure 20** bear like reference numerals. Also, dashed lined boxes are optional features on more advanced SoCs. In **Figure 24,** an interconnect unit(s) 2402 is coupled to: an application processor 2410 which includes a set of one or more cores 202A-N and shared cache unit(s) 2006; a system agent unit 2010; a bus controller unit(s) 2016; an integrated memory controller unit(s) 2014; a set or one or more coprocessors 2420 which may include integrated graphics logic, an image processor, an audio processor, and a video processor; an static random access memory (SRAM) unit 2430; a direct memory access (DMA) unit 2432; and a display unit 2440 for coupling to one or more external displays. In one embodiment, the coprocessor(s) 2420 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 2230 illustrated in **Figure 22,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

**Figure 25** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 25** shows a program in a high level language 2502 may be compiled using an x86 compiler 2504 to generate x86 binary code 2506 that may be natively executed by a processor with at least one x86 instruction set core 2516. The processor with at least one x86 instruction set core 2516 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2504 represents a compiler that is operable to generate x86 binary code 2506 (e.g., object code) that can, with or without additional linkage processing, be executed on the processor with at least one x86 instruction set core 2516. Similarly, **Figure 25** shows the program in the high level language 2502 may be compiled using an alternative instruction set compiler 2508 to generate alternative instruction set binary code 2510 that may be natively executed by a processor without at least one x86 instruction set core 2514 (e.g., a processor with cores that execute the MIPS instruction set of MIPS Technologies of Sunnyvale, CA and/or that execute the ARM instruction set of ARM Holdings of Sunnyvale, CA). The instruction converter 2512 is used to convert the x86 binary code 2506 into code that may be natively executed by the processor without an x86 instruction set core 2514. This converted code is not likely to be the same as the alternative instruction set binary code 2510 because an instruction converter capable of this is difficult to make; however, the converted code will accomplish the general operation and be made up of instructions from the alternative instruction set. Thus, the instruction converter 2512 represents software, firmware, hardware, or a combination thereof that, through emulation, simulation or any other process, allows a processor or other electronic device that does not have an x86 instruction set processor or core to execute the x86 binary code 2506.

In the description and claims, the terms "coupled" and/or "connected," along with their derivatives, have be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. For example, an execution unit may be coupled with a register or a decoder through one or more intervening components. In the figures, arrows are used to show couplings and/or connections.

In the description above, specific details have been set forth in order to provide a thorough understanding of the embodiments. However, other embodiments may be practiced without some of these specific details. The scope of the invention is not to be determined by the specific examples provided above but only by the claims below. All equivalent relationships to those illustrated in the drawings and described in the specification are encompassed within embodiments. In other instances, well-known circuits, structures, devices, and operations have been shown in block diagram form or without detail in order to avoid obscuring the understanding of the description.

Certain methods disclosed herein have been shown and described in a basic form, although operations may optionally be added to and/or removed from the methods. In addition, a particular order of the operations may have been shown and/or described, although alternate embodiments may perform certain operations in different order, combine certain operations, overlap certain operations, etc.

Certain operations may be performed by hardware components and/or may be embodied in a machine-executable or circuit-executable instruction that may be used to cause and/or result in a hardware component (e.g., a processor, potion of a processor, circuit, etc.) programmed with the instruction performing the operations. The hardware component may include a general-purpose or special-purpose hardware component. The operations may be performed by a combination of hardware, software, and/or firmware. The hardware component may include specific or particular logic (e.g., circuitry potentially combined with software and/or firmware) that is operable to execute and/or process the instruction and store a result in response to the instruction (e.g., in response to one or more microinstructions or other control signals derived from the instruction).

Reference throughout this specification to "one embodiment," "an embodiment," "one or more embodiments," "some embodiments," for example, indicates that a particular feature may be included in the practice of the invention but is not necessarily required to be. Similarly, in the description various features are sometimes grouped together in a single embodiment, Figure, or description thereof for the purpose of streamlining the disclosure and aiding in the understanding of various inventive aspects. This method of disclosure, however, is not to be interpreted as reflecting an intention that the invention requires more features than are expressly recited in each claim. Rather, as the following claims reflect, inventive aspects lie in less than all features of a single disclosed embodiment. Thus, the claims following the Detailed Description are hereby expressly incorporated into this Detailed Description, with each claim standing on its own as a separate embodiment of the invention.

## Claims

**1.** A method (315) comprising:

receiving (316) a dot product instruction (203), the dot product instruction indicating a first source packed data (210, 411) including at least four data elements of a fixed size, indicating a second source packed (211,411) data including at least sixteen data elements of a variable size of either only 2-bits or only 4-bits, wherein the dot product instruction has a field (824) to specify the size of the data elements of the second source packed data, wherein the size of the data elements of the second source packed data are no more than one quarter a size of the data elements of the first source packed data, and indicating a destination storage location (213); and storing (317) a result packed data (212, 412, 512A/B, 712) in the destination storage location in response to the dot product instruction, the result packed data including at least four data elements (R0, R1, R2, R3) that each include either a dot product result or a saturation value if the dot product result exceeds a maximum value that can be stored in the associated data elements available number of bits, each of the dot product results including a sum of products of the at least four data elements of the first source packed data with corresponding data elements in a different non-overlapping subset of at least four data elements of the second source packed data.

**2.** The method of claim 1, wherein receiving comprises receiving the dot product instruction that indicates the second source packed data (711) including the data elements having the size of said only two bits and that indicates the first source packed (710) data including data elements having the size of at least eight bits.

**3.** The method of claim 1, wherein receiving comprises receiving the dot product instruction that indicates the second source packed data (611) including the data elements having the size of said only four bits and that indicates the first source packed data (610) including the data elements having the size of at least eight bits.

**4.** The method of claim 1, wherein receiving comprises receiving the dot product instruction that indicates the first source packed data (610, 710) including at least sixteen data elements and, wherein storing comprises storing a dot product result based on a sum of at least sixteen products.

**5.** The method of claim 1, wherein storing comprises storing a first dot product result (R0) including a sum of products of the at least four data elements of the first source packed data (510, 710) with corresponding data elements in a lower quarter of the second source packed data (511, 711), and a second dot product result (R2) including a sum of products of the at least four data elements of the first source packed data (510, 710) with corresponding data elements in an upper quarter of the second source packed data (511, 711).

**6.** The method of claim 1, wherein receiving comprises receiving the dot product instruction indicating (1030) a predicate mask (1106), and wherein storing comprises conditionally storing data elements that include dot product results according to the predicate mask.

**7.** An apparatus comprising:

a plurality of packed data registers (205); and
an execution unit (207) coupled with the plurality of the packed data registers, the execution unit operable, in response to a dot product instruction (203) that is to indicate a first source packed data (210, 411) including at least four data elements of a fixed size, that is to indicate a second source packed data (211, 411) including at least sixteen data elements of a variable size of either only 2-bits or only 4-bits, wherein the dot product instruction has a field (824) to specify the size of the data elements of the second source packed data, wherein the size of the data elements of the second source packed data are to be no more than one quarter a size of the data elements of the first source packed data, and that is to indicate a destination storage location (213), to store a result packed data (212, 412, 512A/B, 712) in the destination storage location, the result packed data to include at least four data elements (R0, R1, R2, R3) that each are to include either a dot product result or a saturation value if the dot product result exceeds a maximum value that can be stored in the associated data elements available number of bits, each of the dot product results to include a sum of products of the at least four data elements of the first source packed data with corresponding data elements in a different non-overlapping subset of at least four data elements of the second source packed data.

**8.** The apparatus of claim 7, wherein the execution unit is to store the result packed data in response to the dot product instruction that is to indicate the second source packed data (711) that is to include the data elements having the size of said only two bits and that is to indicate the first source packed data (710) that is to include the data elements having the size of at least eight bits.

**9.** The apparatus of claim 7, wherein the execution unit is to store the result packed data in response to the dot product instruction that is to indicate the second source packed data (611) that is to include the data elements having the size of said only four bits and that is to indicate the first source packed data (610) that is to include the data elements having the size of at least eight bits.

**10.** The apparatus of claim 7, wherein the execution unit is to store the result packed data in response to the dot product instruction that is to indicate the first source packed data (610, 710) that is to include at least sixteen data elements and, wherein the result packed data is to include a dot product result that is based on a sum of at least sixteen products.

**11.** The apparatus of claim 7, wherein the execution unit, in response to the dot product instruction, is to store a first dot product result (R0) that is to include a sum of products of the at least four data elements of the first source packed data (510, 710) with corresponding data elements in a lower quarter of the second source packed data (511, 711), and a second dot product result (R2) that is to include a sum of products of the at least four data elements of the first source packed data with corresponding data elements in an upper quarter of the second source packed data (511, 711).

**12.** The apparatus of claim 7, wherein the execution unit is to store the result packed data in response to the dot product instruction that is to indicate (1030) a predicate mask (1106), and wherein the execution unit is to conditionally store data elements that include dot product results according to the predicate mask.

## Patentansprüche

**1.** Verfahren (315), umfassend:

Erhalten (316) einer Skalarproduktanweisung (203), wobei die Skalarproduktanweisung erste gepackte Quelldaten (210, 411) angibt, die mindestens vier Datenelemente einer fixen Größe aufweisen, zweite gepackte Quelldaten (211, 411) angibt, die mindestens sechzehn Datenelemente einer variablen Größe von entweder nur 2 Bits oder nur 4 Bits aufweisen, wobei die Skalarproduktanweisung ein Feld (824) zum Spezifizieren der Größe der Datenelemente der zweiten gepackten Quelldaten aufweist, wobei die Größe der Datenelemente der zweiten gepackten Quelldaten nicht mehr als ein Viertel einer Größe der Datenelemente der ersten gepackten Quelldaten beträgt, und einen Zielspeicherort (213) angibt; und
Speichern (317) von gepackten Ergebnisdaten (212, 412, 512A/B, 712) in dem Zielspeicherort als Reaktion auf die Skalarproduktanweisung, wobei die gepackten Ergebnisdaten mindestens vier Datenelemente (R0, R1, R2, R3) aufweisen, die jeweils entweder ein Skalarproduktergebnis oder einen Sättigungswert, wenn das Skalarproduktergebnis einen maximalen Wert überschreitet, der in der verfügbaren Anzahl an Bits der zugehörigen Datenelemente gespeichert werden kann, aufweisen, wobei jedes der Skalarproduktergebnisse eine Summe von Produkten der mindestens vier Datenelemente der ersten gepackten Quelldaten mit entsprechenden Datenelementen in einer anderen nicht überlappenden Untergruppe von mindestens vier Datenelementen der zweiten gepackten Quelldaten aufweist.

**2.** Verfahren nach Anspruch 1, wobei das Erhalten das Erhalten der Skalarproduktanweisung umfasst, die angibt, dass die zweiten gepackten Quelldaten (711) die Datenelemente aufweisen, die die Größe der nur zwei Bits aufweisen, und die angibt, dass die ersten gepackten Quelldaten (710) Datenelemente aufweisen, die die Größe von mindestens acht Bits aufweisen.

**3.** Verfahren nach Anspruch 1, wobei das Erhalten das Erhalten der Skalarproduktanweisung umfasst, die angibt, dass die zweiten gepackten Quelldaten (611) die Datenelemente aufweisen, die die Größe der nur vier Bits aufweisen, und die angibt, dass die ersten gepackten Quelldaten (610) die Datenelemente aufweisen, die die Größe von mindestens acht Bits aufweisen.

**4.** Verfahren nach Anspruch 1, wobei das Erhalten das Erhalten der Skalarproduktanweisung umfasst, die angibt, dass die ersten gepackten Quelldaten (610, 710) mindestens sechszehn Datenelemente aufweisen, und wobei das Speichern das Speichern eines Skalarproduktergebnisses basierend auf einer Summe von mindestens sechzehn Produkten umfasst.

**5.** Verfahren nach Anspruch 1, wobei das Speichern das Speichern eines ersten Skalarproduktergebnisses (R0), das eine Summe von Produkten der mindestens vier Datenelemente der ersten gepackten Quelldaten (510, 710) mit entsprechenden Datenelementen in einem unteren Viertel der zweiten gepackten Quelldaten (511, 711) aufweist, und eines zweiten Skalarproduktergebnisses (R2), das eine Summe von Produkten der mindestens vier Datenelemente der ersten gepackten Quelldaten (510, 710) mit entsprechenden Datenelementen in einem oberen Viertel der zweiten gepackten Quelldaten (511, 711) aufweist, umfasst.

6. Verfahren nach Anspruch 1, wobei das Erhalten das Erhalten der Skalarproduktanweisung umfasst, die eine Prädikatmaske (1106) angibt (1030), und wobei das Speichern das Speichern unter Vorbehalt von Datenelementen, die Skalarproduktergebnisse aufweisen, gemäß der Prädikatmaske umfasst.

7. Vorrichtung, die Folgendes aufweist:

mehrere gepackte Datenregister (205); und
eine Ausführungseinheit (207), die mit den mehreren gepackten Datenregistern gekoppelt ist, wobei die Ausführungseinheit als Reaktion auf eine Skalarproduktanweisung (203), die erste gepackte Quelldaten (210, 411) angibt, die mindestens vier Datenelemente einer fixen Größe aufweisen, die zweite gepackte Quelldaten (211, 411) angibt, die mindestens sechzehn Datenelemente einer variablen Größe von entweder nur 2 Bits oder nur 4 Bits aufweisen, betrieben werden kann, wobei die Skalarproduktanweisung ein Feld (824) zum Spezifizieren der Größe der Datenelemente der zweiten gepackten Quelldaten aufweist, wobei die Größe der Datenelemente der zweiten gepackten Quelldaten nicht größer als ein Viertel einer Größe der Datenelemente der ersten gepackten Quelldaten sein soll, und einen Zielspeicherort (213) angibt, um gepackte Ergebnisdaten (212, 412, 512A/B, 712) in dem Zielspeicherort zu speichern, wobei die gepackten Ergebnisdaten mindestens vier Datenelemente (R0, R1, R2, R3) aufweisen, die jeweils entweder ein Skalarproduktergebnis oder einen Sättigungswert, wenn das Skalarproduktergebnis einen maximalen Wert überschreitet, der in der verfügbaren Anzahl an Bits der zugehörigen Datenelemente gespeichert werden kann, aufweisen, wobei jedes der Skalarproduktergebnisse eine Summe von Produkten der mindestens vier Datenelemente der ersten gepackten Quelldaten mit entsprechenden Datenelementen in einer anderen nicht überlappenden Untergruppe von mindestens vier Datenelementen der zweiten gepackten Quelldaten aufweist.

8. Vorrichtung nach Anspruch 7, wobei die Ausführungseinheit die gepackten Ergebnisdaten als Reaktion auf die Skalarproduktanweisung, die die zweiten gepackten Quelldaten (711) angibt, die die Datenelemente aufweisen, die die Größe der nur zwei Bits aufweisen, und die die ersten gepackten Quelldaten (710) angibt, die die Datenelemente aufweisen, die die Größe von mindestens acht Bits aufweisen, speichert.

9. Vorrichtung nach Anspruch 7, wobei die Ausführungseinheit die gepackten Ergebnisdaten als Reaktion auf die Skalarproduktanweisung, die die zweiten gepackten Quelldaten (611) angibt, die die Datenelemente aufweisen, die die Größe der nur vier Bits aufweisen, und die die ersten gepackten Quelldaten (610) angibt, die die Datenelemente aufweisen, die die Größe von mindestens acht Bits aufweisen, speichert.

10. Vorrichtung nach Anspruch 7, wobei die Ausführungseinheit die gepackten Ergebnisdaten als Reaktion auf die Skalarproduktanweisung, die die ersten gepackten Quelldaten (610, 710) angibt, die mindestens sechzehn Datenelemente aufweisen, speichert, und wobei die gepackten Ergebnisdaten ein Skalarproduktergebnis aufweisen, das auf einer Summe von mindestens sechzehn Produkten basiert.

11. Vorrichtung nach Anspruch 7, wobei die Ausführungseinheit als Reaktion auf die Skalarproduktanweisung ein erstes Skalarproduktergebnis (R0), das eine Summe von Produkten der mindestens vier Datenelemente der ersten gepackten Quelldaten (510, 710) mit entsprechenden Datenelementen in einem unteren Viertel der zweiten gepackten Quelldaten (511, 711) aufweist, und ein zweites Skalarproduktergebnis (R2), das eine Summe von Produkten der mindestens vier Datenelemente der ersten gepackten Quelldaten mit entsprechenden Datenelementen in einem oberen Viertel der zweiten gepackten Quelldaten (511, 711) aufweist, speichert.

12. Vorrichtung nach Anspruch 7, wobei die Ausführungseinheit die gepackten Ergebnisdaten als Reaktion auf die Skalarproduktanweisung, die eine Prädikatmaske (1106) angibt (1030), speichert, und wobei die Ausführungseinheit Datenelemente, die Skalarproduktergebnisse aufweisen, unter Vorbehalt gemäß der Prädikatmaske speichert.

**Revendications**

1. Procédé (315) consistant
à recevoir (316) une instruction de produit scalaire (203), l'instruction de produit scalaire indiquant une première donnée condensée source (210, 411) comprenant au moins quatre éléments de données d'une taille fixe, indiquant une seconde donnée condensée source (211, 411) comprenant au moins seize éléments de données d'une taille variable soit seulement de 2 bits, soit seulement de 4 bits, dans lequel l'instruction de produit scalaire comporte un champ (824) pour spécifier la taille des éléments de données de la seconde donnée condensée source, dans lequel la taille des éléments de données de la seconde donnée condensée source est inférieure ou égale à un quart de la taille des éléments de données de la première donnée condensée source et indiquant un emplacement de stockage de destination (213) ; et
à stocker (317) une donnée condensée de résultat (212, 412, 512A/512B, 712) à l'emplacement de stockage de destination à la suite de l'instruction de produit scalaire, la donnée condensée de résultat comprenant au moins quatre éléments de données (R0, R1, R2, R3) qui comprennent chacun soit un résultat de produit scalaire, soit une valeur de saturation si le résultat de produit scalaire dépasse une valeur maximale qui peut être stockée dans le nombre de bits disponibles des éléments de données associés, chacun des résultats de produit scalaire comprenant une somme de produits des quatre, ou plus, éléments de données de la première donnée condensée source avec des éléments de données correspondants dans un autre sous-ensemble non chevauchant d'au moins quatre éléments de données de la seconde donnée condensée source.

**2.** Procédé selon la revendication 1, dans lequel la réception consiste à recevoir l'instruction de produit scalaire qui indique la seconde donnée condensée source (711) comprenant les éléments de données ayant la taille desdits seuls deux bits et qui indique la première donnée condensée source (710) comprenant des éléments de données ayant la taille d'au moins huit bits.

**3.** Procédé selon la revendication 1, dans lequel la réception consiste à recevoir l'instruction de produit scalaire qui indique la seconde donnée condensée source (611) comprenant les éléments de données ayant la taille desdits seuls quatre bits et qui indique la première donnée condensée source (610) comprenant les éléments de données ayant la taille d'au moins huit bits.

**4.** Procédé selon la revendication 1, dans lequel la réception consiste à recevoir l'instruction de produit scalaire qui indique la première donnée condensée source (610, 710) comprenant au moins seize éléments de données et dans lequel le stockage consiste à stocker un résultat de produit scalaire en se basant sur une somme d'au moins seize produits.

**5.** Procédé selon la revendication 1, dans lequel le stockage consiste à stocker un premier résultat de produit scalaire (R0) comprenant une somme de produits des quatre, ou plus, éléments de données de la première donnée condensée source (510, 710) avec des éléments de données correspondants dans un quart inférieur de la seconde donnée condensée source (511, 711) et un second résultat de produit scalaire (R2) comprenant une somme de produits des quatre, ou plus, éléments de données de la première donnée condensée source (510, 710) avec des éléments de données correspondants dans un quart supérieur de la seconde donnée condensée source (511, 711).

**6.** Procédé selon la revendication 1, dans lequel la réception consiste à recevoir l'instruction de produit scalaire indiquant (1030) un masque de prédicat (1106) et dans lequel le stockage consiste à stocker de manière conditionnelle des éléments de données qui comprennent des résultats de produit scalaire en fonction du masque de prédicat.

**7.** Appareil comprenant :

une pluralité de registres de données condensées (205) ; et
une unité d'exécution (207) couplée à la pluralité de registres de données condensées, l'unité d'exécution permettant, à la suite d'une instruction de produit scalaire (203) qui doit indiquer une première donnée condensée source (210, 411) comprenant au moins quatre éléments de données d'une taille fixe, qui doit indiquer une seconde donnée condensée source (211, 411) comprenant au moins seize éléments de données d'une taille variable soit seulement de 2 bits, soit seulement de 4 bits, dans lequel l'instruction de produit scalaire comporte un champ (824) pour spécifier la taille des éléments de données de la seconde donnée condensée source, dans lequel la taille des éléments de données de la seconde donnée condensée source doit être inférieure ou égale à un quart de la taille des éléments de données de la première donnée condensée source et qui doit indiquer un emplacement de stockage de destination (213), de stocker une donnée condensée de résultat (212, 412, 512A/512B, 712) à l'emplacement de stockage de destination, la donnée condensée de résultat étant destinée à comprendre au moins quatre éléments de données (R0, R1, R2, R3) qui doivent chacun comprendre soit un résultat de produit scalaire, soit une valeur de saturation si le résultat de produit scalaire dépasse une valeur maximale qui peut être stockée dans le nombre de bits disponibles des éléments de données associés, chacun des résultats de produit scalaire étant destiné à comprendre une somme de produits des quatre, ou plus, éléments de données de la première donnée condensée source avec des éléments de données correspondants dans un autre sous-ensemble non chevauchant d'au moins quatre éléments de données de la seconde donnée condensée source.

**8.** Appareil selon la revendication 7, dans lequel l'unité d'exécution est destinée à stocker la donnée condensée de résultat à la suite de l'instruction de produit scalaire qui doit indiquer la seconde donnée condensée source (711) qui doit comprendre les éléments de données ayant la taille desdits seuls deux bits et qui doit indiquer la première donnée condensée source (710) qui doit comprendre les éléments de données ayant la taille d'au moins huit bits.

**9.** Appareil selon la revendication 7, dans lequel l'unité d'exécution est destinée à stocker la donnée condensée de résultat à la suite de l'instruction de produit scalaire qui doit indiquer la seconde donnée condensée source (611) qui doit comprendre les éléments de données ayant la taille desdits seuls quatre bits et qui doit indiquer la première donnée condensée source (610) qui doit comprendre les éléments de données ayant la taille d'au moins huit bits.

**10.** Appareil selon la revendication 7, dans lequel l'unité d'exécution est destinée à stocker la donnée condensée de résultat à la suite de l'instruction de produit scalaire qui doit indiquer la première donnée condensée source (610, 710) qui doit comprendre au moins seize éléments de données et dans lequel la donnée condensée de résultat doit comprendre un résultat de produit scalaire qui est basé sur une somme d'au moins seize produits.

**11.** Appareil selon la revendication 7, dans lequel l'unité d'exécution est destinée, à la suite de l'instruction de produit scalaire, à stocker un premier résultat de produit scalaire (R0) qui doit comprendre une somme de produits des quatre, ou plus, éléments de données de la première donnée condensée source (510, 710) avec des éléments de données correspondants dans un quart inférieur de la seconde donnée condensée source (511, 711), et un second résultat de produit scalaire (R2) qui doit comprendre une somme de produits des quatre, ou plus, éléments de données de la première donnée condensée source avec des éléments de données correspondants dans un quart supérieur de la seconde donnée condensée source (511, 711).

**12.** Appareil selon la revendication 7, dans lequel l'unité d'exécution est destinée à stocker la donnée condensée de résultat à la suite de l'instruction de produit scalaire qui doit indiquer (1030) un masque de prédicat (1106) et dans lequel l'unité d'exécution est destinée à stocker de manière conditionnelle des éléments de données qui comprennent des résultats de produit scalaire en fonction du masque de prédicat.

FIG. 1

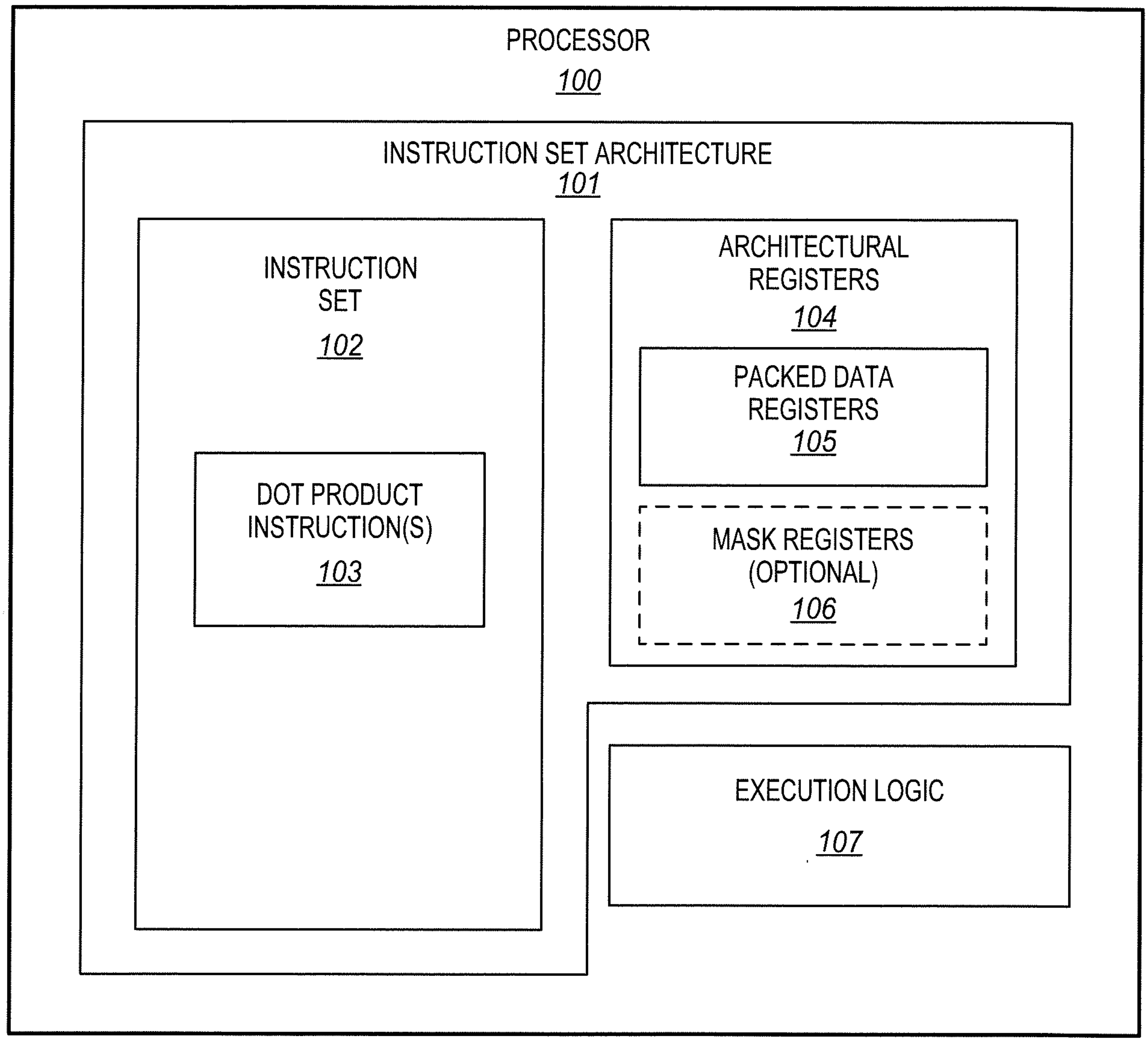
PROCESSOR
100
INSTRUCTION SET ARCHITECTURE
101
INSTRUCTION SET
102
DOT PRODUCT INSTRUCTION(S)
103
ARCHITECTURAL REGISTERS
104
PACKED DATA REGISTERS
105
MASK REGISTERS (OPTIONAL)
106
EXECUTION LOGIC
107

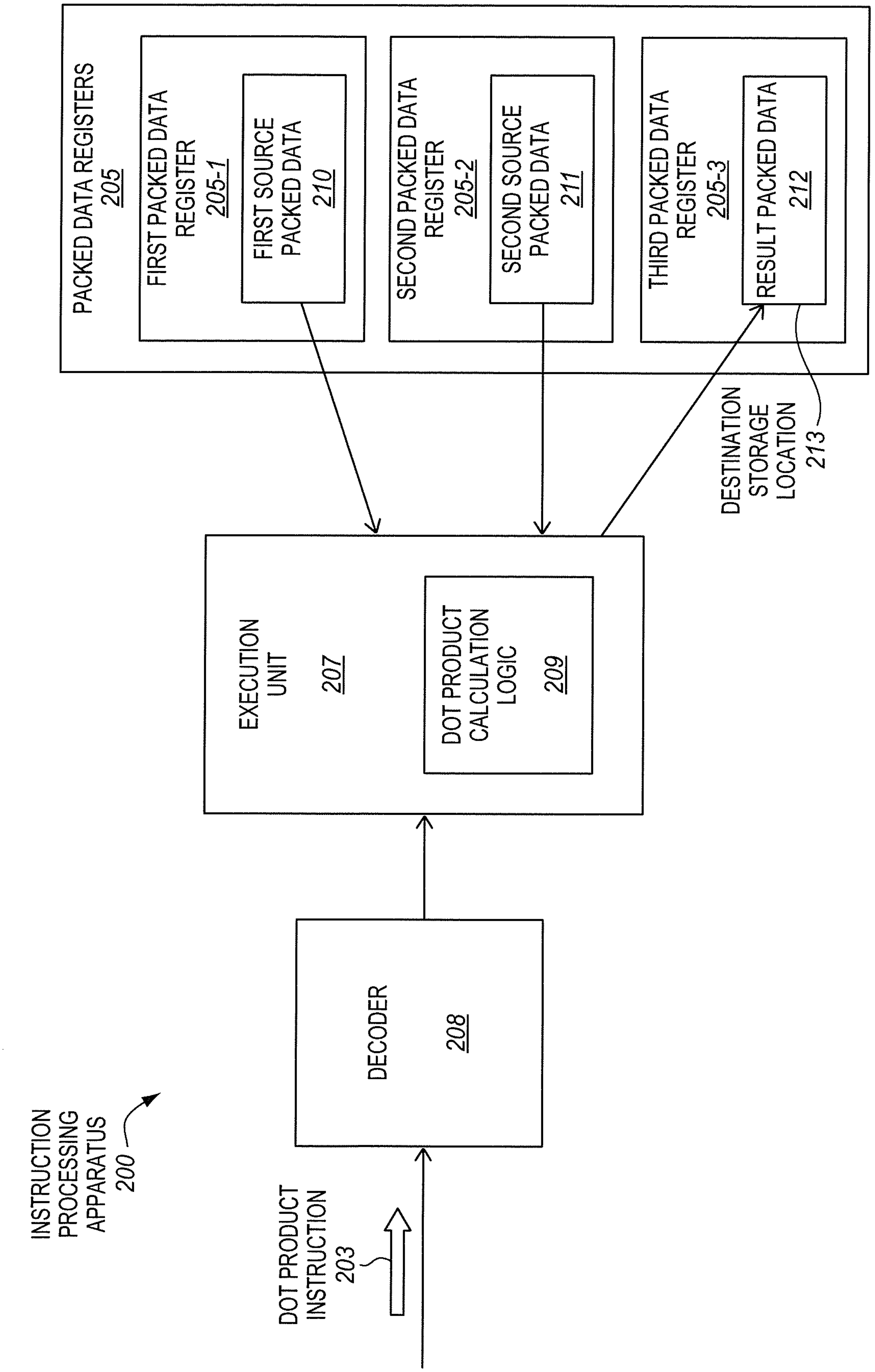
PACKED DATA REGISTERS
205
FIRST PACKED DATA
REGISTER
205-1
FIRST SOURCE
PACKED DATA
210
SECOND PACKED DATA
REGISTER
205-2
SECOND SOURCE
PACKED DATA
211
THIRD PACKED DATA
REGISTER
205-3
RESULT PACKED DATA
212
DESTINATION
STORAGE
LOCATION
213
EXECUTION
UNIT
207
DOT PRODUCT
CALCULATION
LOGIC
209
DECODER
208
INSTRUCTION
PROCESSING
APPARATUS
200
DOT PRODUCT
INSTRUCTION
203

FIG. 2

FIG. 3

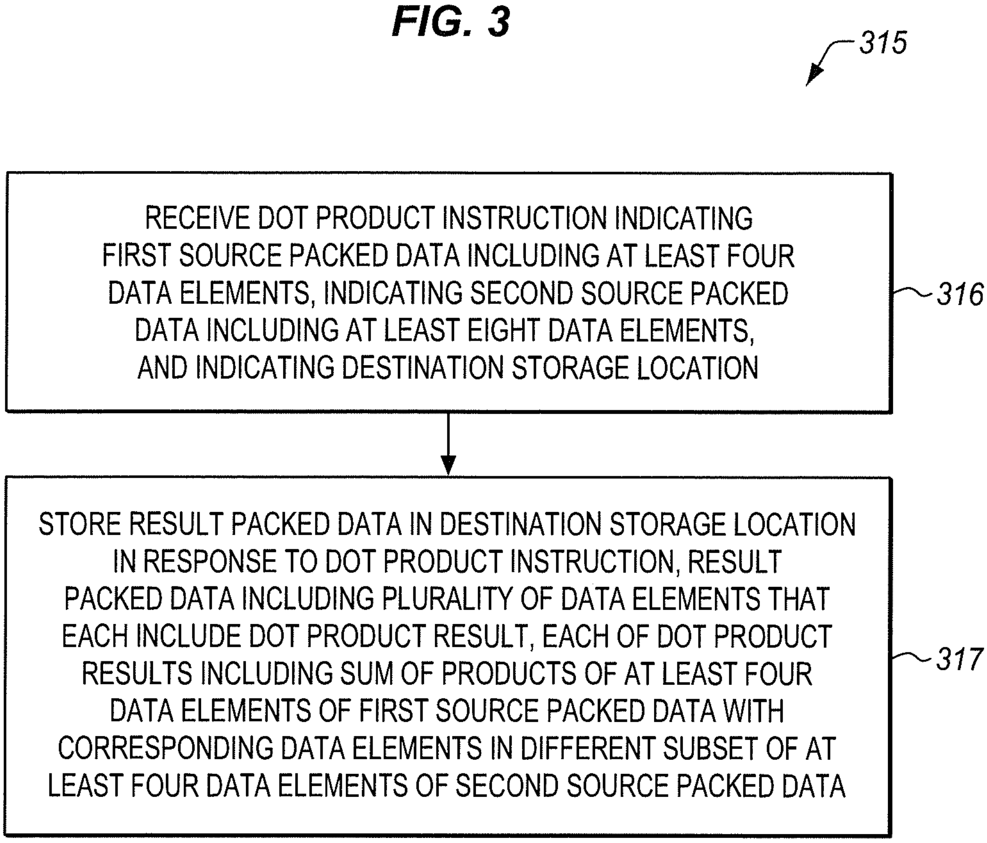
315
RECEIVE DOT PRODUCT INSTRUCTION INDICATING FIRST SOURCE PACKED DATA INCLUDING AT LEAST FOUR DATA ELEMENTS, INDICATING SECOND SOURCE PACKED DATA INCLUDING AT LEAST EIGHT DATA ELEMENTS, AND INDICATING DESTINATION STORAGE LOCATION
316
STORE RESULT PACKED DATA IN DESTINATION STORAGE LOCATION IN RESPONSE TO DOT PRODUCT INSTRUCTION, RESULT PACKED DATA INCLUDING PLURALITY OF DATA ELEMENTS THAT EACH INCLUDE DOT PRODUCT RESULT, EACH OF DOT PRODUCT RESULTS INCLUDING SUM OF PRODUCTS OF AT LEAST FOUR DATA ELEMENTS OF FIRST SOURCE PACKED DATA WITH CORRESPONDING DATA ELEMENTS IN DIFFERENT SUBSET OF AT LEAST FOUR DATA ELEMENTS OF SECOND SOURCE PACKED DATA
317

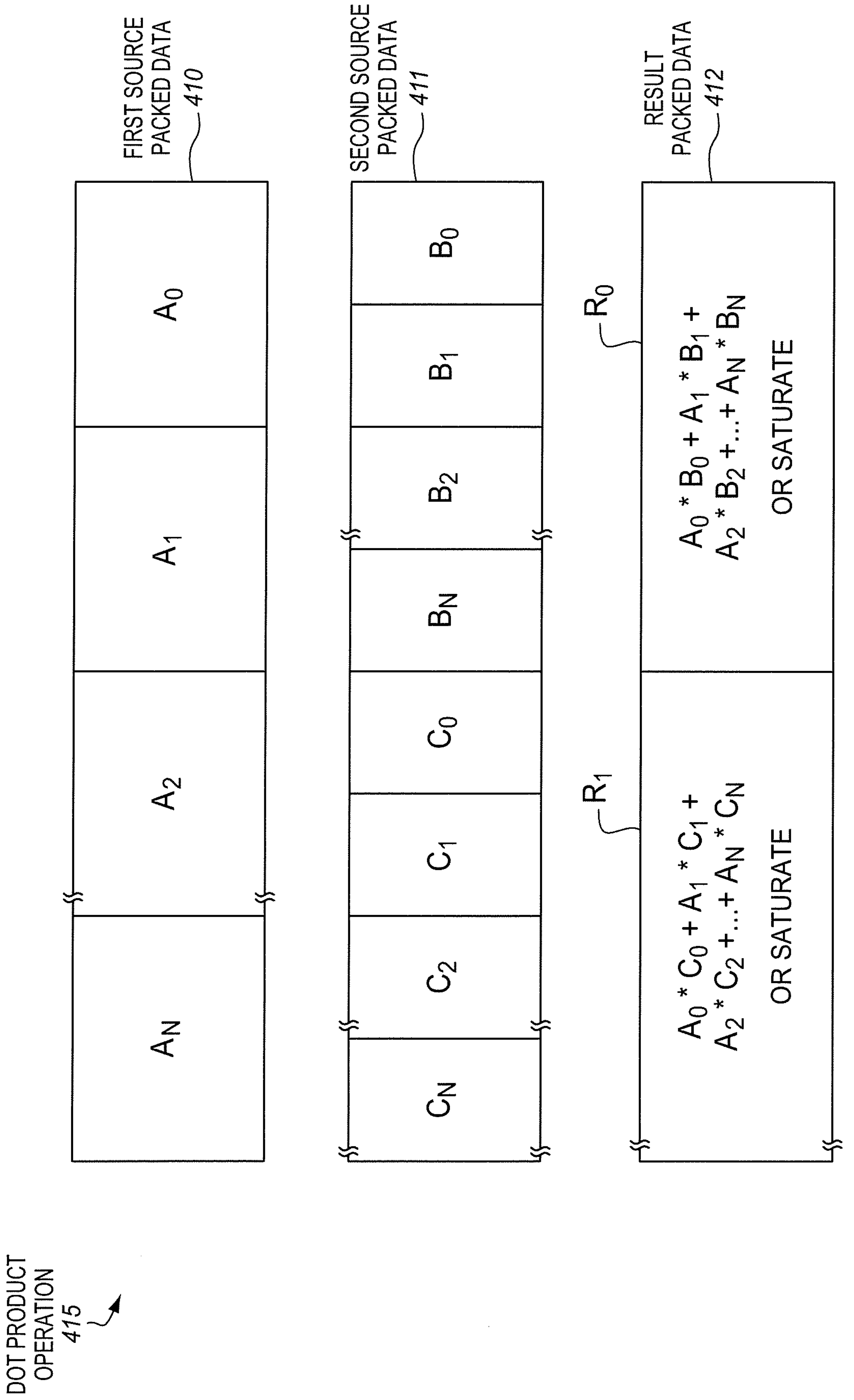
FIRST SOURCE PACKED DATA 410
SECOND SOURCE PACKED DATA 411
RESULT PACKED DATA 412
$A_0$
$A_1$
$A_2$
$A_N$
$B_0$
$B_1$
$B_2$
$B_N$
$C_0$
$C_1$
$C_2$
$C_N$
$R_0$
$R_1$
$A_0 * B_0 + A_1 * B_1 + A_2 * B_2 + ... + A_N * B_N$
OR SATURATE
$A_0 * C_0 + A_1 * C_1 + A_2 * C_2 + ... + A_N * C_N$
OR SATURATE
DOT PRODUCT OPERATION 415

FIG. 4

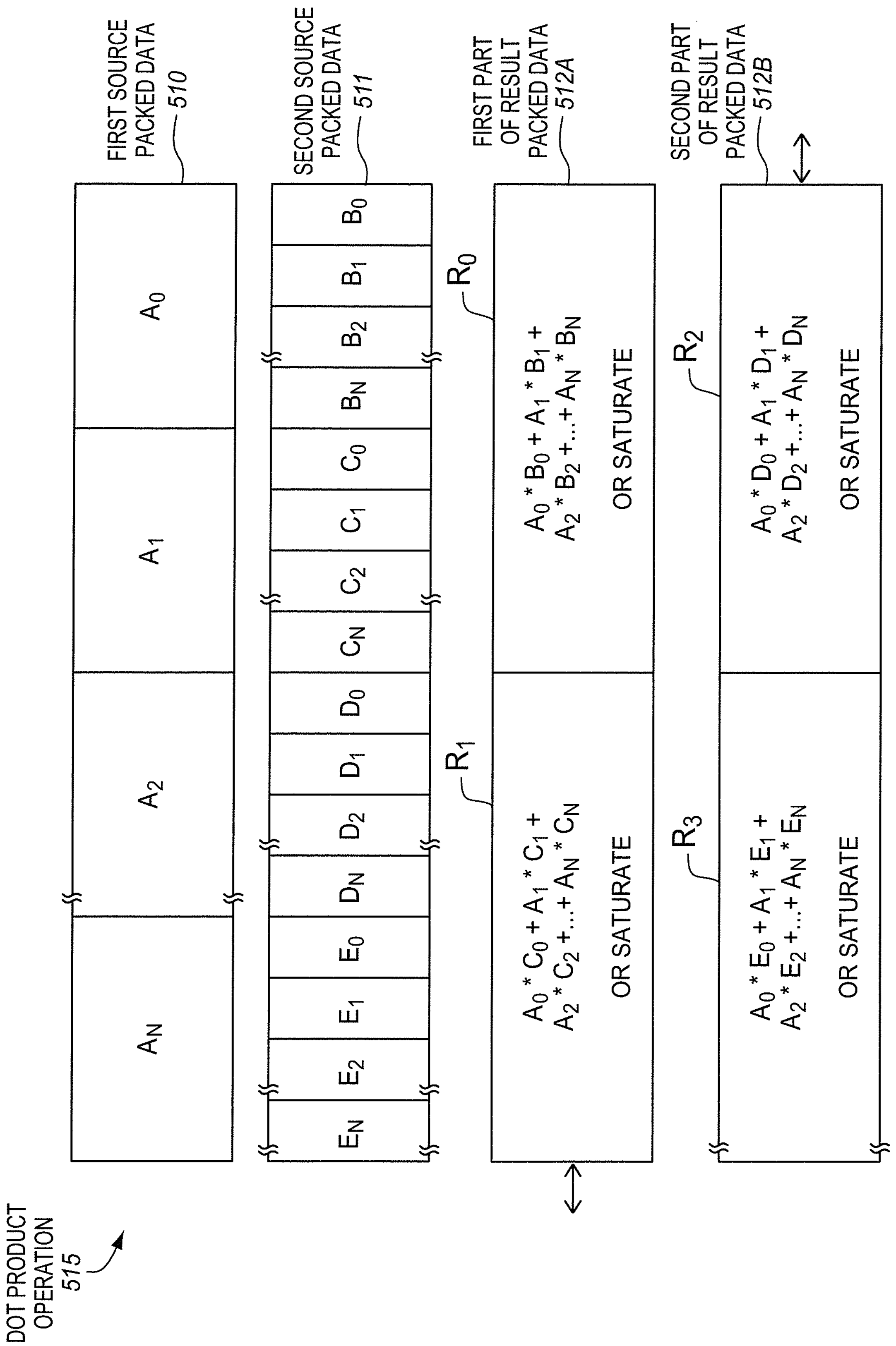
DOT PRODUCT OPERATION 515
FIRST SOURCE PACKED DATA 510
A0
A1
A2
AN
SECOND SOURCE PACKED DATA 511
B0
B1
B2
BN
C0
C1
C2
CN
D0
D1
D2
DN
E0
E1
E2
EN
FIRST PART OF RESULT PACKED DATA 512A
R0
A0 * B0 + A1 * B1 + A2 * B2 +...+ AN * BN
OR SATURATE
R1
A0 * C0 + A1 * C1 + A2 * C2 +...+ AN * CN
OR SATURATE
SECOND PART OF RESULT PACKED DATA 512B
R2
A0 * D0 + A1 * D1 + A2 * D2 +...+ AN * DN
OR SATURATE
R3
A0 * E0 + A1 * E1 + A2 * E2 +...+ AN * EN
OR SATURATE

FIG. 5

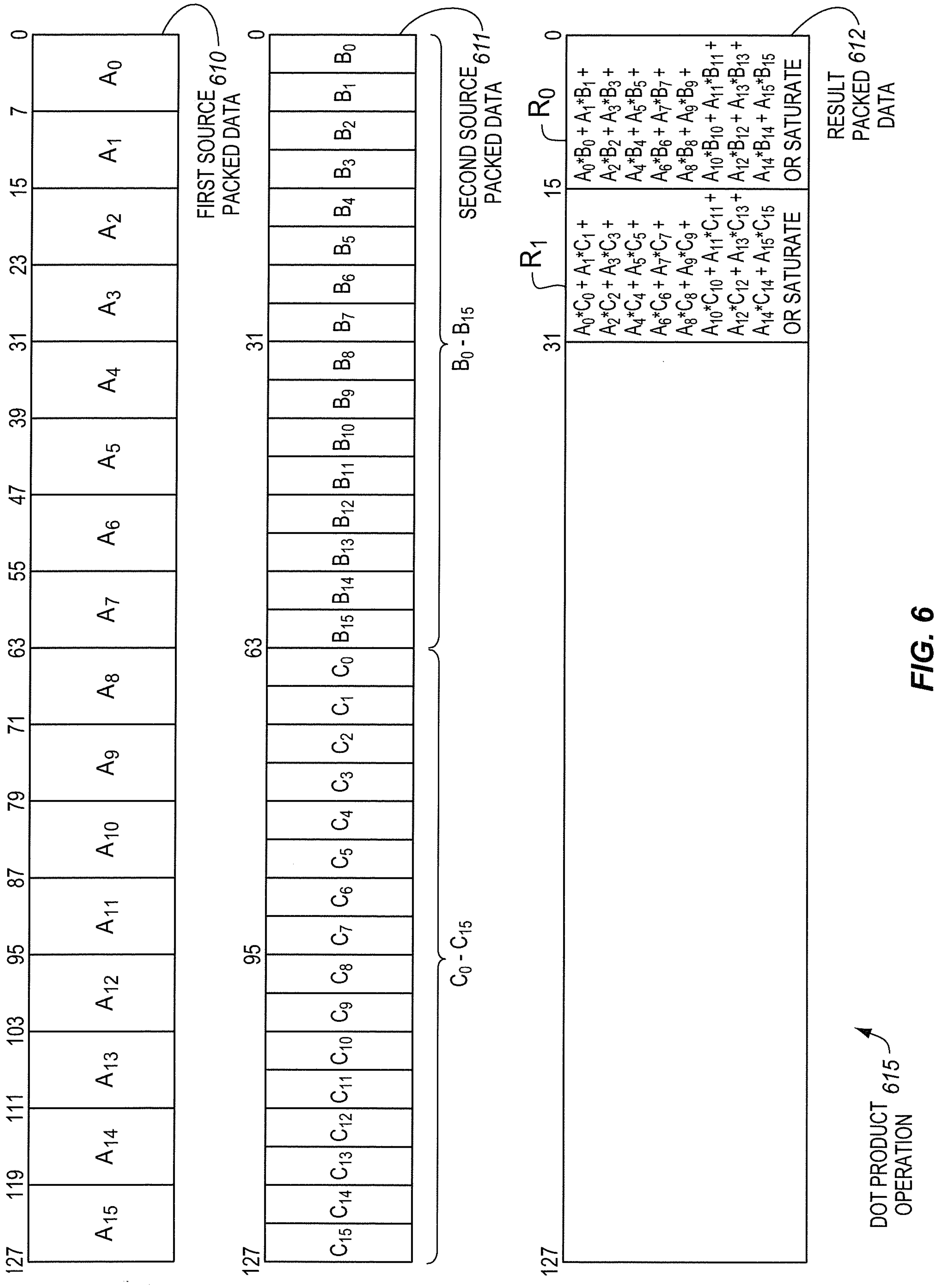
FIRST SOURCE PACKED DATA 610
SECOND SOURCE PACKED DATA 611
RESULT PACKED DATA 612
DOT PRODUCT OPERATION 615
0 7 15 23 31 39 47 55 63 71 79 87 95 103 111 119 127
A0 A1 A2 A3 A4 A5 A6 A7 A8 A9 A10 A11 A12 A13 A14 A15
0 31 63 95 127
B0 B1 B2 B3 B4 B5 B6 B7 B8 B9 B10 B11 B12 B13 B14 B15
C0 C1 C2 C3 C4 C5 C6 C7 C8 C9 C10 C11 C12 C13 C14 C15
B0 - B15
C0 - C15
0 15 31 127
R0
A0*B0 + A1*B1 + A2*B2 + A3*B3 + A4*B4 + A5*B5 + A6*B6 + A7*B7 + A8*B8 + A9*B9 + A10*B10 + A11*B11 + A12*B12 + A13*B13 + A14*B14 + A15*B15 OR SATURATE
R1
A0*C0 + A1*C1 + A2*C2 + A3*C3 + A4*C4 + A5*C5 + A6*C6 + A7*C7 + A8*C8 + A9*C9 + A10*C10 + A11*C11 + A12*C12 + A13*C13 + A14*C14 + A15*C15 OR SATURATE

*FIG. 6*

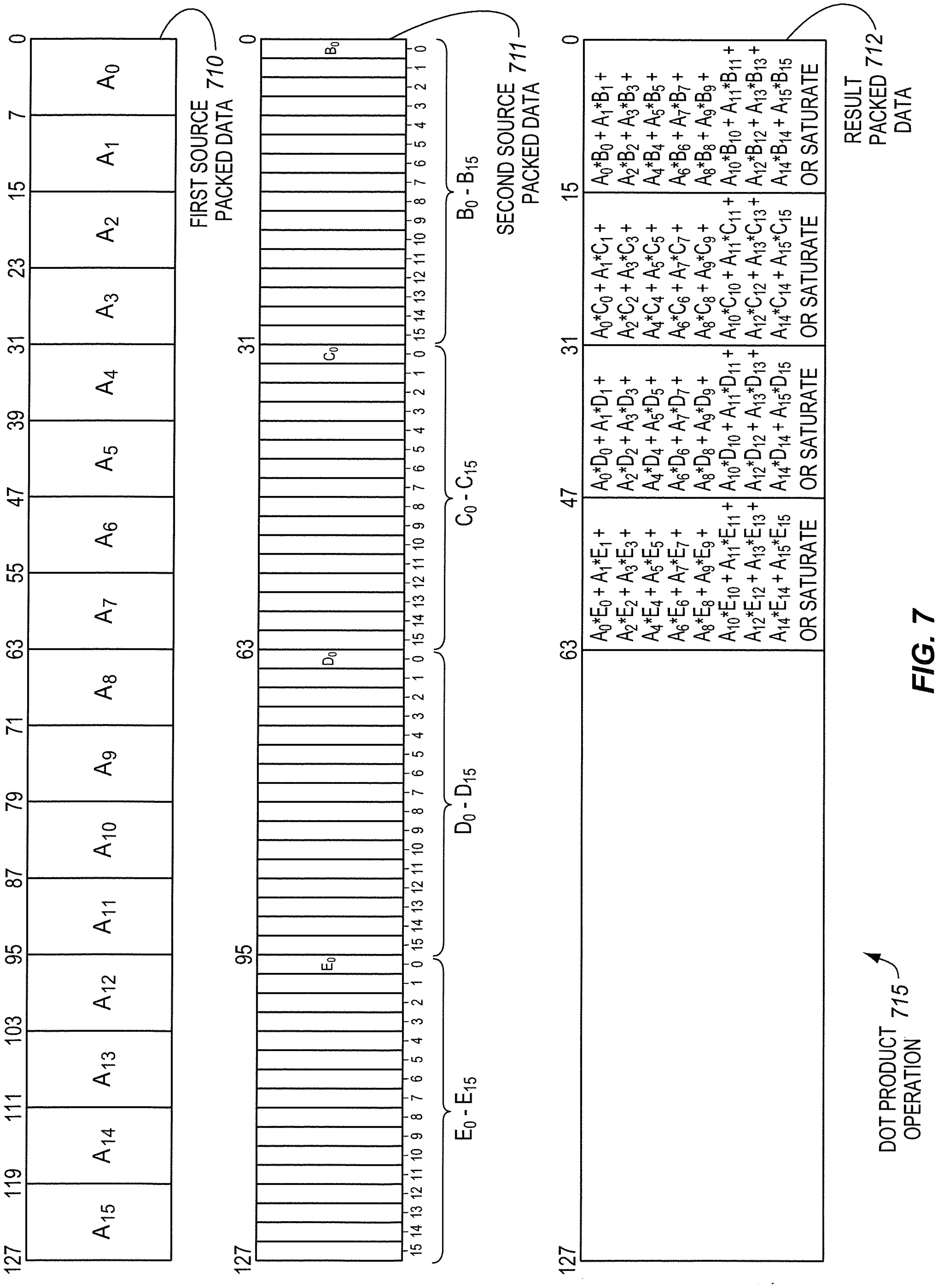
FIRST SOURCE PACKED DATA 710
SECOND SOURCE PACKED DATA 711
RESULT PACKED DATA 712
DOT PRODUCT OPERATION 715
B0 - B15
C0 - C15
D0 - D15
E0 - E15
A0*B0 + A1*B1 + A2*B2 + A3*B3 + A4*B4 + A5*B5 + A6*B6 + A7*B7 + A8*B8 + A9*B9 + A10*B10 + A11*B11 + A12*B12 + A13*B13 + A14*B14 + A15*B15 OR SATURATE
A0*C0 + A1*C1 + A2*C2 + A3*C3 + A4*C4 + A5*C5 + A6*C6 + A7*C7 + A8*C8 + A9*C9 + A10*C10 + A11*C11 + A12*C12 + A13*C13 + A14*C14 + A15*C15 OR SATURATE
A0*D0 + A1*D1 + A2*D2 + A3*D3 + A4*D4 + A5*D5 + A6*D6 + A7*D7 + A8*D8 + A9*D9 + A10*D10 + A11*D11 + A12*D12 + A13*D13 + A14*D14 + A15*D15 OR SATURATE
A0*E0 + A1*E1 + A2*E2 + A3*E3 + A4*E4 + A5*E5 + A6*E6 + A7*E7 + A8*E8 + A9*E9 + A10*E10 + A11*E11 + A12*E12 + A13*E13 + A14*E14 + A15*E15 OR SATURATE

*FIG. 7*

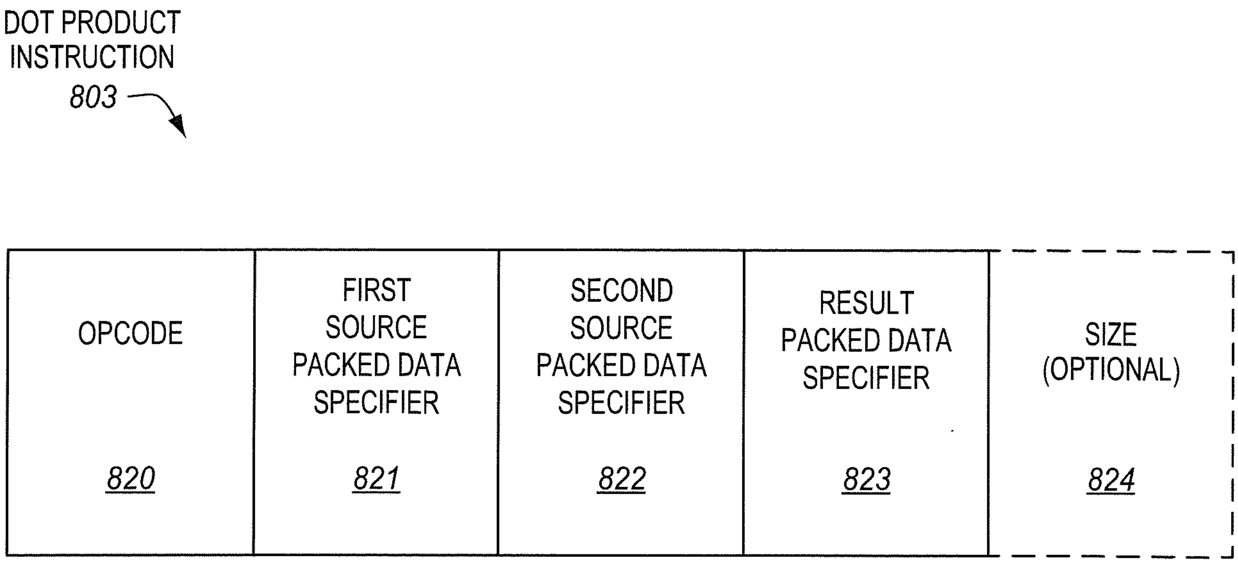
DOT PRODUCT INSTRUCTION
803
OPCODE
820
FIRST SOURCE PACKED DATA SPECIFIER
821
SECOND SOURCE PACKED DATA SPECIFIER
822
RESULT PACKED DATA SPECIFIER
823
SIZE (OPTIONAL)
824

*FIG. 8*

FIG. 9

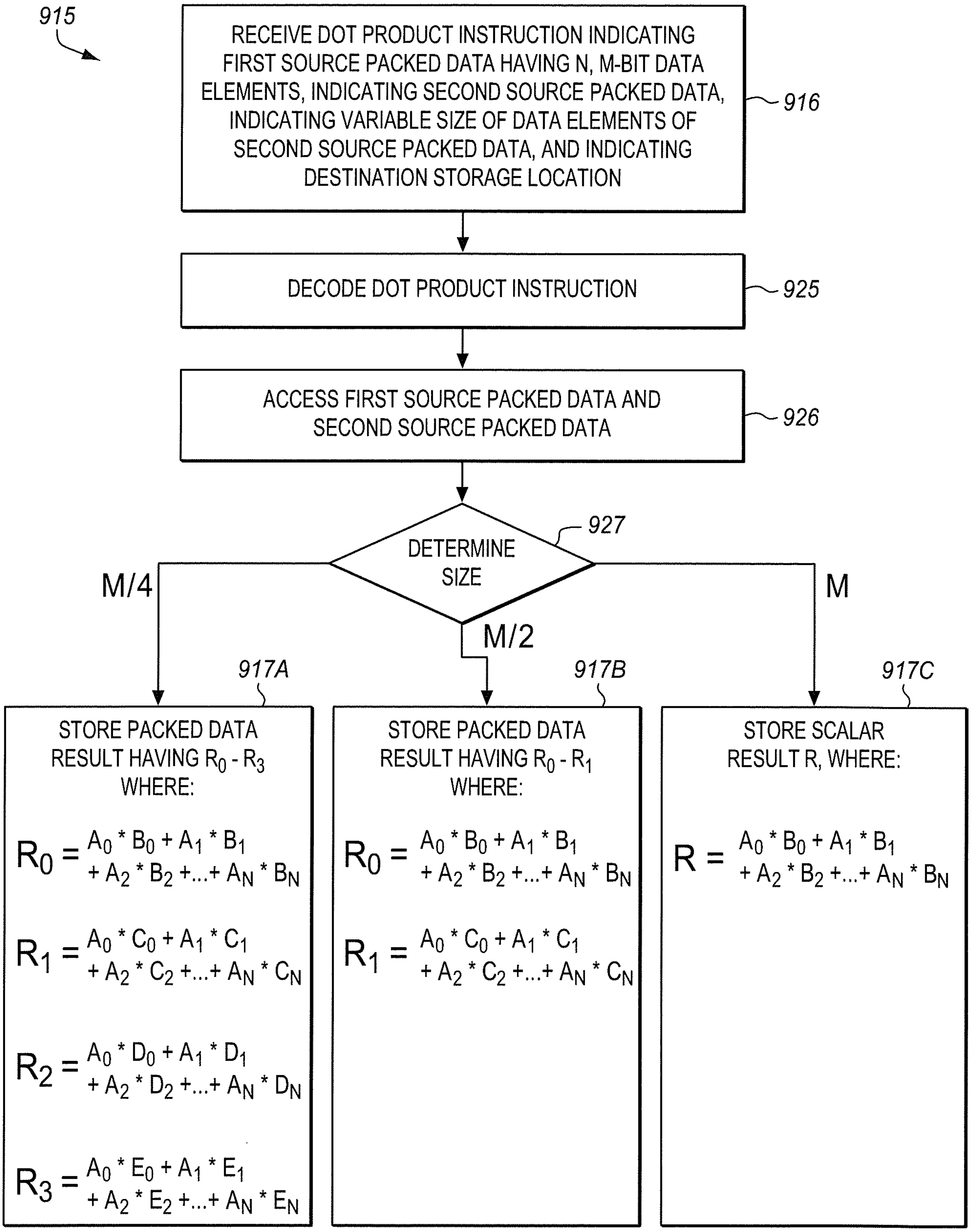
915
RECEIVE DOT PRODUCT INSTRUCTION INDICATING FIRST SOURCE PACKED DATA HAVING N, M-BIT DATA ELEMENTS, INDICATING SECOND SOURCE PACKED DATA, INDICATING VARIABLE SIZE OF DATA ELEMENTS OF SECOND SOURCE PACKED DATA, AND INDICATING DESTINATION STORAGE LOCATION
916
DECODE DOT PRODUCT INSTRUCTION
925
ACCESS FIRST SOURCE PACKED DATA AND SECOND SOURCE PACKED DATA
926
DETERMINE SIZE
927
M/4
M/2
M
917A
STORE PACKED DATA RESULT HAVING $R_0$ - $R_3$ WHERE:
$R_0 = A_0 * B_0 + A_1 * B_1 + A_2 * B_2 + ... + A_N * B_N$
$R_1 = A_0 * C_0 + A_1 * C_1 + A_2 * C_2 + ... + A_N * C_N$
$R_2 = A_0 * D_0 + A_1 * D_1 + A_2 * D_2 + ... + A_N * D_N$
$R_3 = A_0 * E_0 + A_1 * E_1 + A_2 * E_2 + ... + A_N * E_N$
917B
STORE PACKED DATA RESULT HAVING $R_0$ - $R_1$ WHERE:
$R_0 = A_0 * B_0 + A_1 * B_1 + A_2 * B_2 + ... + A_N * B_N$
$R_1 = A_0 * C_0 + A_1 * C_1 + A_2 * C_2 + ... + A_N * C_N$
917C
STORE SCALAR RESULT R, WHERE:
$R = A_0 * B_0 + A_1 * B_1 + A_2 * B_2 + ... + A_N * B_N$

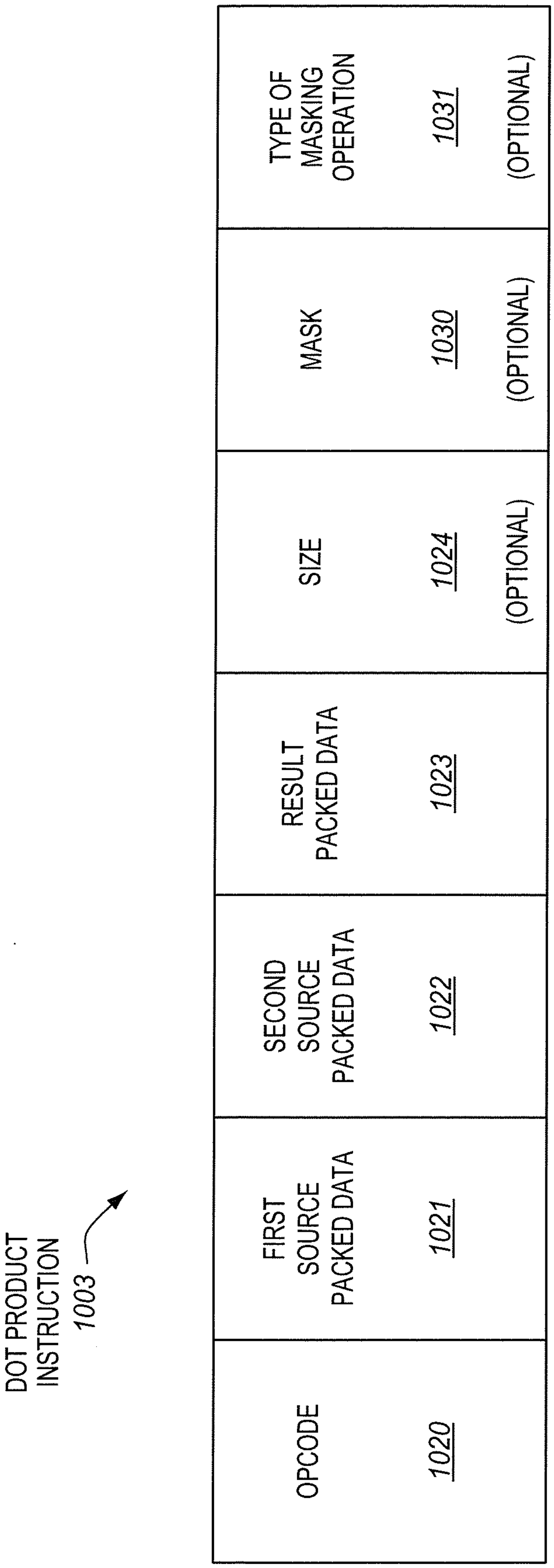
DOT PRODUCT INSTRUCTION
1003
OPCODE
1020
FIRST SOURCE PACKED DATA
1021
SECOND SOURCE PACKED DATA
1022
RESULT PACKED DATA
1023
SIZE
1024
(OPTIONAL)
MASK
1030
(OPTIONAL)
TYPE OF MASKING OPERATION
1031
(OPTIONAL)

FIG. 10

FIG. 11

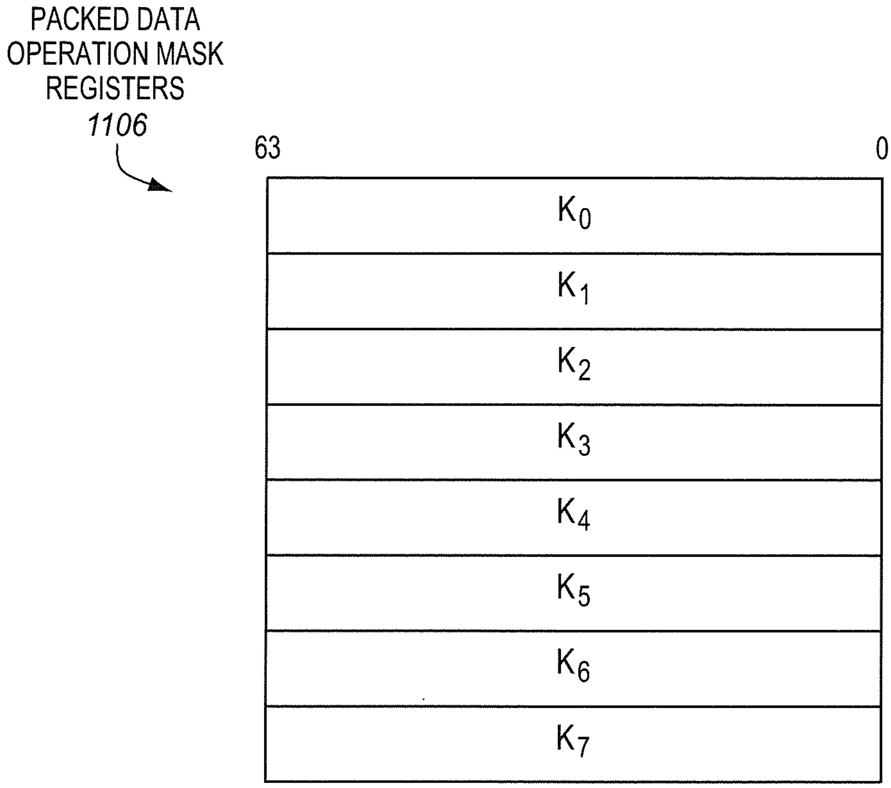
PACKED DATA
OPERATION MASK
REGISTERS
1106
63
0
K0
K1
K2
K3
K4
K5
K6
K7

FIG. 12

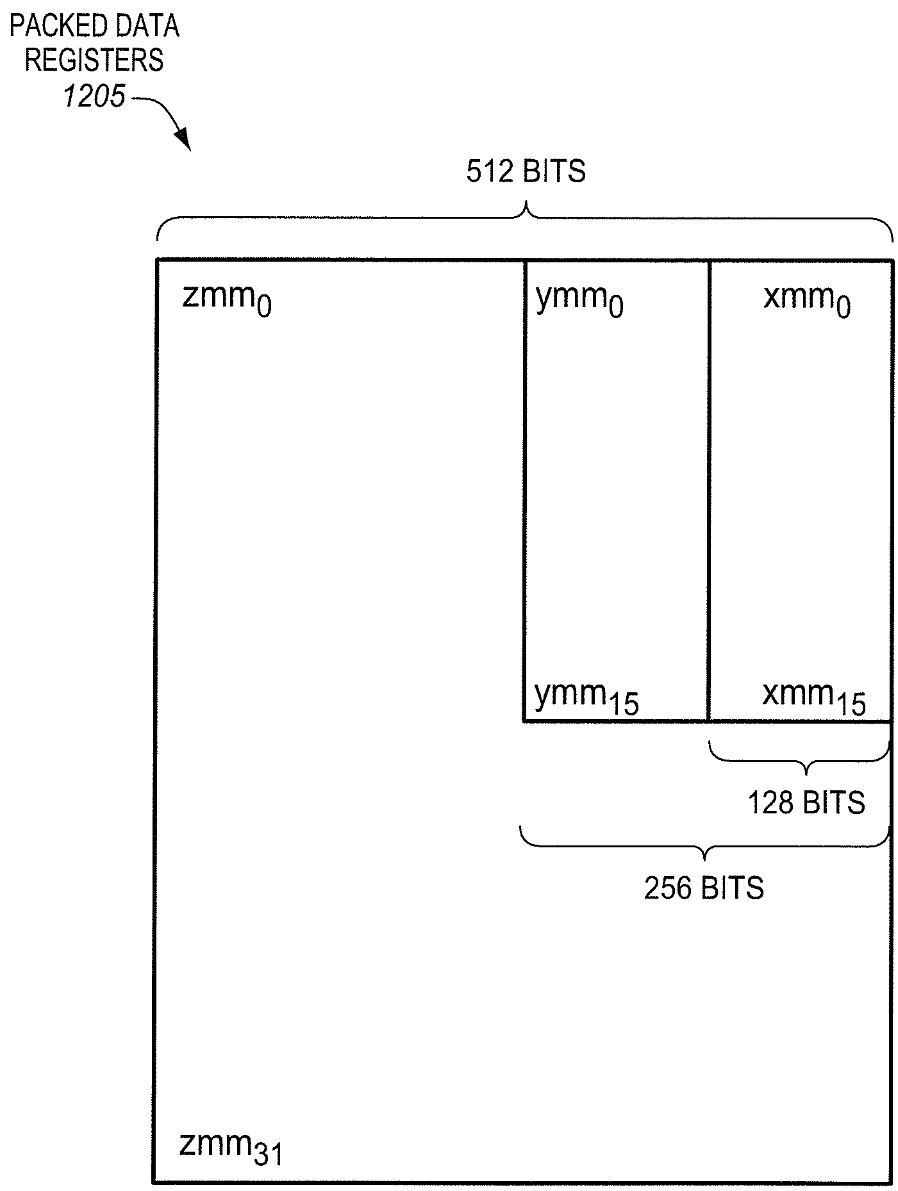
PACKED DATA
REGISTERS
1205
512 BITS
zmm0
ymm0
xmm0
ymm15
xmm15
128 BITS
256 BITS
zmm31

*FIG. 13*

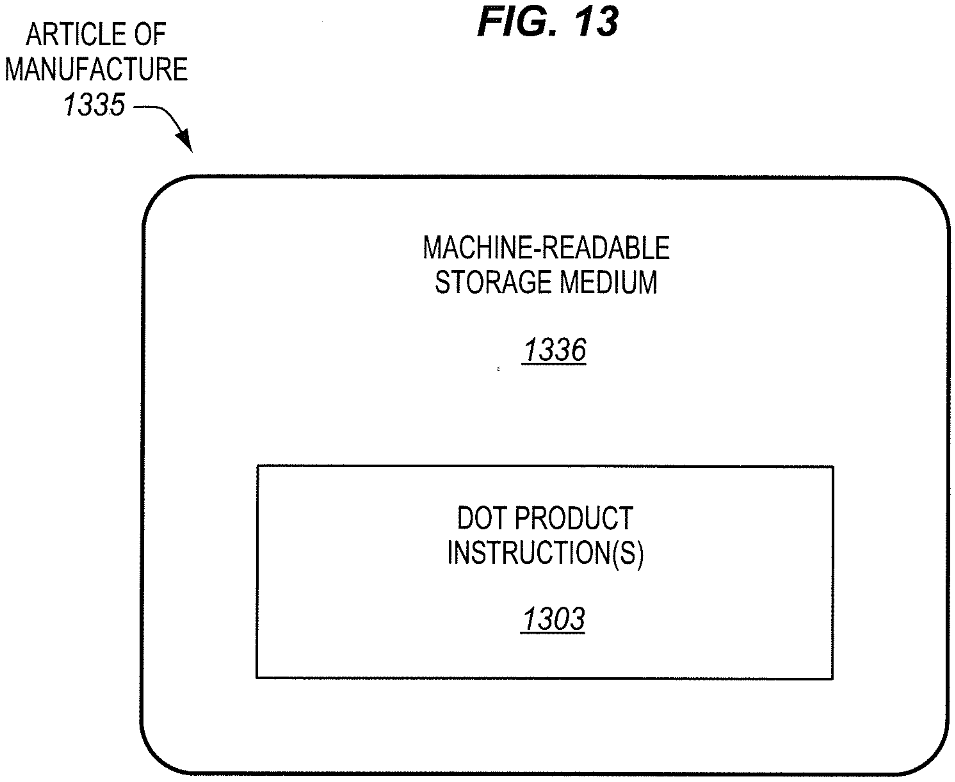


*FIG. 14A*

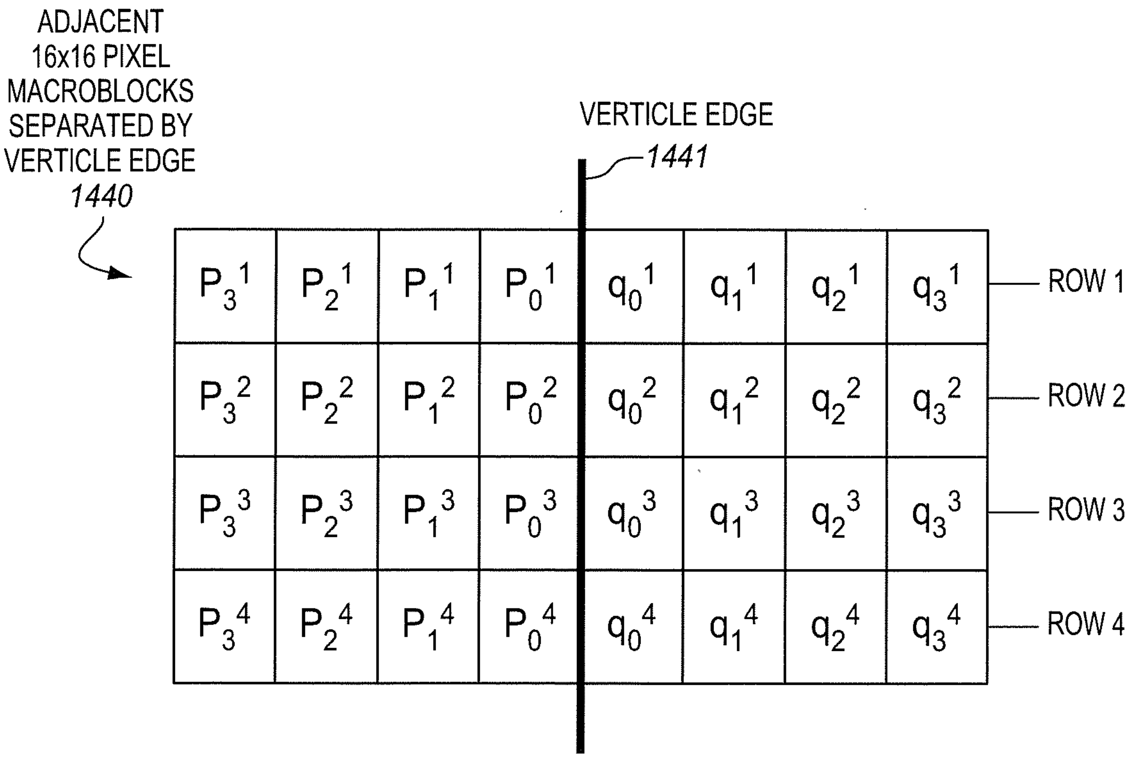

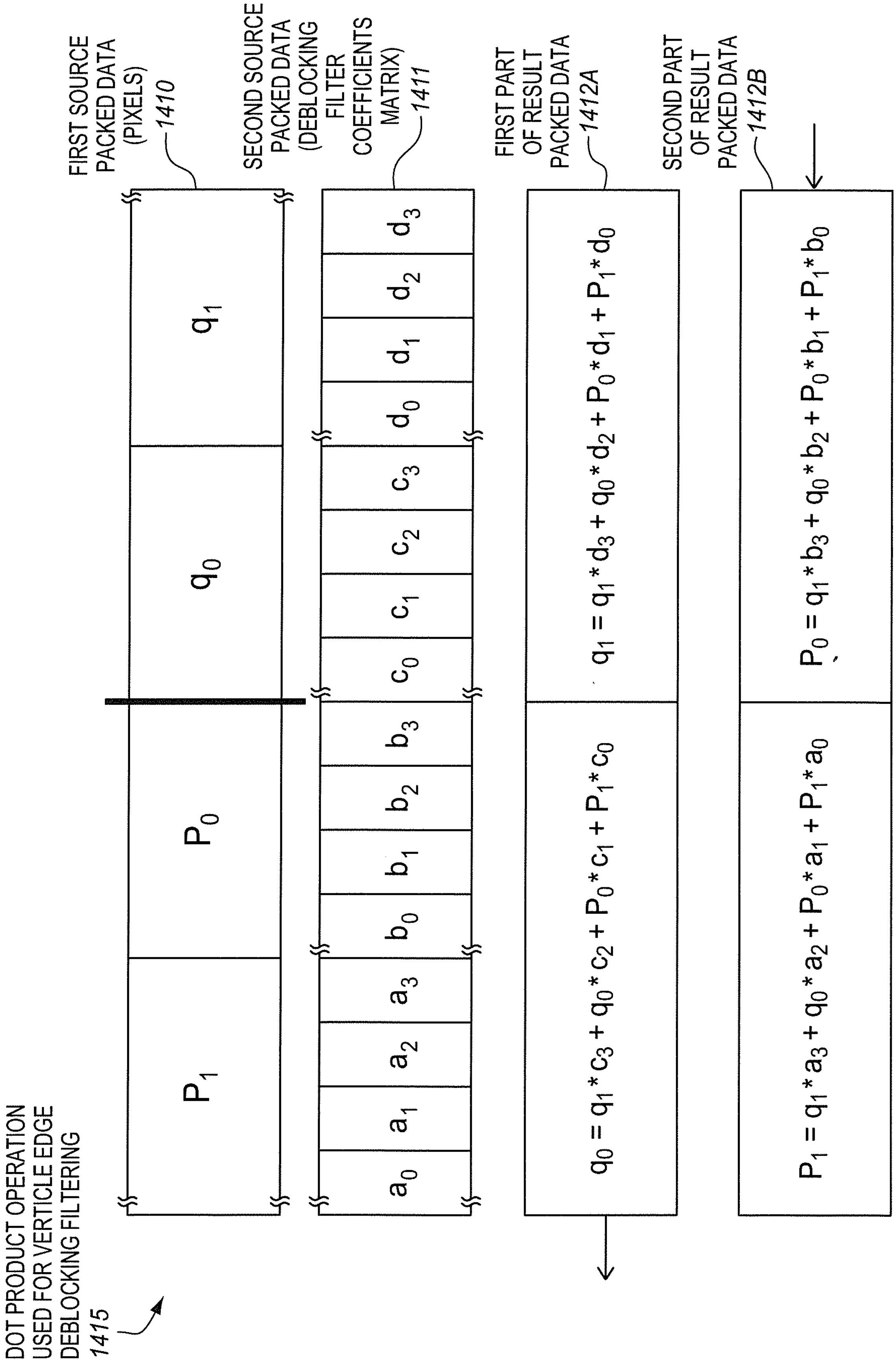
DOT PRODUCT OPERATION USED FOR VERTICLE EDGE DEBLOCKING FILTERING
1415
FIRST SOURCE PACKED DATA (PIXELS)
1410
SECOND SOURCE PACKED DATA (DEBLOCKING FILTER COEFFICIENTS MATRIX)
1411
FIRST PART OF RESULT PACKED DATA
1412A
SECOND PART OF RESULT PACKED DATA
1412B
P1
P0
q0
q1
a0 a1 a2 a3 b0 b1 b2 b3 c0 c1 c2 c3 d0 d1 d2 d3
q0 = q1 * c3 + q0 * c2 + P0 * c1 + P1 * c0
q1 = q1 * d3 + q0 * d2 + P0 * d1 + P1 * d0
P1 = q1 * a3 + q0 * a2 + P0 * a1 + P1 * a0
P0 = q1 * b3 + q0 * b2 + P0 * b1 + P1 * b0

FIG. 14B

FIG.15A

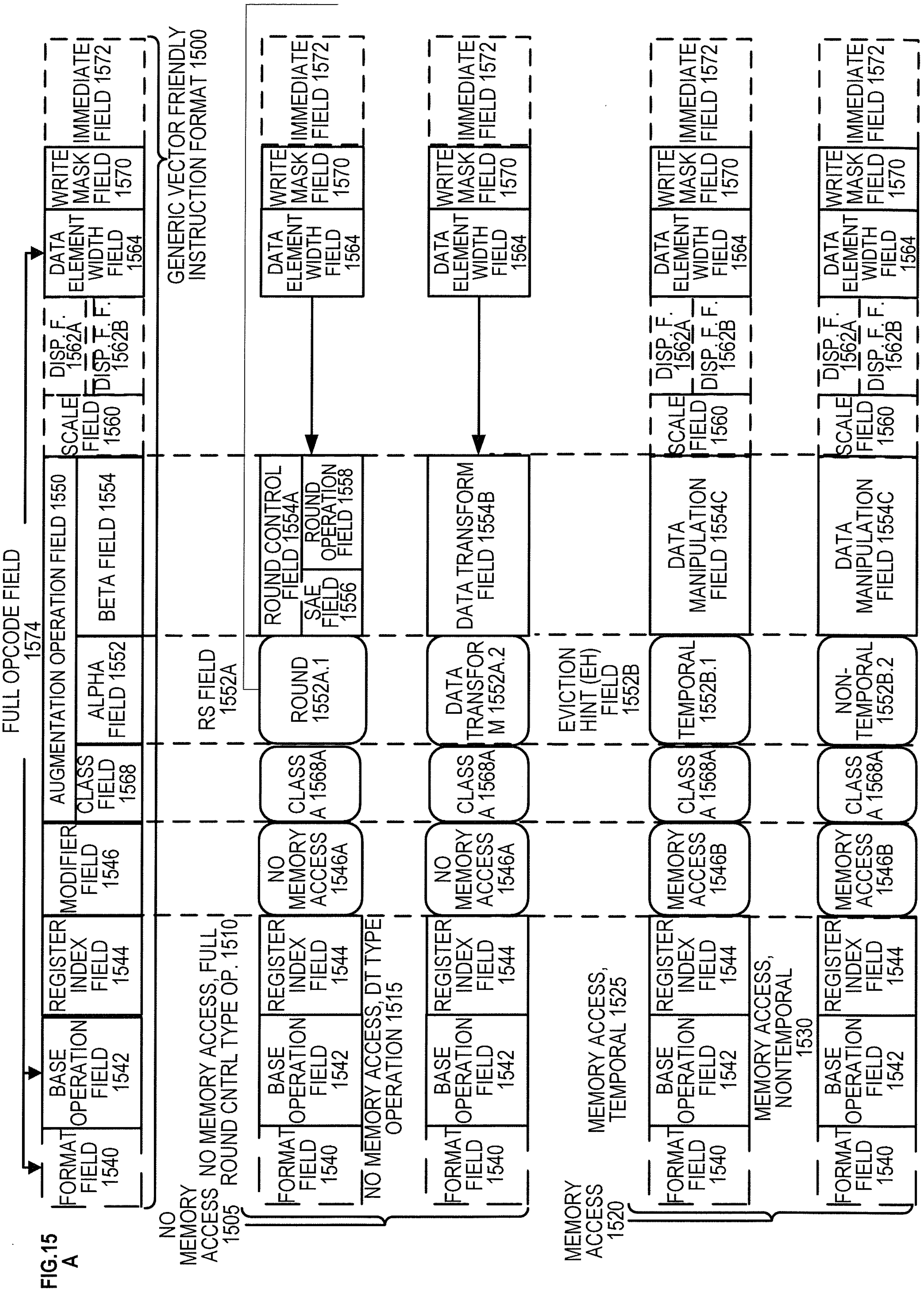
FULL OPCODE FIELD 1574
AUGMENTATION OPERATION FIELD 1550
FORMAT FIELD 1540
BASE OPERATION FIELD 1542
REGISTER INDEX FIELD 1544
MODIFIER FIELD 1546
CLASS FIELD 1568
ALPHA FIELD 1552
BETA FIELD 1554
SCALE FIELD 1560
DISP. F. 1562A
DISP. F. F. 1562B
DATA ELEMENT WIDTH FIELD 1564
WRITE MASK FIELD 1570
IMMEDIATE FIELD 1572
GENERIC VECTOR FRIENDLY INSTRUCTION FORMAT 1500
NO MEMORY ACCESS 1505
NO MEMORY ACCESS, FULL ROUND CNTRL TYPE OP. 1510
RS FIELD 1552A
NO MEMORY ACCESS 1546A
CLASS A 1568A
ROUND 1552A.1
ROUND CONTROL FIELD 1554A
SAE FIELD 1556
ROUND OPERATION FIELD 1558
NO MEMORY ACCESS, DT TYPE OPERATION 1515
DATA TRANSFORM 1552A.2
DATA TRANSFORM FIELD 1554B
MEMORY ACCESS 1520
MEMORY ACCESS, TEMPORAL 1525
EVICTION HINT (EH) FIELD 1552B
MEMORY ACCESS 1546B
TEMPORAL 1552B.1
DATA MANIPULATION FIELD 1554C
MEMORY ACCESS, NONTEMPORAL 1530
NON-TEMPORAL 1552B.2

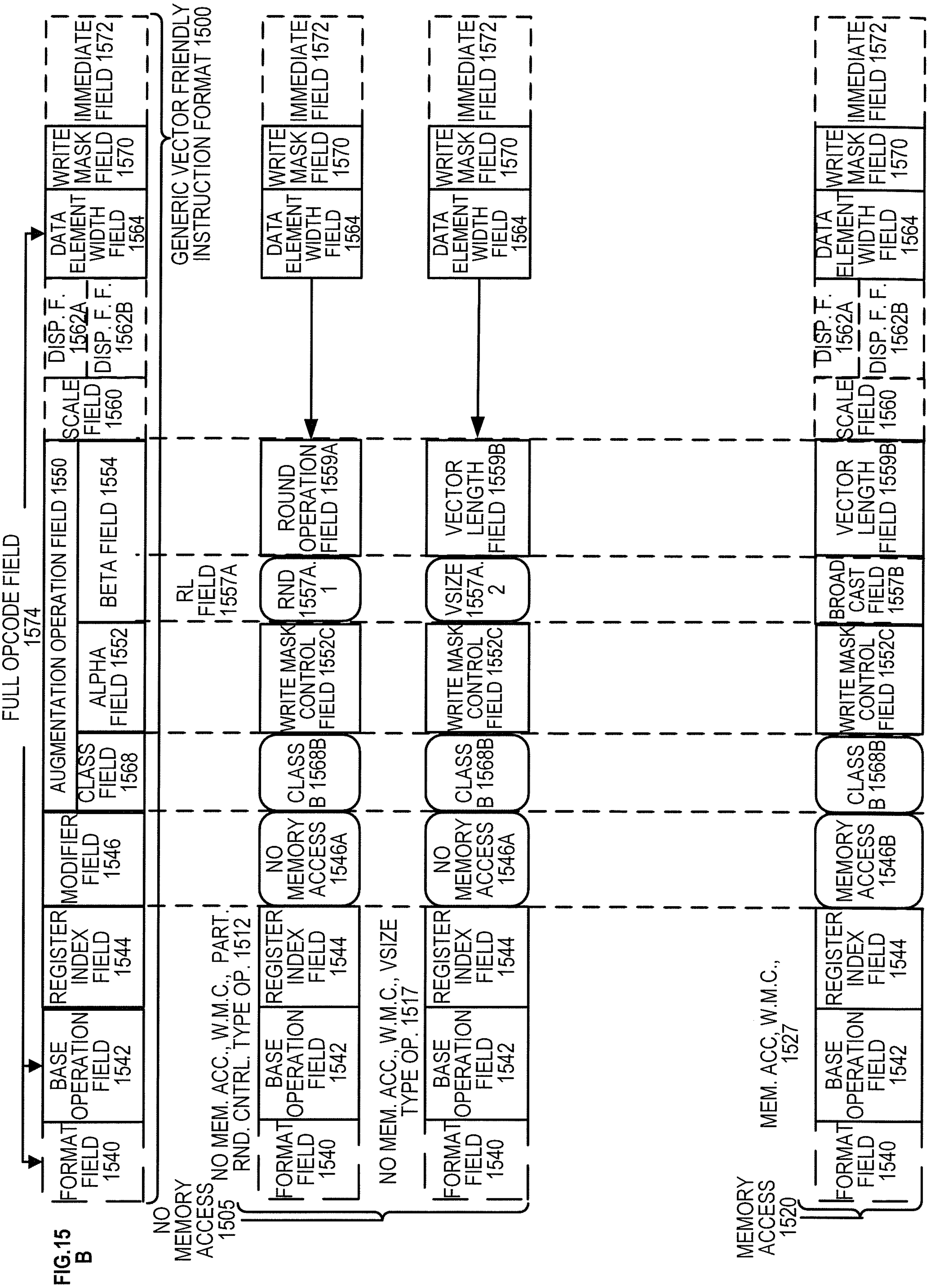

FULL OPCODE FIELD 1574
AUGMENTATION OPERATION FIELD 1550
FORMAT FIELD 1540
BASE OPERATION FIELD 1542
REGISTER INDEX FIELD 1544
MODIFIER FIELD 1546
CLASS FIELD 1568
ALPHA FIELD 1552
BETA FIELD 1554
SCALE FIELD 1560
DISP. F. 1562A
DISP. F. F. 1562B
DATA ELEMENT WIDTH FIELD 1564
WRITE MASK FIELD 1570
IMMEDIATE FIELD 1572
GENERIC VECTOR FRIENDLY INSTRUCTION FORMAT 1500
RL FIELD 1557A
NO MEMORY ACCESS 1505
NO MEM. ACC., W.M.C., PART. RND. CNTRL. TYPE OP. 1512
NO MEMORY ACCESS 1546A
CLASS B 1568B
WRITE MASK CONTROL FIELD 1552C
RND 1557A.1
ROUND OPERATION FIELD 1559A
NO MEM. ACC., W.M.C., VSIZE TYPE OP. 1517
VSIZE 1557A.2
VECTOR LENGTH FIELD 1559B
MEMORY ACCESS 1520
MEM. ACC, W.M.C., 1527
MEMORY ACCESS 1546B
BROADCAST FIELD 1557B


FIG.15 B

FIG. 16A

FIG. 16B

FIG. 16C

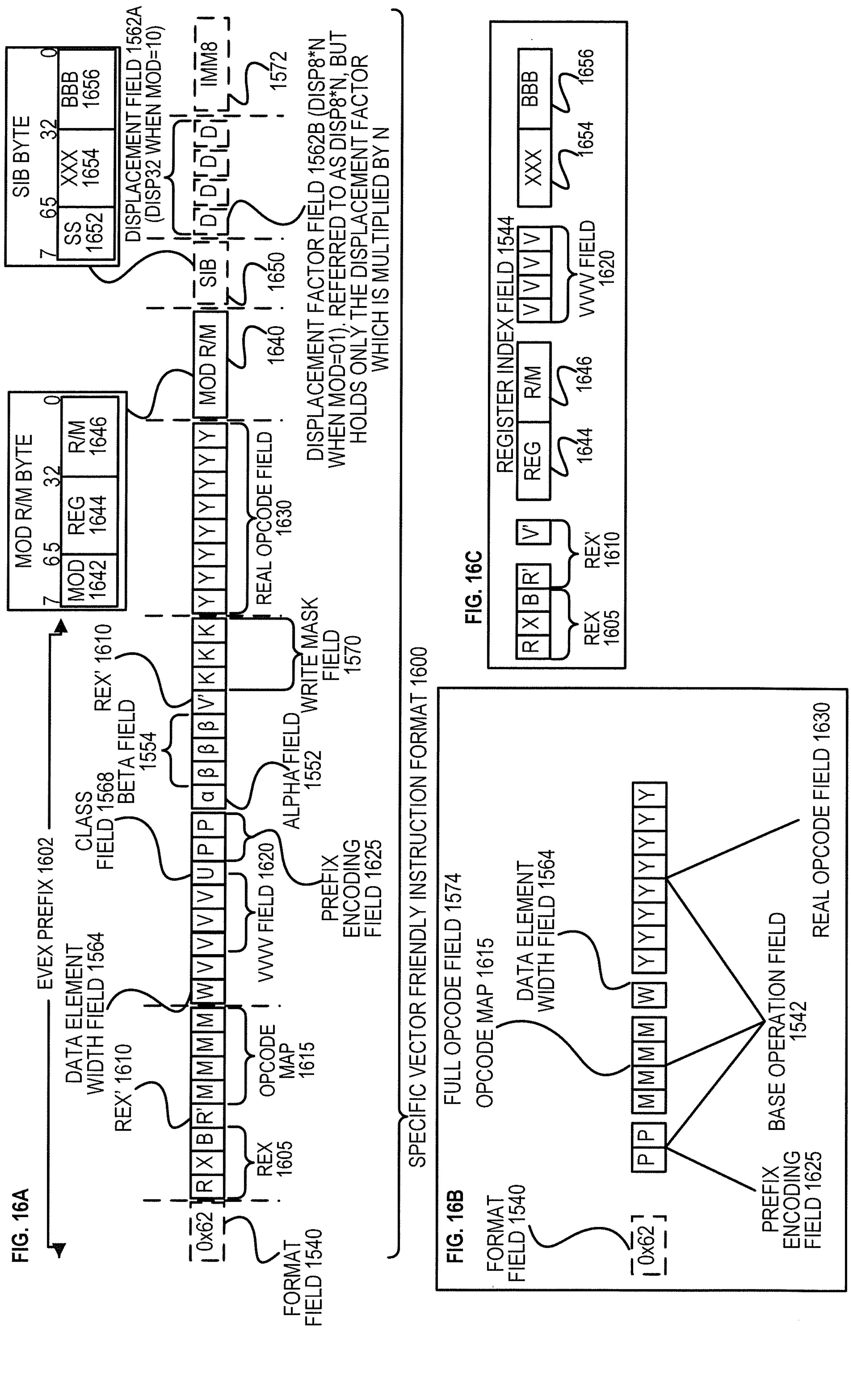

FIG. 16D

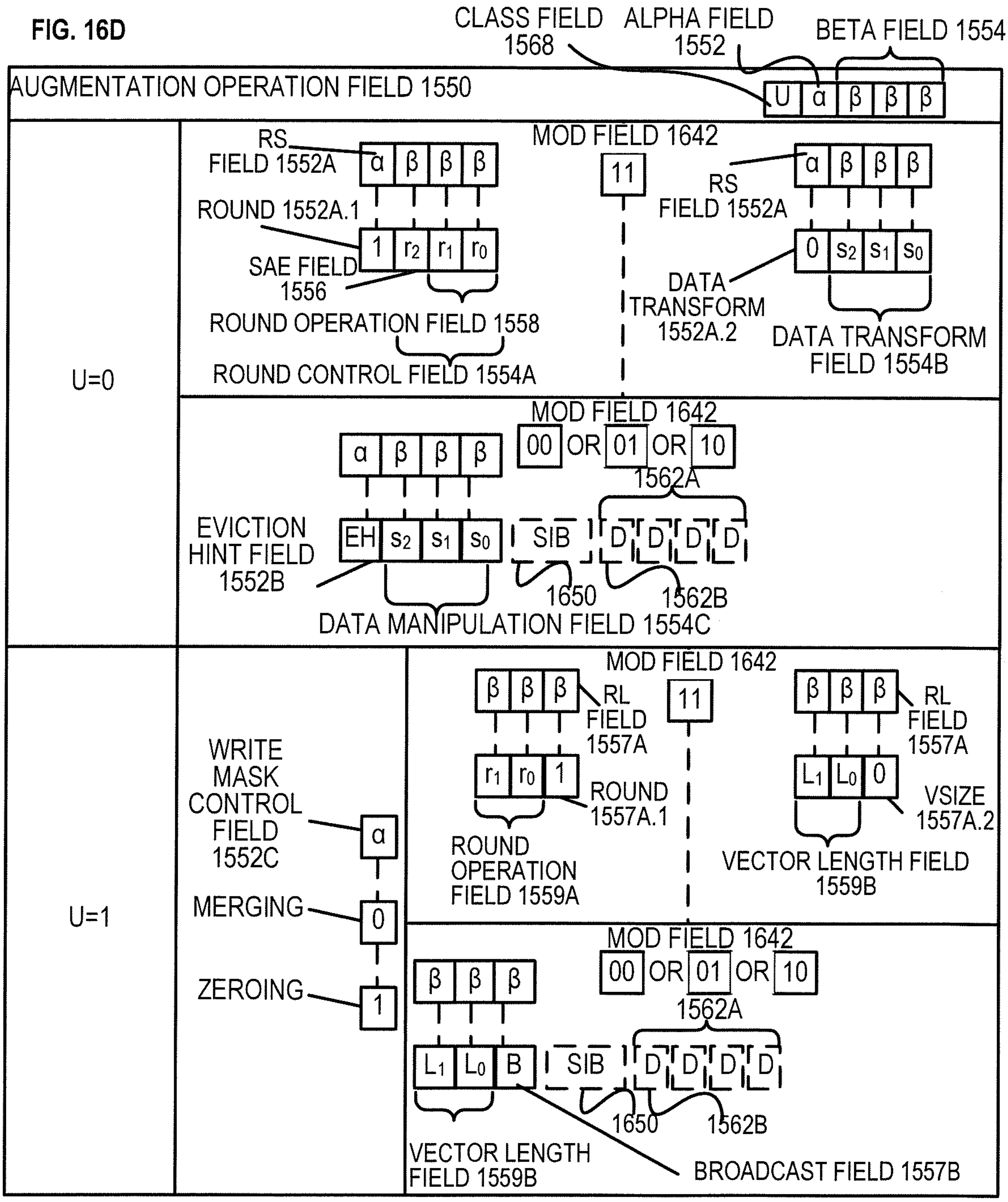
CLASS FIELD 1568
ALPHA FIELD 1552
BETA FIELD 1554
AUGMENTATION OPERATION FIELD 1550
U α β β β
U=0
RS FIELD 1552A
ROUND 1552A.1
SAE FIELD 1556
ROUND OPERATION FIELD 1558
ROUND CONTROL FIELD 1554A
MOD FIELD 1642
11
RS FIELD 1552A
DATA TRANSFORM 1552A.2
DATA TRANSFORM FIELD 1554B
MOD FIELD 1642
00 OR 01 OR 10
1562A
EVICTION HINT FIELD 1552B
EH
SIB
D D D D
1650
1562B
DATA MANIPULATION FIELD 1554C
U=1
WRITE MASK CONTROL FIELD 1552C
MERGING
ZEROING
MOD FIELD 1642
RL FIELD 1557A
ROUND 1557A.1
ROUND OPERATION FIELD 1559A
VSIZE 1557A.2
VECTOR LENGTH FIELD 1559B
MOD FIELD 1642
00 OR 01 OR 10
1562A
SIB
1650
1562B
VECTOR LENGTH FIELD 1559B
BROADCAST FIELD 1557B

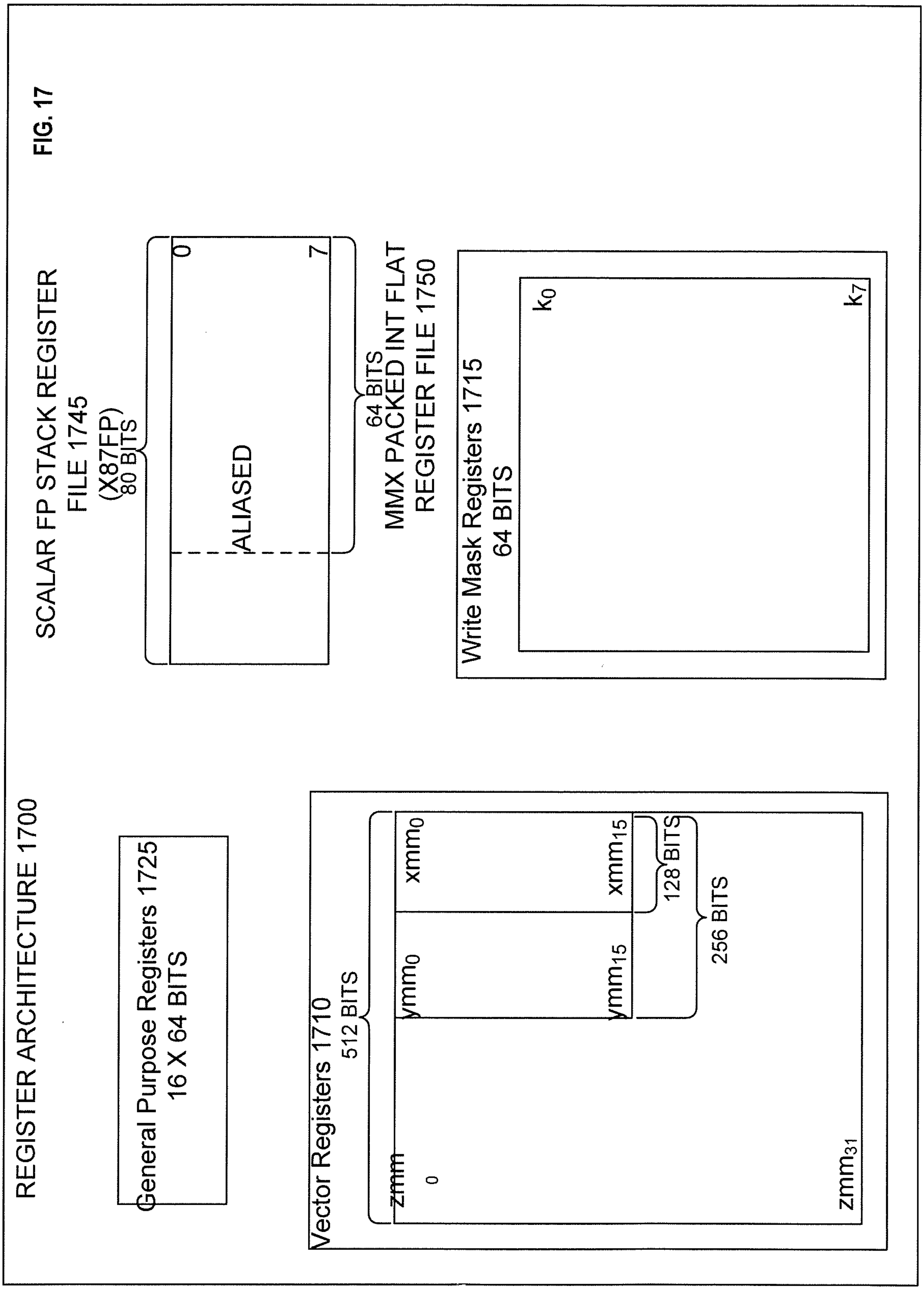
REGISTER ARCHITECTURE 1700
General Purpose Registers 1725
16 X 64 BITS
Vector Registers 1710
512 BITS
zmm0
zmm31
ymm0
ymm15
xmm0
xmm15
128 BITS
256 BITS
SCALAR FP STACK REGISTER
FILE 1745
(X87FP)
80 BITS
ALIASED
0
7
64 BITS
MMX PACKED INT FLAT
REGISTER FILE 1750
Write Mask Registers 1715
64 BITS
k0
k7

FIG. 17

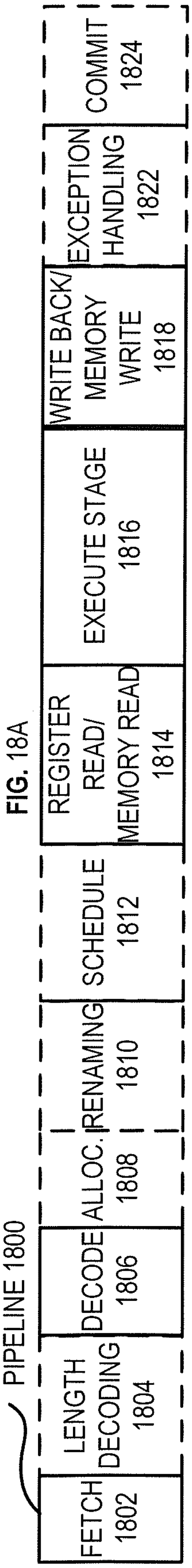


FIG. 18A

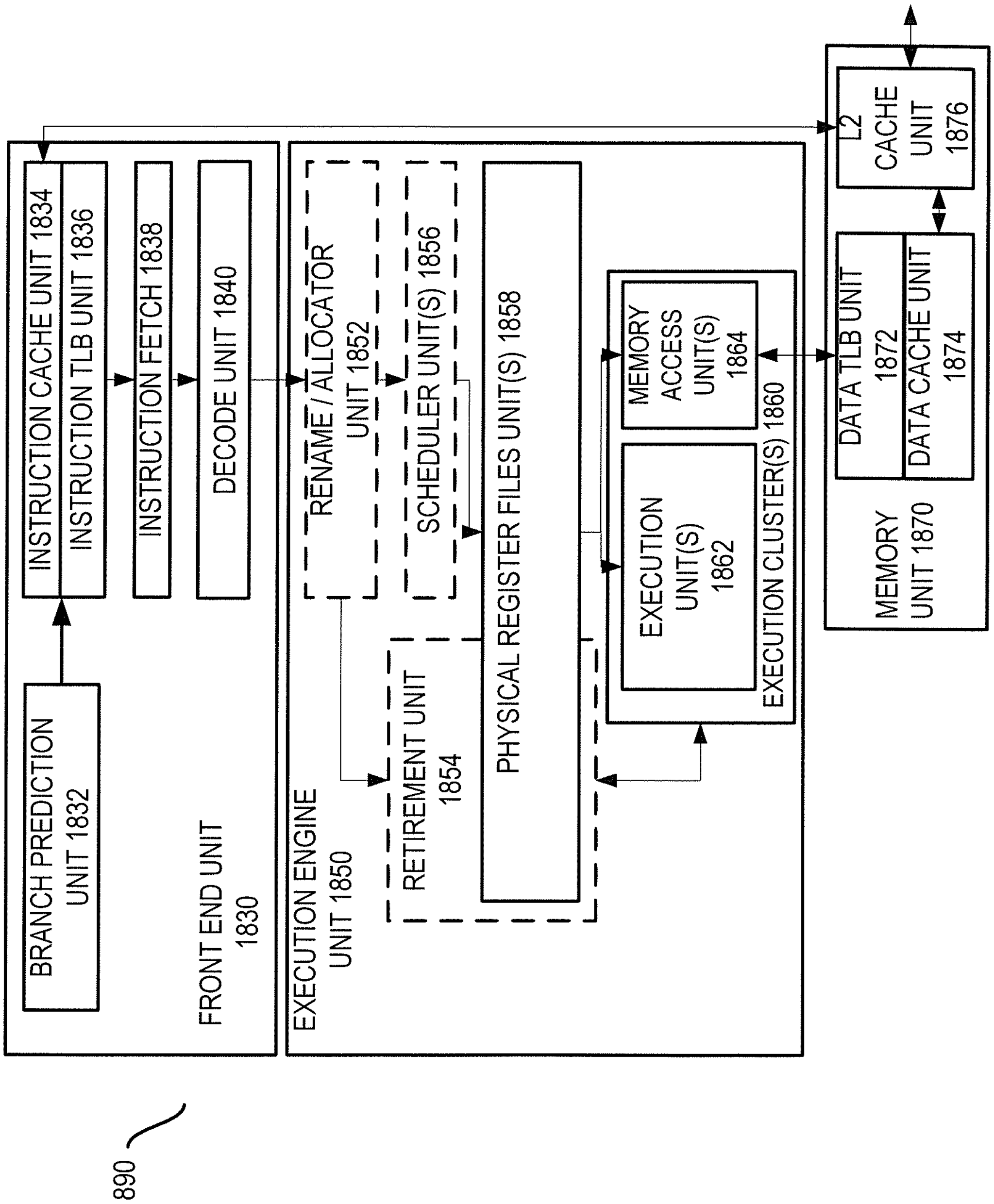


FIG. 18B

FIG. 19A

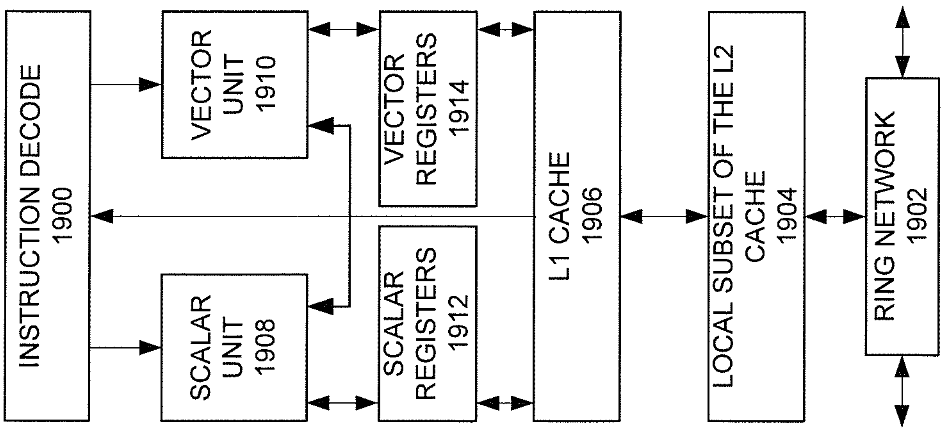


FIG. 19B

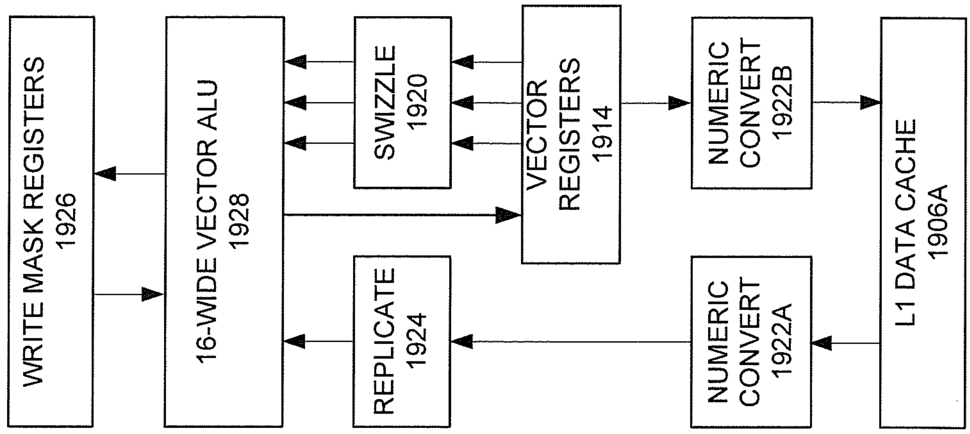

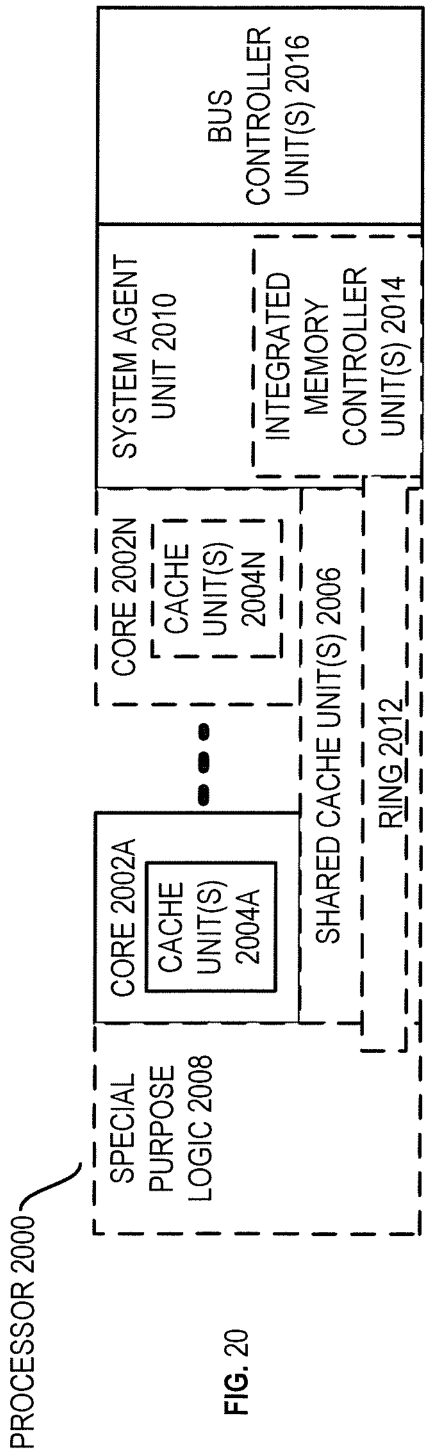
PROCESSOR 2000
SPECIAL PURPOSE LOGIC 2008
CORE 2002A
CACHE UNIT(S) 2004A
CORE 2002N
CACHE UNIT(S) 2004N
SHARED CACHE UNIT(S) 2006
RING 2012
SYSTEM AGENT UNIT 2010
INTEGRATED MEMORY CONTROLLER UNIT(S) 2014
BUS CONTROLLER UNIT(S) 2016

**FIG.** 20

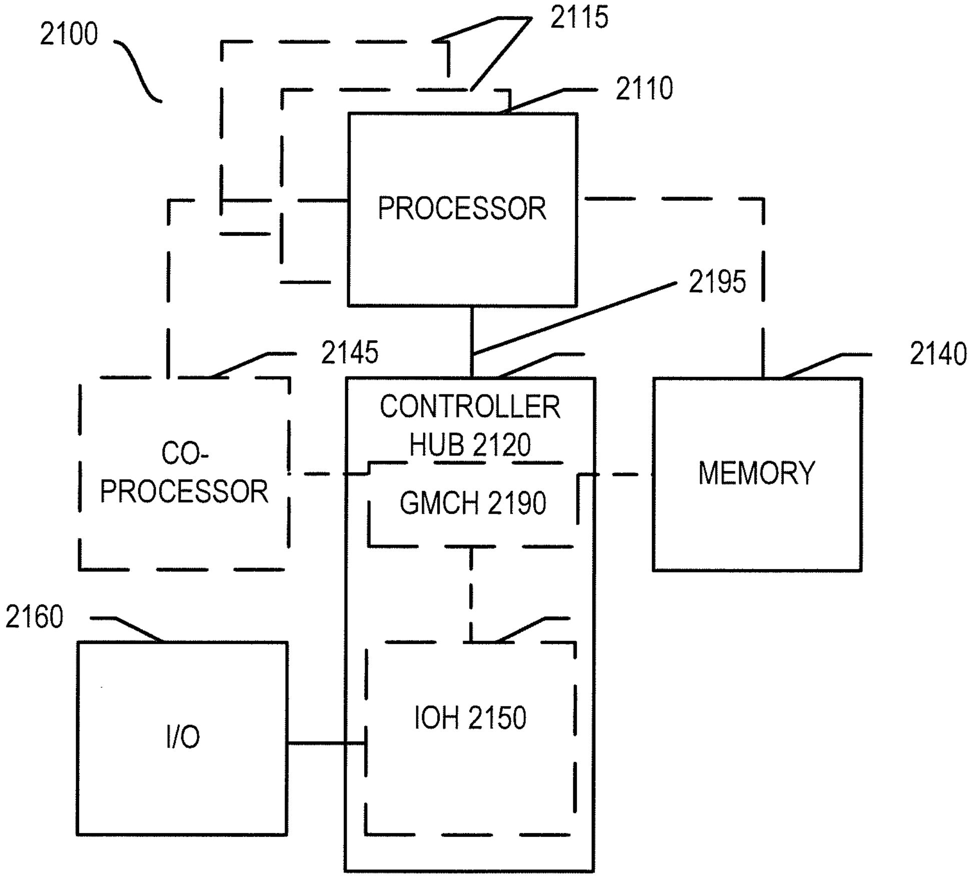
2100
2115
2110
PROCESSOR
2195
2145
2140
CONTROLLER HUB 2120
CO-PROCESSOR
GMCH 2190
MEMORY
2160
I/O
IOH 2150

FIG. 21

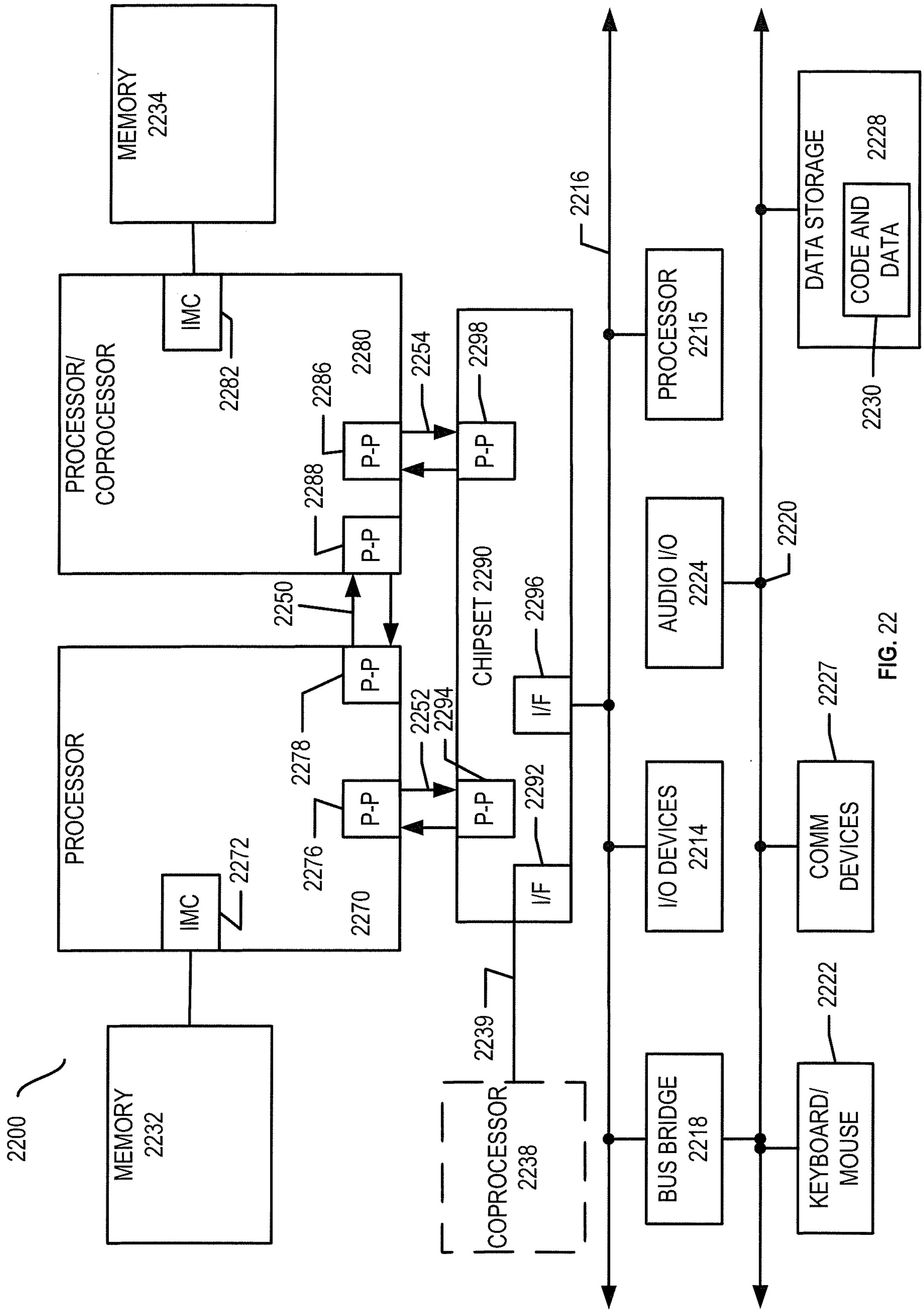
2200
MEMORY 2232
MEMORY 2234
PROCESSOR
IMC
2272
2276
P-P
2278
P-P
2270
PROCESSOR/ COPROCESSOR
IMC
2282
2286
P-P
2288
P-P
2280
2250
2252
2294
2254
2298
P-P
P-P
CHIPSET 2290
I/F
2292
I/F
2296
2239
COPROCESSOR 2238
2216
BUS BRIDGE 2218
I/O DEVICES 2214
AUDIO I/O 2224
PROCESSOR 2215
2220
KEYBOARD/ MOUSE
2222
COMM DEVICES
2227
DATA STORAGE
2228
CODE AND DATA
2230

FIG. 22

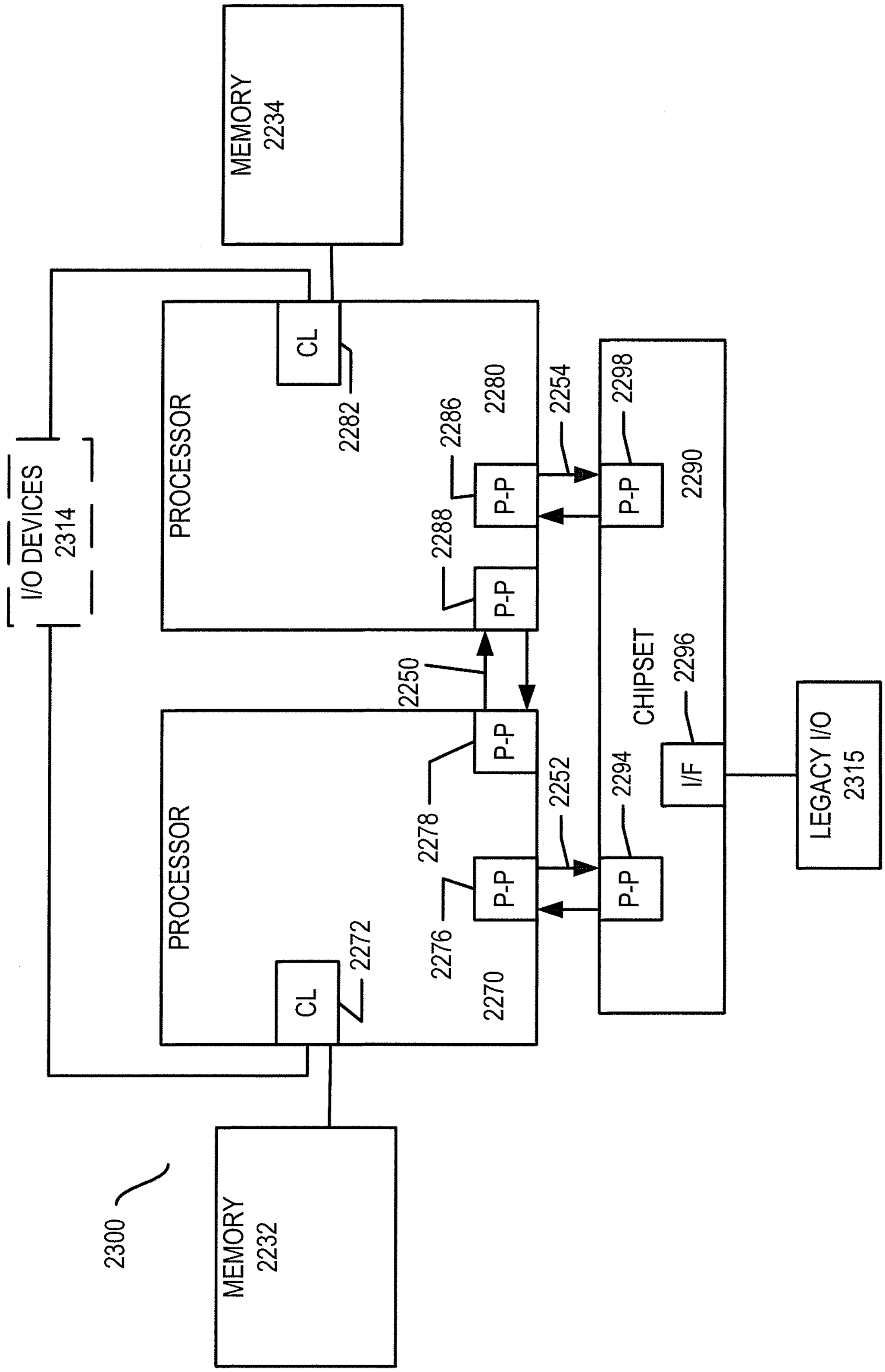
MEMORY
2234
PROCESSOR
CL
2282
2286
2280
2254
2298
P-P
P-P
2290
2288
P-P
I/O DEVICES
2314
CHIPSET
2296
2250
P-P
I/F
LEGACY I/O
2315
2278
2252
2294
PROCESSOR
P-P
P-P
2276
2272
CL
2270
2300
MEMORY
2232

FIG. 23

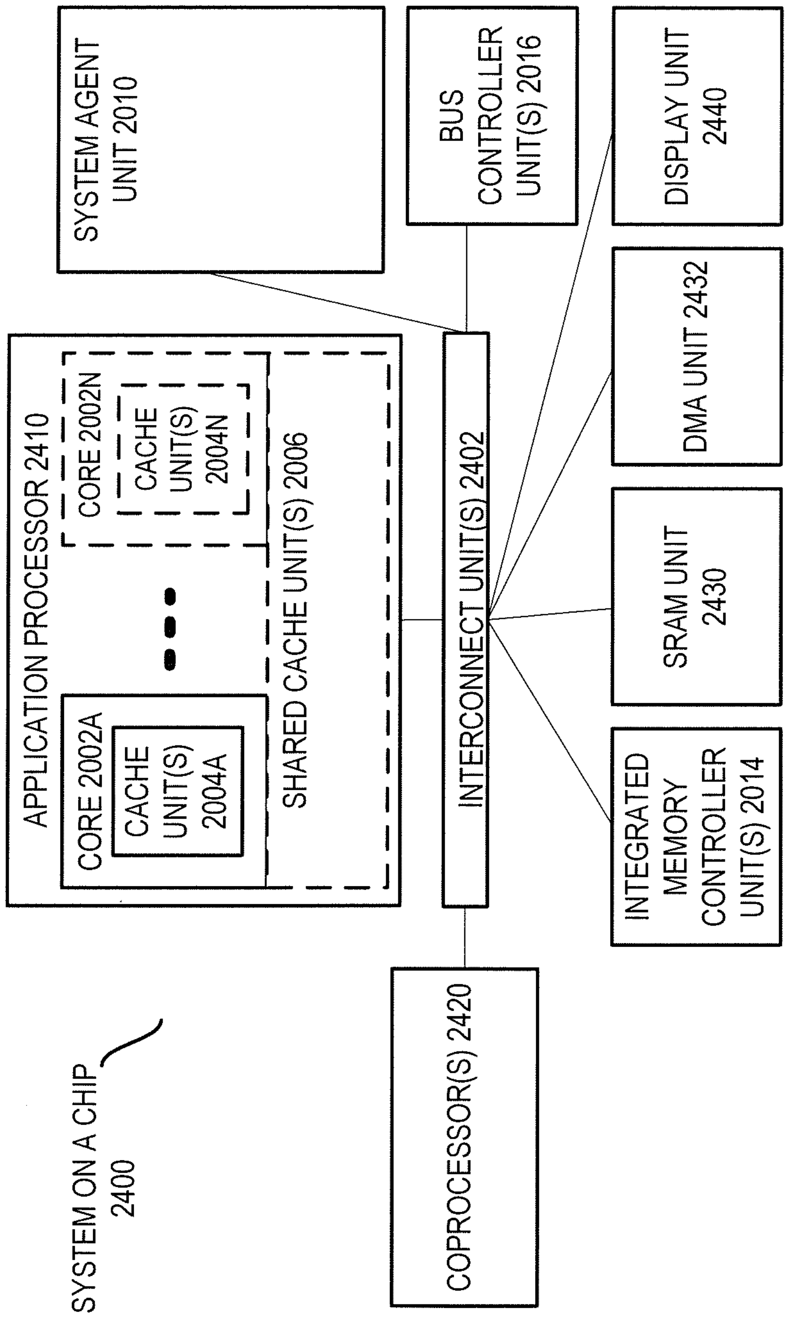

SYSTEM ON A CHIP 2400
APPLICATION PROCESSOR 2410
CORE 2002A
CACHE UNIT(S) 2004A
CORE 2002N
CACHE UNIT(S) 2004N
SHARED CACHE UNIT(S) 2006
SYSTEM AGENT UNIT 2010
BUS CONTROLLER UNIT(S) 2016
DISPLAY UNIT 2440
DMA UNIT 2432
SRAM UNIT 2430
INTEGRATED MEMORY CONTROLLER UNIT(S) 2014
INTERCONNECT UNIT(S) 2402
COPROCESSOR(S) 2420


FIG. 24

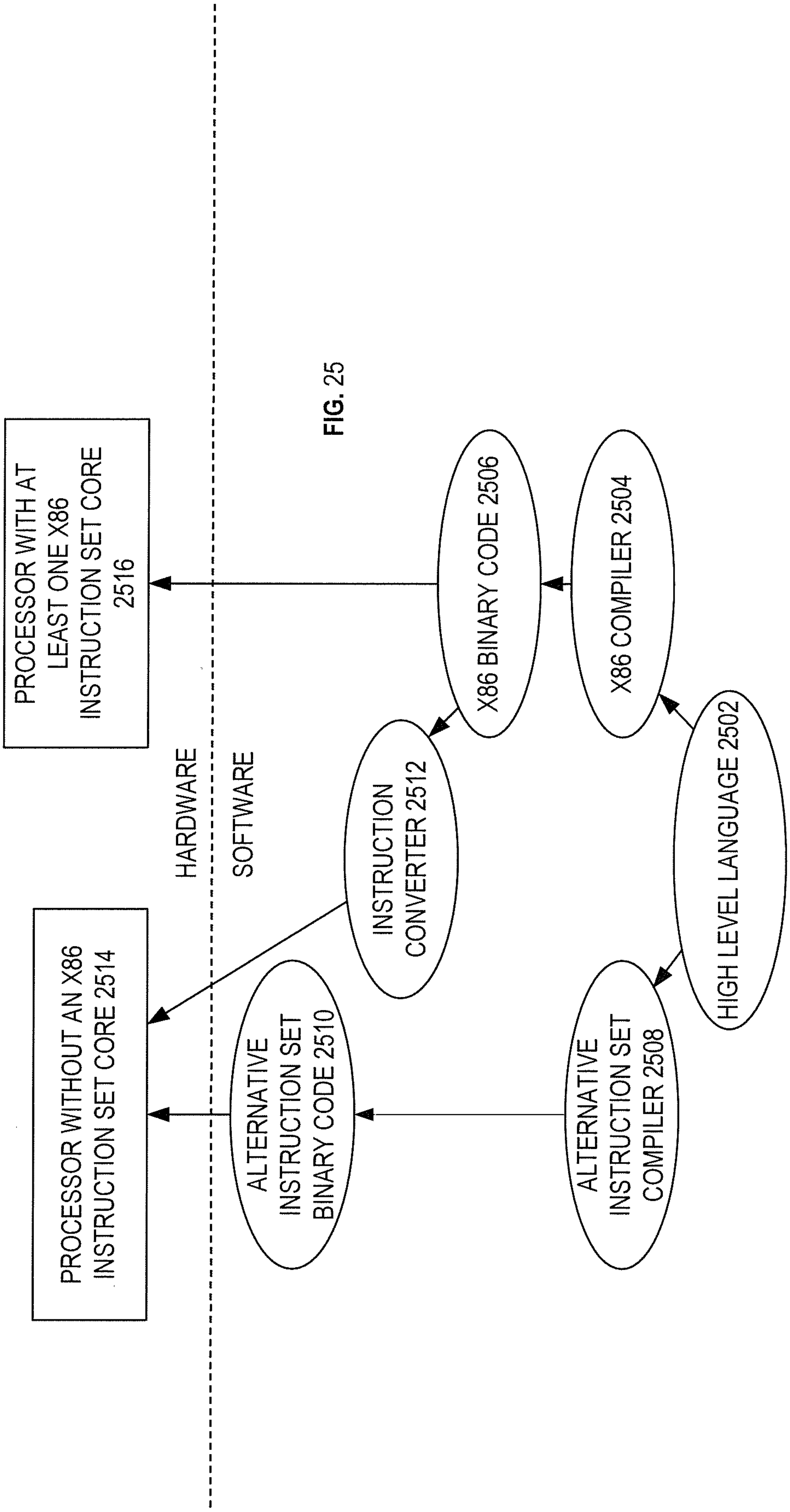
PROCESSOR WITH AT LEAST ONE X86 INSTRUCTION SET CORE 2516
PROCESSOR WITHOUT AN X86 INSTRUCTION SET CORE 2514
HARDWARE
SOFTWARE
X86 BINARY CODE 2506
X86 COMPILER 2504
INSTRUCTION CONVERTER 2512
HIGH LEVEL LANGUAGE 2502
ALTERNATIVE INSTRUCTION SET BINARY CODE 2510
ALTERNATIVE INSTRUCTION SET COMPILER 2508

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090077345 A
- US 6675286 B


### Non-patent literature cited in the description


- Intel® 64 and IA-32 Architectures Software Developers Manual. October 2011
- *Intel® Advanced Vector Extensions Programming Reference,* June 2011